# EUROPÄISCHE PATENTANMELDUNG

(11) **EP 4 428 726 A1**
(43) Veröffentlichungstag der Anmeldung: **11.09.2024**
(21) Anmeldenummer: 24160857.9
(22) Anmeldetag: 01.03.2024
(51) Int. Cl.: G06F 21/33, H04L 9/32, H04L 9/40

(54) **VERFAHREN ZUM PSEUDONYMISIERTEN ERZEUGEN EINES PROVISIONIERUNGSTOKENS FÜR EIN DIGITALES DOKUMENT**

(30) Priorität: 09.03.2023 DE 102023105903
(71) Anmelder: Bundesdruckerei GmbH, 10969 Berlin (DE)
(72) Erfinder: DIETRICH, Frank, 12437 Berlin (DE)
(74) Vertreter: Richardt Patentanwälte PartG mbB

(57) **Zusammenfassung**

Die Erfindung betrifft ein Verfahren zum pseudonymisierten Erzeugen eines digitalen Provisionierungstokens (170) durch einen Ausstellerdienst. Der Provisionierungstoken (170) weist eine Berechtigung zum Empfang des auszustellenden digitalen Dokuments (172) mit einem Endgerät (150) und zur kryptographischen Kopplung an das Endgerät (150) im Zuge der Ausstellung nach. Das Verfahren umfasst durch einen Server (100) des Ausstellerdienstes ein Empfangen einer Erstellungsanfrage zum Erstellen des Provisionierungstokens (170), ein Identifizieren des Anfragenstellers unter Verwendung empfangener Identifikationsdaten (186) des Anfragenstellers, ein Erstellen des angefragten Provisionierungstokens (170) in Form eines signierten Datensatzes (602) und ein Senden des Provisionierungstokens (170) an den identifizierten Anfragensteller.

## Beschreibung

### GEBIET DER TECHNIK

Die Erfindung betrifft ein Verfahren zum pseudonymisierten Erzeugen eines Provisionierungstokens für ein digitales Dokument sowie einen Server und ein System zum Ausführen des Verfahrens. Ferner betrifft die Erfindung einen entsprechenden Provisionierungstoken.

### STAND DER TECHNIK

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet.

Es stellt jedoch eine technische Herausforderung dar, für entsprechende Endgeräte digitale Dokumente in kryptographisch sicherer Weise bereitzustellen.

### ZUSAMMENFASSUNG

Der Erfindung liegt die Aufgabe zugrunde, ein Verfahren zum kryptographisch sicheren Bereitstellen eines Provisionierungstokens für ein digitales Dokument zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum pseudonymisierten Erzeugen eines digitalen Provisionierungstokens durch einen Ausstellerdienst. Der Provisionierungstoken weist eine Berechtigung zum Empfang des auszustellenden digitalen Dokuments mit einem Endgerät und zur kryptographischen Kopplung an das Endgerät im Zuge der Ausstellung nach.

Das Verfahren umfasst durch einen ersten Server des Ausstellerdienstes:
∘ Empfangen einer Erstellungsanfrage zum Erstellen des Provisionierungstokens,
∘ Identifizieren des Anfragenstellers unter Verwendung empfangener Identifikationsdaten des Anfragenstellers,
∘ Erstellen des angefragten Provisionierungstokens in Form eines signierten Datensatzes, wobei das Erstellen umfasst:
   - Empfangen eines dem auszustellenden Dokument zugeordneten ersten Datenelements, welches das auszustellende Dokument identifiziert,
   - Prüfen des ersten Datenelements unter Verwendung eines in einer zweiten Datenbank gespeicherten zweiten Datenbankeintrags, welcher von dem auszustellenden Dokument zu umfassende Daten umfasst,
   - Erzeugen eines ersten Salt-Werts,
   - Bereitstellen eines Pseudonyms, welches als Datenbankzugriffschlüssel zum Identifizieren eines in der ersten Datenbank gespeicherten ersten Datenbankeintrags dient, wobei der erste Salt-Wert dem Pseudonym zugeordnet wird, wobei das Zuordnen ein Speichern des ersten Salt-Werts in dem ersten Datenbankeintrag in der ersten Datenbank umfasst,
   - Berechnen eines ersten Hashwerts unter Verwendung einer ersten Kombination des Pseudonyms und des ersten Salt-Werts,
   - Erstellen eines Datensatzes, welcher den ersten Hashwert umfasst,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierten Anfragensteller.

Beispiele können den Vorteil haben, dass in kryptographisch gesicherter Weise ein Provisionierungstoken bereitgestellt wird. Der Provisionierungstoken weist eine Berechtigung zum Empfang des auszustellenden digitalen Dokuments mit einem Endgerät und zur kryptographischen Kopplung an das Endgerät im Zuge der Ausstellung nach. Diese Berechtigung wird durch die Signatur des Datensatzes mit dem Ausstellerdienst zugeordneten kryptographischen Signaturschlüssel bestätigt. Bei dem kryptographischen Signaturschlüssel handelt es sich beispielsweise um einen privaten kryptographischen Schlüssel eines dem Ausstellerdienst zugeordneten asymmetrischen kryptographischen Schlüsselpaars.

Zunächst wird der Anfragensteller identifiziert. Beispielsweise sind die Datenelemente des zweiten Datenbankeintrags bzw. der zweite Datenbankeintrag einer bestimmten Person oder Entität zugeordnet. Durch das Identifizieren des Anfragenstellers kann sichergestellt werden, dass sich bei dem Anfragensteller um die entsprechende berechtigte Person oder Entität handelt. Beispielsweise umfasst der zweite Datenbankeintrag Referenzdaten oder dem zweiten Datenbankeintrag sind Referenzdaten zugeordnet, anhand derer geprüft werden kann, ob es sich bei der identifizierten Person bzw. Entität tatsächlich um die berechtigte Person bzw. Entität zum Verfügen über die Datenelemente des zweiten Datenbankeintrages bzw. des zweiten Datenbankeintrages handelt.

Ferner wird geprüft, ob es sich bei dem empfangenen Datenelement tatsächlich um ein in dem zweiten Datenbankeintrag gespeichertes Datenelement und damit um ein korrektes Datenelement handelt. Beispielsweise werden zusätzlich zu dem ersten Datenelement noch ein oder mehrere weitere Datenelemente empfangen, welche unter Verwendung des zweiten Datenbankeintrags geprüft werden.

Das erste Datenelement wird zum Identifizieren des in der zweiten Datenbank gespeicherten zweiten Datenbankeintrags mit den von dem auszustellenden Dokument zu umfassenden Daten verwendet. Beispielsweise dient das erste Datenelement als Datenbankzugriffschlüssel, etwa als initialer Datenbankzugriffschlüssel, zum Identifizieren des in der zweiten Datenbank gespeicherten zweiten Datenbankeintrags. Zum Zwecke einer Pseudonymisierung wird ein Pseudonym bereitgestellt. Dieses Pseudonym dient beispielsweise als Datenbankzugriffschlüssel zum Identifizieren eines in der ersten Datenbank gespeicherten ersten Datenbankeintrags, wodurch der Zugriff auf den ersten Datenbankeintrag und/oder der erste Datenbankeintrag selbst pseudonymisiert werden. Zu diesem Zweck wird das Pseudonym dem ersten Datenbankeintrag, beispielsweise im Zuge der Erstellung des ersten Datenbankeintrags, hinzugefügt. Zusätzlich dient das Pseudonym, beispielsweise nach einem Hinterlegen in dem in der zweiten Datenbank gespeicherten zweiten Datenbankeintrag, als ein pseudonymisierter Datenbankzugriffschlüssel zum Identifizieren des entsprechenden in der zweiten Datenbank gespeicherten zweiten Datenbankeintrag. Somit kann das Pseudonym für ein Identifizieren des zweiten Datenbankeintrags verwendet werden, ohne dass hierfür eine über das Pseudonym hinausgehende Kenntnis des Inhalts des zweiten Datenbankeintrags notwendig ist. Zudem wir dadurch der erste Datenbankeintrag in der ersten Datenbank mit dem zweiten Datenbankeintrag in der zweiten Datenbank verknüpft werden, ohne dass dafür in dem ersten Datenbankeintrag über das Pseudonym hinausgehende Daten aus dem zweiten Datenbankeintrag gespeichert werden. Aus einer Kenntnis des ersten Datenbankeintrags ergibt sich mithin keine über das Pseudonym hinausgehende Kenntnis des Inhalts des zweiten Datenbankeintrags.

Dies kann mithin den Vorteil haben, dass die erste Datenbank unabhängig von der zweiten Datenbank implementiert werden und der erste Datenbankeintrag mit dem zweiten Datenbankeintrag verknüpft werden kann, ohne dass dadurch die Sicherheit der in dem zweiten Datenbankeintrag gespeicherten daten reduziert wird. Selbst wenn Sicherungsmaßnahmen zur Sicherung der ersten Datenbank geringer ausfallen als Sicherungsmaßnahmen zur Sicherung der zweiten Datenbank, wird dadurch das Sicherheitsniveau für die in dem zweiten Datenbankeintrag gesicherten und von dem auszustellenden Dokument zu umfassenden Daten nicht reduziert. Dies gilt selbst für den Fall, dass die erste Datenbank und/oder der erste Datenbankeintrag in der ersten Datenbank kompromittiert werden.

Die Pseudonymisierung dient somit der Sicherung der in dem zweiten Datenbankeintrag gesicherten Daten für das auszustellende Dokument. Im Zuge der Pseudonymisierung wird das erste Datenelement durch das Pseudonym ersetzt. Unter Verwendung des Pseudonyms ist es möglich den ersten Datenbankeintrag in der ersten Datenbank und/oder den zweiten Datenbankeintrag in der zweiten Datenbank zu identifizieren, ohne dass dabei weitere Informationen über den Inhalt des zweiten Datenbankeintrags, etwa das erste Datenelement verwendet und mithin potentiell kompromittiert werden können. Durch die Pseudonymisierung wird insbesondere ein Identifizieren bzw. Herleiten des ersten Datenelements anhand des Pseudonyms wesentlich erschwert und/oder ausgeschlossen. Das Pseudonym dient somit der Verschleierung der des ersten Datenelements.

Im Gegensatz zu einer Anonymisierung bleiben bei einer Pseudonymisierung, wie der vorliegenden, Bezüge verschiedener Datensätze, die auf dieselbe Art pseudonymisiert wurden, erhalten. Die Pseudonymisierung ermöglicht die Zuordnung von Daten des ersten Datensatzes zu von dem auszustellenden Dokument zu umfassende Daten des zweiten Datensatzes, wie etwa das erste Datenelement. Ohne den zweiten Datensatz, welcher eine Zuordnung von Pseudonym zu den von dem auszustellenden Dokument zu umfassenden Daten bereitstellt, und den ersten Datensatz, welcher eine Zuordnung von Daten zu dem Pseudonym umfasst, wäre diese Zuordnung zwischen den beiden Datensätzen, deren verknüpfendes Element das Pseudonym ist, nicht möglich.

Somit kann anhand des in dem Provisionierungstoken gespeicherten ersten Hashwerts, welcher von dem Pseudonym abhängt, das auszustellende Dokument bzw. der zum Ausstellen des entsprechenden Dokuments zu verwendende Datenbankeintrag der zweiten Datenbank, nämlich der zweite Datenbankeintrag, identifiziert werden. Zudem kann der erste Datensatz in der ersten Datenbank identifiziert werden, welcher die Zuordnung des Pseudonyms zu dem ersten Salt-Wert umfasst. Das Pseudonym dient dabei beispielsweise selbst als ein Datenbankzugriffsschlüssel, z.B. ein Primärschlüssel, oder zum Ableiten eines Datenbankzugriffsschlüssels, z.B. eines Primärschlüssels.

Initial wird beispielsweise anhand des ersten Datenelements der zum Prüfen zu verwendende zweite Datenbankeintrag identifiziert werden. Dabei dient das erste Datenelement beispielsweise selbst als ein Datenbankzugriffsschlüssel, z.B. ein Primärschlüssel, oder zum Ableiten eines Datenbankzugriffsschlüssels, z.B. eines Primärschlüssels. Nachdem eine Pseudonymisierung implementiert und das Pseudonym bereitgestellt wurde, kann dieses für weitere Identifizierungen des zweiten Datenbankeintrags, insbesondere in Verbindung mit dem ersten Datenbankeintrag verwendet werden.

Beispielsweise werden in dem Provisionierungstoken keine Datenelemente des Dokuments verwendet. Beispielsweise wird selbst das Pseudonym nicht in Klartext, sondern nur in gehashter und damit geschützter Form gespeichert. Somit kann sichergestellt werden, dass das Pseudonym nicht aus dem Provisionierungstoken abgeleitet werden kann. Um das Hashen zusätzlich abzusichern, wird das Pseudonym mit einem Salt-Wert kombiniert und die resultierte Kombination zum Erzeugen des in dem Provisionierungstoken gespeicherten Hashwerts, d.h. des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise das Pseudonym, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Er dient bei Vorlage des Provisionierungstokens zum Nachweis, dass es sich bei dem entsprechenden Hashwert des Provisionierungstokens und damit dem Provisionierungstoken selbst um einen gültigen Hashwert bzw. ein gültiges Provisionierungstoken handelt. Hierzu muss die gehashte Kombination aus Pseudonym, welches den ersten Datenbankeintrag in der ersten Datenbank identifiziert, und dem in dem identifizierten Datenbankeintrag hinterlegten Salt-Wert mit dem in dem vorgelegten Provisionierungstoken gespeicherten Hashwert übereinstimmen. Nach einer Verwendung des Provisionierungstokens zum Nachweis der Berechtigung zum Empfang des auszustellenden digitalen Dokuments, wird der Salt-Wert in dem ersten Datenbankeintrag beispielsweise gelöscht. Somit kann sichergestellt werden, dass der Provisionierungstoken nur einmal verwendet werden kann. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang des auszustellenden digitalen Dokuments verwendet werden.

Der Provisionierungstoken stellt somit ein kryptographisch gesichertes Verbindungsglied zwischen einer Identifizierung eines Anfragenstellers und einem Ausstellen des auszustellenden Dokuments dar. Mithin kann das Identifizieren über einen von dem Ausstellen unabhängigen Kanal erfolgen.

Das Senden des Provisionierungstoken kann auf verschiedene Weise erfolgen. Beispielsweise kann der Provisionierungstoken automatisch gesendet werden. Beispielsweise kann ein QR-Code zum Herunterladen des Provisionierungstoken bereitgestellt werden. Beispielsweise können Informationen zum Nachweisen einer Berechtigung zum Herunterladen des Provisionierungstoken an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und der zweiten Datenbank um Teile ein und derselben Datenbank. Beispielsweise handelt es sich bei der ersten Datenbank und der zweiten Datenbank um voneinander unabhängige Datenbanken. Insbesondere kann ein Zugang zu den beiden unabhängigen Datenbanken beispielsweise über voneinander unabhängige Server erfolgen.

Die erste Datenbank stellt beispielsweise Daten bereit, welche zum Prüfen der Gültigkeit von Provisionierungstoken, Dokument und/oder Dokumentenkopien dienen. Durch die Verwendung eines Pseudonyms kann sichergestellt werden, dass aus einer solchen Gültigkeitsprüfung bzw. aus einem Zugriff auf die erste Datenbank an sich keine Informationen über den Inhalt von Provisionierungstoken, Dokument und/oder Dokumentenkopien ableiten lassen. Selbst wenn ein allgemeiner Zugriff auf die erste Datenbank, etwa in Form einer öffentlichen Datenbank ermöglicht wird, können daraus keine Informationen die von dem Dokument und/oder Dokumentenkopien umfassten Daten bzw. Personen, Gegenstände und/oder Sachverhalte, auf welche sich das Dokument und/oder die Dokumentenkopien beziehen, abgeleitet werden.

In der zweiten Datenbank sind beispielsweise Datenelemente auszustellender Dokumente und/oder Dokumentenkopien gespeichert. Die zweite Datenbank stellt dabei die entsprechenden Daten beispielsweise zur Ausstellung der Dokumente und/oder Dokumentenkopien zur Verfügung bzw. die Dokumente und/oder Dokumentenkopien dienen zum Beleg der entsprechenden in der zweiten Datenbank gespeicherten Daten. Die zweite Datenbank gewährleistet somit beispielsweise eine Datenkonsistenz und dient als Vertrauensanker. Beispielsweise handelt es sich bei der zweiten Datenbank um einen Single Point of Truth (SPOT), d.h. einen für die Dokumente und/oder Dokumentenkopien allgemeingültigen Datenbestand, der den Anspruch hat, korrekt zu sein und auf den man sich verlassen kann. Ein solches Datenmodell, in dem ein allgemeingültiger Datenbestand in Form von Dokumenten und/oder Dokumentenkopien verfügbar gemacht werden wird, mit der notwendigen Datenqualität und Verlässlichkeit, ist vor allem dann wichtig, wenn Daten durch die entsprechenden Dokumente und/oder Dokumentenkopien redundant vorliegen.

Die zweite Datenbank dient somit der langfristigen Speicherung der zugrundeliegenden Daten, bei welchen es sich beispielsweis um sicherheitsrelevante und/oder personenbezogene Daten handelt, die vor unberechtigten Zugriffen zu schützen sind. Somit sind der zweiten Datenbank beispielsweise vergleichsweise hohe Sicherheitsanforderungen zugrunde zu legen, welche für die pseudonymisierte erste Datenbank niedriger ausfallen können. Beispielsweise können für die erste Datenbank Schreibrechte beschränkt und auf ausgewählte berechtigte Entitäten limitiert sein, während Leserechte beispielsweise allgemein vergeben sein können, d.h. die Datenbank beispielsweise öffentlich einsehbar sein kann. Demgegenüber sind in der zweiten Datenbank beispielsweise Lese- und Schreibrechte auf ausgewählte berechtigte Entitäten limitiert.

Unter einem Dokument wird hier insbesondere eine Urkunde verstanden, wie etwa eine Geburtsurkunde, eine Heiratsurkunde, ein Staatsbürgerschaftsnachweis, ein Ausweisdokument, insbesondere Reisepass, Personalausweis, Visum sowie Führerschein, Fahrzeugschein, oder Fahrzeugbrief.

Unter einer Kopie eines Dokuments wird eine inhaltlich übereinstimmende Version des Dokuments verstanden, welche mittels eines Indikators explizit als Kopie gekennzeichnet ist.

Beispielsweise wird das Pseudonym verwendet zum Bereitstellen eines Datenbankzugriffsschlüssels zum Identifizieren eines in der ersten Datenbank gespeicherten ersten Datenbankeintrags mit der ersten Zuordnung des erzeugten ersten Salt-Werts zu dem Pseudonym.

Beispiele können den Vorteil haben, dass unter Verwendung des Pseudonyms, auf den ersten Datenbankeintrag in der ersten Datenbank zugegriffen werden kann, welcher Daten bereitstellt, die zum Prüfen der Gültigkeit des Provisionierungstokens dienen.

Beispielsweise umfasst das Bereitstellen des Pseudonyms ein Erzeugen des Pseudonyms. Beispielsweise wird das Pseudonym im Zuge des Prüfens des ersten Datenelements erzeugt und zum Speichern als Datenbankzugriffschlüssel zum Identifizieren des in der zweiten Datenbank gespeicherten zweiten Datenbankeintrags an die zweite Datenbank gesendet wird. Nachdem das Pseudonym von der zweiten Datenbank entsprechend gespeichert wurde, kann es als Datenbankzugriffschlüssel zum Identifizieren des zweiten Datenbankeintrags verwendet werden. Beispielsweise erfolgt eine Speicherung auf eine erfolgreiche Prüfung des ersten Datenelements hin. Zudem kann das Pseudonym im Zuge der Bereitstellung in dem ersten Datenbankeintrag in der ersten Datenbank gespeichert werden. Beispielsweise erfolgt eine Speicherung auf eine erfolgreiche Prüfung des ersten Datenelements hin. Mit der Speicherung des Pseudonyms in dem ersten Datenbankeintrag wird beispielsweise eine Verwendung des Pseudonyms als Datenbankzugriffschlüssel zum Identifizieren des in der ersten Datenbank gespeicherten ersten Datenbankeintrags ermöglicht. Beispielsweise wird der erste Datenbankeintrag im Zuge des Bereitstellens des Pseudonyms erstellt. Beispielsweise erfolgt im Zuge des Bereitstellens des Pseudonyms, das Zuordnen zu dem erzeugten ersten Salt-Wert, welches beispielsweise das Speichern des ersten Salt-Werts zusätzlich zu dem Pseudonym in dem ersten Datenbankeintrag in der ersten Datenbank umfasst.

Beispielsweise umfasst das Bereitstellen des Pseudonyms ein Empfangen des Pseudonyms im Zuge des Prüfens des ersten Datenelements, welches als Datenbankzugriffschlüssel zum Identifizieren des in der zweiten Datenbank gespeicherten zweiten Datenbankeintrags dient. Beispielsweise erzeugt die zweite Datenbank auf eine Prüfanfrage zum Prüfen des ersten Datenelements zum Zwecke eines Erstellens eines Provisionierungstokens hin das Pseudonym. Dieses Pseudonym wird beispielsweise in dem zweiten Datenbankeintrag der zweiten Datenbank gespeichert und zusammen mit einer Antwort auf die Prüfanfrage zurückgesendet. Beispielsweise erfolgt eine Speicherung und/oder ein Senden auf eine erfolgreiche Prüfung des ersten Datenelements hin. Nachdem das Pseudonym von der zweiten Datenbank gespeichert wurde, kann es als Datenbankzugriffschlüssel zum Identifizieren des zweiten Datenbankeintrags verwendet werden. Zudem kann das Pseudonym nach dem Empfang in dem ersten Datenbankeintrag in der ersten Datenbank gespeichert werden. Beispielsweise erfolgt eine Speicherung auf eine erfolgreiche Prüfung des ersten Datenelements hin. Mit der Speicherung des Pseudonyms in dem ersten Datenbankeintrag wird beispielsweise eine Verwendung des Pseudonyms als Datenbankzugriffschlüssel zum Identifizieren des in der ersten Datenbank gespeicherten ersten Datenbankeintrags ermöglicht. Beispielsweise wird der erste Datenbankeintrag im Zuge des Bereitstellens des Pseudonyms erstellt. Beispielsweise erfolgt im Zuge des Bereitstellens des Pseudonyms, das Zuordnen zu dem erzeugten ersten Salt-Wert, welches beispielsweise das Speichern des ersten Salt-Werts zusätzlich zu dem Pseudonym in dem ersten Datenbankeintrag in der ersten Datenbank umfasst.

Beispielsweise wird das erste Datenelement von dem Anfragensteller empfangen und das Prüfen umfasst ein Prüfen, ob der zweite Datenbankeintrag das erste Datenelement umfasst. Beispielsweise wird das erste Datenelement verwendet zum Bereitstellen eines initialen Datenbankzugriffsschlüssels zum Identifizieren eines in der zweiten Datenbank gespeicherten zweiten Datenbankeintrags mit von dem auszustellenden Dokument zu umfassenden Daten. Beispielsweise wird eine Anfrage an die zweite Datenbank gesendet, ob das erste Datenelement, gegebenenfalls mit weiteren empfangenen Daten, wie etwa Identifikationsdaten des Anfragenstellers, in dem zweiten Datenbankeintrag gespeichert ist. Beispielsweise sendet die zweite Datenbank in Antwort auf eine solche Prüfanfrage eine Antwort, welche angibt, ob das erste Datenelement in dem zweiten Datenbankeintrag gespeichert ist bzw. es einen zweiten Datenbankeintrag gibt, welcher das erste Datenelement umfasst. Alternativerweise kann die zweite Datenbank in Antwort auf eine solche Prüfanfrage den unter Verwendung des ersten Datenelements identifizierten zweiten Datensatz oder einen Auszug desselben zur weiteren Prüfung senden. Anhand des so empfangene zweiten Datensatzes oder des Auszugs desselben kann dann geprüft werden, ob das erste Datenelement, gegebenenfalls mit weiteren empfangenen Daten, wie etwa Identifikationsdaten des Anfragenstellers, von dem zweiten Datenbankeintrag umfasst ist.

Beispiele können den Vorteil haben, dass somit sichergestellt werden kann, dass das von dem Anfragensteller empfangene erste Datenelement korrekt ist bzw. ein Datenbankeintrag mit Datenelementen für das auszustellende Dokument in der zweiten Datenbank gespeichert ist.

Beispielsweise wird das erste Datenelement als Teil des im Zuge des Prüfens aus der zweiten Datenbank ausgelesenen zweiten Datenbankeintrags der zweiten Datenbank empfangen und das Prüfen umfasst ein Prüfen, ob das erste Datenelement aus dem zweiten Datenbankeintrag stammt. Zum Identifizieren des auszulesenden zweiten Datenbankeintrags können in diesem Fall beispielsweise Identifikationsdaten des Anfragenstellers dienen, welche im Zuge des Identifizierens des Anfragenstellers empfangen werden.

Beispiele können den Vorteil haben, dass das erste Datenelement aus dem zweiten Datenbankeintrags der zweiten Datenbank ausgelesen wird. Damit kann sichergestellt werden, dass es sich bei dem empfangenen ersten Datenelement um ein korrektes Datenelement handelt bzw. ein Datenbankeintrag mit Datenelementen für das auszustellende Dokument in der zweiten Datenbank gespeichert ist.

Beispielsweise wird ein Zugriff auf die zweite Datenbank über einen zweiten Server bereitgestellt. Ein Abfragen des zweiten Datenbankeintrags umfasst ein Senden einer Prüfanfrage bzw. Abfrage an den zweiten Server und den Empfang des zweiten Datenbankeintrags in Antwort auf die Prüfanfrage bzw. Abfrage.

Beispiele können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Beispielsweise erfolgt das Abfragen des zweiten Datenbankeintrags initial unter Verwendung des dem auszustellenden Dokument zugeordneten ersten Datenelements, welches das auszustellende Dokument identifiziert. Beispielsweise umfasst die Abfrage des zweiten Datenbankeintrags das dem auszustellenden Dokument zugeordnete erste Datenelement, welches das auszustellende Dokument identifiziert. Das erste Datenelement dient beispielsweise zum Bereitstellen eines initialen Datenbankzugriffsschlüssels, beispielsweise als Primärschlüssel, zum Zugreifen auf den zweiten Datenbankeintrag.

Beispielsweise erfolgt das Abfragen des zweiten Datenbankeintrags initial unter Verwendung von Identifikationsdaten des identifizierten Anfragenstellers. Beispielsweise umfasst die Abfrage des zweiten Datenbankeintrags die entsprechenden Identifikationsdaten des Anfragenstellers. Beispielsweise können auch Identifikationsdaten des identifizierten Anfragenstellers dazu dienen, einen dem Anfragensteller zugeordneten zweiten Datenbankeintrag in der zweiten Datenbank zu identifizieren.

Beispielsweise handelt es sich dem Pseudonym um eine Zufallszahl oder um einen Hashwert des ersten Datenelements.

Beispielsweise umfasst der erste Datensatz ferner Pseudonym in Klartext. Beispielsweise umfasst der erste Datensatz das Pseudonym nicht in Klartext.

Beispielsweise umfasst das Erstellen des angefragten Provisionierungstokens ferner:
- Erzeugen eines dem identifizierten Anfragensteller zugeordneten Einmalkennworts für den Provisionierungstoken,
- Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung des Pseudonyms in der ersten Datenbank umfasst,
- Berechnen eines zweiten Hashwerts unter Verwendung einer zweiten Kombination des Einmalkennworts und des zweiten Salt-Werts,
- Verwenden des zweiten Hashwerts zum Erstellen des Datensatzes, wobei der Datensatz den zweiten Hashwert umfasst,
- Senden des Einmalkennworts an den identifizierten Anfragensteller.

Beispiele können den Vorteil haben, dass zusätzlich ein Einmalpasswort für den Anfragensteller bereitgestellt und kryptographisch an den Provisionierungstoken gebunden werden kann. Somit ist zusätzlich zu dem Besitz des Provisionierungstoken das entsprechende Einmalkennwort, etwa eine TAN, zum erfolgreichen Nachweis der Berechtigung zum Empfang eines auszustellenden digitalen Dokuments mit einem Endgerät und zur kryptographischen Kopplung an das Endgerät im Zuge der Ausstellung notwendig.

Beispielsweise erfolgt das Senden des Einmalkennworts an den identifizierten Anfragensteller über einen Kanal, welcher unabhängig von demjenigen Kanal ist, über welchen das ausgestellte Provisionierungstoken an den identifizierten Anfragensteller gesendet wird. Beispielsweise wird das Einmalpasswort per Brief oder per SMS an den Anfragensteller gesendet.

Beispielsweise wird werden zu dem ersten Datenelement ein oder mehrere zweite dem auszustellenden Dokument zugeordnetes Datenelemente empfangen.

Beispielsweise erfolgt das initiale Prüfen und/oder Abfragen des zweiten Datenbankeintrags unter Verwendung eines der zweiten dem auszustellenden Dokument zugeordneten Datenelemente, welches beispielsweise den zweiten Datenbankeintrag identifiziert. Beispielsweise umfasst die Abfrage des zweiten Datenbankeintrags das dem auszustellenden Dokument zugeordnete zweite Datenelement. Das zweite Datenelement dient beispielsweise in Kombination mit dem ersten Datenelement zum Bereitstellen eines Datenbankzugriffsschlüssels, beispielsweise als Primärschlüssel, zum initialen Zugreifen auf den zweiten Datenbankeintrag.

Beispielsweise handelt es sich dem Pseudonym um einen Hashwert einer Kombination des ersten Datenelements mit den ein oder mehreren zweiten dem auszustellenden Dokument zugeordneten Datenelementen.

Beispielsweise werden die ein oder mehreren zweiten Datenelemente von dem Anfragensteller empfangen. Ferner erfolgt beispielsweise ein Prüfen der ein oder mehreren zweiten Datenelemente und das Prüfen umfasst beispielsweise ein Prüfen, ob der zweite Datenbankeintrag die ein oder mehreren Datenelemente umfasst.

Beispiele können den Vorteil haben, dass somit sichergestellt werden kann, dass das von dem Anfragensteller empfangene zweite Datenelemente korrekt sind bzw. ein Datenbankeintrag mit diesen Datenelementen für das auszustellende Dokument in der zweiten Datenbank gespeichert ist.

Beispielsweise werden die ein oder mehreren zweiten Datenelemente als Teil des zweiten Datenbankeintrags der zweiten Datenbank empfangen und das Prüfen umfasst ein Prüfen, ob die ein oder mehreren zweiten Datenelemente aus dem zweiten Datenbankeintrag stammt.

Beispiele können den Vorteil haben, dass die zweiten Datenelemente aus dem zweiten Datenbankeintrags der zweiten Datenbank ausgelesen werden. Damit kann sichergestellt werden, dass es sich bei den empfangenen zweiten Datenelementen um korrekte Datenelemente handelt bzw. ein Datenbankeintrag mit diesen Datenelementen für das auszustellende Dokument in der zweiten Datenbank gespeichert ist.

Beispielsweise umfassen die Identifikationsdaten des Anfragenstellers ein oder mehrere der folgenden Daten: einen Nutzernamen, ein Passwort, eine mit einem Signaturschlüssel des Anfragenstellers erstellte Signatur in Kombination mit einem Zertifikat mit einem Signaturprüfschlüssels des Anfragenstellers, ein oder mehrere aus einem ID-Token des Anfragenstellers ausgelesene Attribute des Anfragenstellers, welche mit einem Signaturschlüssel eines ID-Provider-Dienst signiert sind, Attribute des Anfragenstellers, welche von einem Computersystem einer zum Identifizieren des Nutzers autorisierten Entität empfangen werden.

Beispiele können den Vorteil haben, dass der Anfragensteller auf unterschiedliche Weise identifiziert werden kann. Beispielsweise kann ein dem Anfragensteller zugeordneter Account bestehen, bei welchem sich der Anfragensteller mit Nutzernamen und Passwort oder anderen Authentifizierungsfaktoren anmelden kann. In dem Account sind beispielsweise geprüfte Identifikationsdaten hinterlegt, welche den Anfragensteller identifizieren.

Beispielsweise kann ein entsprechendes Zertifikat geprüfte Identifikationsdaten umfassen, welche den Anfragensteller identifizieren. Mit einer unter Verwendung des Signaturschlüssels des Anfragenstellers erstellten Signatur kann der Anfragensteller nachweisen, dass das entsprechende Zertifikat mit zugehörigen Signaturprüfschlüssels und damit die entsprechenden Identifikationsdaten dem Anfragensteller zugeordnet sind.

Beispielsweise befindet sich der Anfragensteller im Besitz eines dem Anfragensteller zugeordneten ID-Tokens mit Identifikationsdaten in Form Attributen des Anfragenstellers. Ein oder mehrere dieser Attribute des Anfragenstellers werden beispielsweise von einem ID-Provider-Dienst, welcher eine Leseberechtigung zum Auslesen der entsprechenden Attribute besitzt, ausgelesen und mit einem Signaturschlüssel eines ID-Provider-Dienst signiert. Mit der Signatur garantiert der ID-Provider-Dienst, dass es sich bei den entsprechenden Attributen um aus dem ID-Token ausgelesene Attribute handelt.

Beispielsweise können Attribute des Anfragenstellers auch von einem Computersystem einer zum Identifizieren des Nutzers autorisierten Entität empfangen werden. Hierbei kann es sich beispielsweise um eine Identifikation des Anfragenstellers in einer Filiale vor Ort oder remote, etwa über ein Video-Ident-Verfahren, handeln.

Beispielsweise erfolgt das Signieren des Datensatzes nur unter Voraussetzung eines erfolgreichen Identifizierens des Anfragenstellers, sodass durch die Signatur ein erfolgreiches Identifizieren bestätigt wird.

Beispiele können den Vorteil haben, dass durch das signierte Provisionierungstoken somit das erfolgreiche Identifizieren des Anfragenstellers nachgewiesen werden kann.

Beispielsweise handelt es sich bei dem auszustellenden Dokument um ein Fahrzeugdokument, beispielsweise um eine elektronische Zulassungsbescheinigung Teil I.

Beispiele können den Vorteil haben, dass ein Provisionierungstoken zum Nachweis einer Berechtigung zum Empfang einer auszustellenden elektronischen Zulassungsbescheinigung Teil I mit einem Endgerät und zur kryptographischen Kopplung an das Endgerät im Zuge der Ausstellung nachgewiesen werden kann.

Die Zulassungsbescheinigung ist in Deutschland und in Österreich eine amtliche Urkunde über die Zulassung von Fahrzeugen zum Straßenverkehr. Die Zulassungsbescheinigung umfasst beispielsweise Datenelemente zum Individualisieren des Fahrzeugs, in aller Regel anhand der vom Hersteller vergebenen Fahrzeug-Identifizierungsnummer, auch als Fahrgestellnummer bezeichnet, zum Zuteilen eines Kraftfahrzeugkennzeichens an eine bestimmte Person oder Entität, und zum Nachweisen, dass das Fahrzeug technische Zulassungsvorschriften, d.h. eine Bauartzulassung, erfüllt. Die in der Zulassungsbescheinigung eingetragene Person oder Entität ist der Halter des Fahrzeugs, welcher mit dem Eigentümer oder Besitzer identisch sein kann, aber nicht muss.

Im Detail umfasst eine elektronische Zulassungsbescheinigung Teil I beispielsweise die folgenden Datenelement: (B) Datum der Erstzulassung des Fahrzeugs; (2.1) Code zu 2; (2.2) Code zu D.2 mit Prüfziffer; (J) Fahrzeugklasse; (4) Art des Aufbaus; (E) Fahrzeug-Identifizierungsnummer; (3) Prüfziffer der Fahrzeug-Identifizierungsnummer, (D.1) Marke, (D.2) Typ/Variante/Version; (D.3) Handelsbezeichnung(en); (2) Hersteller-Kurzbezeichnung; (5) Bezeichnung der Fahrzeugklasse und des Aufbaus; (V.9) für die EG-Typgenehmigung maßgebliche Schadstoffklasse; (14) Bezeichnung der nationalen Emissionsklasse; (P.3) Kraftstoffart oder Energiequelle; (10) Code zu P.3; (14.1) Code zu V.9 oder 14; (P.1) Hubraum in cm³; (22) Bemerkungen und Ausnahmen; (L) Anzahl der Achsen; (9) Anzahl der Antriebsachsen; (P.2/P.4) Nennleistung in kW/ Nenndrehzahl bei min-1; (T) Höchstgeschwindigkeit in km/h; (18) Länge in mm; (19) Breite in mm ohne Spiegel und Anbauteile; (20) Höhe in mm; (G) Masse des in Betrieb befindlichen Fahrzeugs in kg Leermasse; (12) Rauminhalt des Tanks bei Tankfahrzeugen in m³; (13) Stützlast in kg; (Q) Leistungsgewicht in kW/kg (nur bei Krafträdern); (V.7) CO2 (in g/km) kombinierter Wert; (F.1) technisch zulässige Gesamtmasse in kg; (F.2) im Zulassungsmitgliedstaat zulässige Gesamtmasse in kg; (7.1) Max. Achslast Achse 1 in kg; (7.2) Max. Achslast Achse 2 in kg; (7.3) max. Achslast Achse 3 in kg; (8.1) max. Achslast Achse 1 in kg; (8.2) max. Achslast Achse 2 in kg; (8.3) max. Achslast Achse 3 in kg; (U.1) Standgeräusch in dB(A); (U.2) Drehzahl in min-1 zu U.1; (U.3) Fahrgeräusch in dB(A); (O.1) technisch zulässige Anhängelast gebremst in kg; (O.2) technisch zulässige Anhängelast ungebremst in kg; (S.1) Sitzplätze einschließlich Fahrersitz; (S.2) Stehplätze; (15.1) Bereifung auf Achse 1; (15.2) Bereifung auf Achse 2; (15.3) Bereifung auf Achse 3; (R) Farbe des Fahrzeugs; (11) Code zu R; (K) Nummer der EG-Typgenehmigung oder ABE; (6) Datum zu K; (17) Merkmal zur Betriebserlaubnis; (16) Nummer der Zulassungsbescheinigung Teil II; (21) Sonstige Vermerke; (H) Gültigkeitsdauer; (I) Datum dieser Zulassung; (7) technisch zulässige maximale Achslast/ Masse je Achsgruppe in kg; (7.1) Achse 1 bis (7.3) Achse 3, (8) zulässige maximale Achslast im Zulassungsmitgliedstaat in kg, (8.1) Achse 1 bis (8.3) Achse 3; und/oder (15) Bereifung.

Beispielsweise handelt es sich bei dem ersten Datenelement um eine Fahrzeug-ID, beispielsweise ein Fahrzeugkennzeichen oder eine Fahrgestellnummer.

Beispiele können den Vorteil haben, dass eine Fahrzeug-ID, etwa in Form des Fahrzeugkennzeichens und/oder einer Fahrgestellnummer.

Beispielsweise handelt es sich bei den ein oder mehreren zweiten Datenelement jeweils um ein dem Fahrzeug zugeordnetes Datenelement, beispielsweise ein Fahrzeugkennzeichen oder eine Fahrgestellnummer.

Beispiele können den Vorteil haben, dass eine Fahrzeug-ID, etwa in Form des Fahrzeugkennzeichens und/oder einer Fahrgestellnummer.

Ausführungsformen umfassen ferner einen Server eines Ausstellerdienstes zum pseudonymisierten Erzeugen eines digitalen Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang des auszustellenden digitalen Dokuments mit einem Endgerät und zur kryptographischen Kopplung an das Endgerät im Zuge der Ausstellung nach.

Ein Ausführen der Programminstruktionen durch den Prozessor veranlasst den Prozessor dazu, den Server zu steuern zum:
∘ Empfangen einer Erstellungsanfrage zum Erstellen des Provisionierungstokens,
∘ Identifizieren des Anfragenstellers unter Verwendung empfangener Identifikationsdaten des Anfragenstellers,
∘ Erstellen des angefragten Provisionierungstokens in Form eines signierten Datensatzes, wobei das Erstellen umfasst:
   - Empfangen eines dem auszustellenden Dokument zugeordneten ersten Datenelements, welches einen in einer zweiten Datenbank gespeicherten zweiten Datenbankeintrag identifiziert, welcher von dem auszustellenden Dokument zu umfassende Daten umfasst,
   - Prüfen des ersten Datenelements unter Verwendung des in der zweiten Datenbank gespeicherten zweiten Datenbankeintrags,
   - Erzeugen eines ersten Salt-Werts,
   - Bereitstellen eines Pseudonyms, welches als Datenbankzugriffschlüssel zum Identifizieren eines in der ersten Datenbank gespeicherten ersten Datenbankeintrags dient, wobei der erste Salt-Wert dem Pseudonym zugeordnet wird, wobei das Zuordnen ein Speichern des ersten Salt-Werts in dem ersten Datenbankeintrag in der ersten Datenbank umfasst,
   - Berechnen eines ersten Hashwerts unter Verwendung einer ersten Kombination des Pseudonyms und des ersten Salt-Werts,
   - Erstellen eines Datensatzes, welcher den ersten Hashwert umfasst,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierten Anfragensteller.

Beispielsweise ist der Server dazu konfiguriert jede der zuvor beschrieben Ausführungsformen des Verfahrens zum Erzeugen des digitalen Provisionierungstokens auszuführen.

Ausführungsformen umfassen ferner ein System umfassend einen Server eines Ausstellerdienstes nach einer der zuvor beschriebenen Ausführungsformen sowie einen weiteren Server, welcher einen Zugriff auf die zweite Datenbank bereitgestellt. Der zweite Server umfasst einen weiteren Prozessor, einen weiteren Speicher mit weiteren Programminstruktionen und eine weitere Kommunikationsschnittstelle zur Kommunikation über das Netzwerk.

In der zweiten Datenbank ist der zweite Datenbankeintrag gespeichert, welcher von dem auszustellenden Dokument zu umfassende Daten umfasst. Das Pseudonym dient ferner als Datenbankzugriffschlüssel zum Identifizieren des in der zweiten Datenbank gespeicherten zweiten Datenbankeintrags.

Ein Ausführen der weiteren Programminstruktionen durch den weiteren Prozessor veranlasst den weiteren Prozessor dazu, den weiteren Server zum Senden des zweiten Datenbankeintrags an den Server zu senden in Antwort auf ein Empfangen einer Abfrage des zweiten Datenbankeintrags durch den Server.

Beispielsweise ist das System dazu konfiguriert jede der zuvor beschrieben Ausführungsformen des Verfahrens zum Erzeugen des digitalen Provisionierungstokens auszuführen.

Beispielsweise veranlasst ein Ausführen der weiteren Programminstruktionen durch den weiteren Prozessor den weiteren Prozessor ferner dazu, den weiteren Server zu steuern zum Speichern des Pseudonyms in dem zweiten Datenbankeintrag als Datenbankzugriffschlüssel zum Identifizieren des in der zweiten Datenbank gespeicherten zweiten Datenbankeintrags in Antwort auf ein Empfangen einer Prüfanfrage zum Prüfen des ersten Datenelements mit dem von dem Server erzeugten Pseudonym.

Beispielsweise veranlasst ein Ausführen der weiteren Programminstruktionen durch den weiteren Prozessor den weiteren Prozessor ferner dazu, den weiteren Server zu steuern zum Erzeugen des Pseudonyms als Datenbankzugriffschlüssel zum Identifizieren des in der zweiten Datenbank gespeicherten zweiten Datenbankeintrags auf ein Empfangen einer Prüfanfrage zum Prüfen des ersten Datenelements von dem ersten Server hin. Der weitere Server speichert das Pseudonym in dem zweiten Datenbankeintrag und sendet das Pseudonym an den ersten Server als Bestandteil einer Antwort auf die Prüfanfrage.

Ausführungsformen umfassen ferner einen digitalen Provisionierungstoken zum Nachweis einer Berechtigung zum Empfang eines auszustellenden digitalen Dokuments mit einem Endgerät und zur kryptographischen Kopplung an das Endgerät im Zuge der Ausstellung. Der Provisionierungstoken umfasst einen Datensatz mit einem ersten Hashwert, welcher unter Verwendung einer ersten Kombination eines Pseudonyms und eines dem ersten Pseudonym zugeordneten ersten Salt-Werts erzeugt ist. Der Datensatz ist mit einem Signaturschlüssel eines den Provisionierungstoken erzeugenden Ausstellerdienstes signiert.

Beispielsweise handelt es sich bei dem digitalen Provisionierungstoken um ein Erzeugnis eines der zuvor beschriebenen Ausführungsformen des Verfahrens zum Erzeugen des digitalen Provisionierungstokens.

Beispielsweise umfasst der erste Datensatz ferner Pseudonym in Klartext. Beispielsweise umfasst der erste Datensatz das Pseudonym nicht in Klartext.

Beispielsweise umfasst der signierte Datensatz ferner einen zweiten Hashwert, welcher unter Verwendung einer zweiten Kombination eines dem identifizierten Anfragensteller zugeordneten Einmalkennworts und eines dem Einmalkennwort zugeordneten zweiten Salt-Werts erzeugt ist.

Ausführungsformen umfassen ein Verfahren zum Ausstellen eines digitalen Dokuments unter Verwendung eines pseudonymisierten digitalen Provisionierungstokens. Der Provisionierungstoken weist eine Berechtigung zum Empfang des auszustellenden digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert, welcher unter Verwendung einer ersten Kombination eines Pseudonyms und eines dem Pseudonym zugeordneten ersten Salt-Werts erzeugt ist. Der erste Datensatz ist mit einem ersten Signaturschlüssel eines den Provisionierungstoken erzeugenden Ausstellerdienstes signiert.

In einer ersten Datenbank ist ein erster Datenbankeintrag mit einer ersten Zuordnung des ersten Salt-Werts zu dem Pseudonym gespeichert. Das Pseudonym dient als Datenbankzugriffschlüssel zum Identifizieren des in der ersten Datenbank gespeicherten ersten Datenbankeintrags.

In einer zweiten Datenbank ist ein zweiter Datenbankeintrag mit Datenelementen des auszustellenden Dokuments gespeichert. Das Pseudonym dient ferner als Datenbankzugriffschlüssel zum Identifizieren des in der zweiten Datenbank gespeicherten zweiten Datenbankeintrags. Beispielsweise umfasst der zweite Datenbankeintrag das Pseudonym.

Das Verfahren umfasst durch einen ersten Server des Ausstellerdienstes:
∘ Empfangen einer Ausstellungsanfrage zum Ausstellen des auszustellenden Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen Pseudonyms,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen des Dokuments, wobei das Ausstellen des Dokuments umfasst:
   - Auslesen des zweiten Datenbankeintrags aus der zweiten Datenbank unter Verwendung des empfangenen Pseudonyms,
   - Erstellen eines zweiten Datensatzes, welcher ein oder mehrere der Datenelemente des zweiten Datenbankeintrags, welche dem auszustellenden Dokument zugeordnet sind, in Klartext umfasst,
   - Senden einer Schlüsselabfrage an das Endgerät,
   - Empfangen eines dem Endgerät zugeordneten öffentlichen kryptographischen Schlüssels,
   - Hinzufügen des empfangenen öffentlichen kryptographischen Schlüssels des Endgeräts zu dem zweiten Datensatz zum kryptographischen Binden des zweiten Datensatzes an das Endgerät,
   - Signieren des zweiten Datensatzes mit einem dem Ausstellerdienst zugeordneten zweiten kryptographischen Signaturschlüssel,
   - Bereitstellen des ausgestellten Dokuments in Form des signierten zweiten Datensatzes,
   - Speichern einer Zuordnung des empfangenen öffentlichen kryptographischen Schlüssels des Endgeräts zu dem ausgestellten Dokument in dem ersten Datenbankeintrag in der ersten Datenbank,
∘ Senden des ausgestellten Dokuments an das Endgerät.

Beispiele können den Vorteil haben, dass ein digitales Dokument ausgestellt werden kann, welches kryptographisch an ein Endgerät, insbesondere ein mobiles Endgerät, wie beispielsweise ein Smartphone, gebunden bzw. gekoppelt ist. Eine Berechtigung zur Verwendung des entsprechenden Dokuments kann mit einem dem öffentlichen kryptographischen Schlüssel zugeordneten privaten kryptographischen Schlüssel des Endgeräts nachgewiesen werden, welcher beispielsweise in einem geschützten Speicherbereich eines Speichers des Endgeräts, beispielsweise einem Sicherheitselement, gespeichert ist. Hierzu wird beispielsweise eine Signatur mit dem entsprechenden privaten kryptographischen Schlüssel erstellt, welche mit dem von dem Dokument umfassten öffentlichen kryptographischen Schlüssel des Endgeräts validiert werden kann.

Zum Nachweis der Berechtigung zum Empfang des auszustellenden digitalen Dokuments mit dem Endgerät und zur kryptographischen Kopplung an das Endgerät im Zuge der Ausstellung ist der Provisionierungstoken notwendig. Wer sich im Besitz des entsprechenden Provisionierungstokens befindet, kann das Ausstellen des Dokuments initiieren.

Durch das Löschen zumindest der in dem ersten Datenbankeintrag gespeicherten ein oder mehreren Salt-Werte des Provisionierungstokens kann sichergestellt werden, dass der Provisionierungstoken nur einmal zum Ausstellen des Dokuments verwendet werden kann, d.h. dass das entsprechende Dokument nur einmal ausgestellt wird.

Beispielsweise werden in dem Provisionierungstoken keine Datenelemente des Dokuments verwendet. Beispielsweise wird selbst das Pseudonym nicht in Klartext, sondern nur in gehashter und damit geschützter Form gespeichert. Somit kann sichergestellt werden, dass das Pseudonym nicht aus dem Provisionierungstoken abgeleitet werden kann. Um das Hashen zusätzlich abzusichern, wird das Pseudonym mit einem Salt-Wert kombiniert und die resultierte Kombination zum Erzeugen des in dem Provisionierungstoken gespeicherten Hashwerts, d.h. des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise das Pseudonym, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Er dient bei Vorlage des Provisionierungstokens zum Nachweis, dass es sich bei dem entsprechenden Hashwert des Provisionierungstokens und damit dem Provisionierungstoken selbst um einen gültigen Hashwert bzw. ein gültiges Provisionierungstoken handelt. Hierzu muss die gehashte Kombination aus Pseudonym, welches den ersten Datenbankeintrag in der ersten Datenbank identifiziert, und dem in dem identifizierten Datenbankeintrag hinterlegten Salt-Wert mit dem in dem vorgelegten Provisionierungstoken gespeicherten Hashwert übereinstimmen. Nach einer Verwendung des Provisionierungstokens zum Nachweis der Berechtigung zum Empfang des auszustellenden digitalen Dokuments, wird der Salt-Wert in dem ersten Datenbankeintrag beispielsweise gelöscht. Somit kann sichergestellt werden, dass der Provisionierungstoken nur einmal verwendet werden kann. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang des auszustellenden digitalen Dokuments verwendet werden.

Der Provisionierungstoken stellt ein kryptographisch gesichertes Verbindungsglied zwischen einer Identifizierung eines Anfragenstellers bei Erstellen des Provisionierungstoken und einem Ausstellen des auszustellenden Dokuments dar. Mithin kann das Ausstellen über einen von dem Identifizieren unabhängigen Kanal erfolgen.

Zunächst wird der Provisionierungstoken validiert. Das Validieren des Provisionierungstoken umfasst ein Validieren der Signatur des Provisionierungstokens sowie ein Validieren der von dem Provisionierungstoken umfassten Hashwerte.

Auf ein erfolgreiches Validieren des Provisionierungstoken hin, wird das von dem Ausstellerdienst signierte Dokument ausgestellt, welches Datenelemente in Klartext sowie den öffentlichen kryptographischen Schlüssel des Endgeräts zur kryptographischen Bindung bzw. Kopplung an das entsprechende Endgerät umfasst.

Das Senden des Dokuments kann auf verschiedene Weise erfolgen. Beispielsweise kann das Dokument automatisch gesendet werden. Beispielsweise kann ein QR-Code zum Herunterladen des Dokuments bereitgestellt werden. Beispielsweise können Informationen zum Nachweisen einer Berechtigung zum Herunterladen des Dokuments an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und der zweiten Datenbank um Teile ein und derselben Datenbank. Beispielsweise handelt es sich bei der ersten Datenbank und der zweiten Datenbank um voneinander unabhängige Datenbanken. Insbesondere kann ein Zugang zu den beiden unabhängigen Datenbanken beispielsweise über voneinander unabhängige Server erfolgen.

Die erste Datenbank stellt beispielsweise Daten bereit, welche zum Prüfen der Gültigkeit von Provisionierungstoken, Dokument und/oder Dokumentenkopien dienen. Durch die Verwendung eines Pseudonyms kann sichergestellt werden, dass aus einer solchen Gültigkeitsprüfung bzw. aus einem Zugriff auf die erste Datenbank an sich keine Informationen über den Inhalt von Provisionierungstoken, Dokument und/oder Dokumentenkopien ableiten lassen. Selbst wenn ein allgemeiner Zugriff auf die erste Datenbank, etwa in Form einer öffentlichen Datenbank ermöglicht wird, können daraus keine Informationen die von dem Dokument und/oder Dokumentenkopien umfassten Daten bzw. Personen, Gegenstände und/oder Sachverhalte, auf welche sich das Dokument und/oder die Dokumentenkopien beziehen, abgeleitet werden. Die zweite Datenbank stellt dabei die entsprechenden Daten beispielsweise zur Ausstellung der Dokumente und/oder Dokumentenkopien zur Verfügung bzw. die Dokumente und/oder Dokumentenkopien dienen zum Beleg der entsprechenden in der zweiten Datenbank gespeicherten Daten. Die zweite Datenbank gewährleistet somit beispielsweise eine Datenkonsistenz und dient als Vertrauensanker. Beispielsweise handelt es sich bei der zweiten Datenbank um einen Single Point of Truth (SPOT), d.h. einen für die Dokumente und/oder Dokumentenkopien allgemeingültigen Datenbestand, der den Anspruch hat, korrekt zu sein und auf den man sich verlassen kann. Ein solches Datenmodell, in dem ein allgemeingültiger Datenbestand in Form von Dokumenten und/oder Dokumentenkopien verfügbar gemacht werden wird, mit der notwendigen Datenqualität und Verlässlichkeit, ist vor allem dann wichtig, wenn Daten durch die entsprechenden Dokumente und/oder Dokumentenkopien redundant vorliegen.

Die zweite Datenbank dient somit der langfristigen Speicherung der zugrundeliegenden Daten, bei welchen es sich beispielsweis um sicherheitsrelevante und/oder personenbezogene Daten handelt, die vor unberechtigten Zugriffen zu schützen sind. Somit sind der zweiten Datenbank beispielsweise vergleichsweise hohe Sicherheitsanforderungen zugrunde zu legen, welche für die pseudonymisierte erste Datenbank niedriger ausfallen können. Beispielsweise können für die erste Datenbank Schreibrechte beschränkt und auf ausgewählte berechtigte Entitäten limitiert sein, während Leserechte beispielsweise allgemein vergeben sein können, d.h. die Datenbank beispielsweise öffentlich einsehbar sein kann. Demgegenüber sind in der zweiten Datenbank beispielsweise Lese- und Schreibrechte auf ausgewählte berechtigte Entitäten limitiert.

In der zweiten Datenbank sind beispielsweise Datenelemente auszustellender Dokumente und/oder Dokumentenkopien gespeichert.

Beispielsweise umfasst das Verfahren ferner ein Empfangen des Pseudonyms und ein Verwenden des empfangenen Pseudonyms zum Auslesen des ersten Datenbankeintrags aus der ersten Datenbank.

Beispiele können den Vorteil haben, dass unter Verwendung des Pseudonyms der erste Datenbankeintrag mit den zum Validieren des Provisionierungstoken notwendigen Daten, beispielsweise den Salt-Werten, ausgelesen werden kann.

Beispielsweise wird die Zuordnung des empfangenen öffentlichen kryptographischen Schlüssels des Endgeräts zu dem ausgestellten Dokument in dem ersten Datenbankeintrag der ersten Datenbank gespeichert.

Beispiele können den Vorteil haben, dass somit die kryptographische Bindung bzw. Kopplung an das entsprechende Endgerät zentral bei dem Ausstellerdient hinterlegt bzw. festgelegt werden kann.

Beispielsweise umfasst das Validieren des Provisionierungstokens, auf eine erfolgreiche Prüfung hin, ein Löschen aller dem Provisionierungstoken zugeordneter Daten aus dem ersten Datenbankeintrag in der ersten Datenbank. Beispielsweise bleibt dabei aber die Zuordnung des Pseudonyms zu dem öffentlichen kryptographischen Schlüssel des Endgeräts in dem ersten Datenbankeintrag erhalten, da es sich hierbei um dem Dokument zugeordnete Daten handelt.

Beispiele können den Vorteil haben, dass sichergestellt werden kann, dass der Provisionierungstoken kein weiters Mal zum Ausstellen des Dokuments verwendet werden kann.

Beispielsweise umfasst der zweite Datensatz alle der Datenelemente des zweiten Datenbankeintrags, welche dem auszustellenden Dokument zugeordnet sind, in Klartext. Beispiele können den Vorteil haben, dass das ausgestellte Dokument alle Datenelemente des Dokuments umfasst, wie sie in dem zweiten Datenbankeintrag hinterlegt sind.

Beispielsweise umfasst der zweite Datensatz dabei auch das Pseudonym, welches beispielsweise in dem Datenbankeintrag gespeichert ist.

Beispielsweise handelt es sich bei dem ersten kryptographischen Signaturschlüssel und dem zweiten kryptographischen Signaturschlüssel des Ausstellerdienstes um ein und denselben Signaturschlüssel. Beispielsweise handelt es sich dem ersten kryptographischen Signaturschlüssel und dem zweiten kryptographischen Signaturschlüssel des Ausstellerdienstes um zwei verschiedene kryptographischen Signaturschlüssel.

Beispielsweise wird der Provisionierungstoken zusammen mit der Ausstellungsanfrage empfangen. Beispielsweise wird auf den Empfang der Ausstellungsanfrage hin eine Abfrage des Provisionierungstokens an den Anfragensteller gesendet. In Antwort auf das Senden der Abfrage des Provisionierungstokens wird der Provisionierungstoken von dem Anfragensteller empfangen.

Beispielsweise wird das Pseudonym verwendet zum Bereitstellen eines Datenbankzugriffsschlüssels zum Identifizieren des in der ersten Datenbank gespeicherten ersten Datenbankeintrags mit der ersten Zuordnung des erzeugten ersten Salt-Werts zu dem Pseudonym.

Beispiele können den Vorteil haben, dass unter Verwendung des Pseudonyms auf den ersten Datenbankeintrag in der ersten Datenbank zugegriffen werden kann, welcher Daten bereitstellt, die zum Prüfen der Gültigkeit des Provisionierungstokens dienen.

Beispielsweise wird ein Zugriff auf die zweite Datenbank über einen zweiten Server bereitgestellt. Das Abfragen des zweiten Datenbankeintrags umfasst ein Senden einer Abfrage an den zweiten Server und einen Empfang des zweiten Datenbankeintrags in Antwort auf die Abfrage.

Beispiele können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Beispielsweise erfolgt das Abfragen des zweiten Datenbankeintrags unter Verwendung des Pseudonyms, welches den zweiten Datenbankeintrag identifiziert. Beispielsweise umfasst die Abfrage des zweiten Datenbankeintrags das Pseudonym, welches den zweiten Datenbankeintrag identifiziert. Das Pseudonym dient beispielsweise zum Bereitstellen eines Datenbankzugriffsschlüssels, beispielsweise als Primärschlüssel, zum Zugreifen auf den zweiten Datenbankeintrag.

Beispielsweise umfasst der erste Datensatz des Provisionierungstokens ferner einen zweiten Hashwert, welcher unter Verwendung einer zweiten Kombination eines Einmalkennworts und eines dem Einmalkennwort zugeordneten zweiten Salt-Werts erzeugt ist. In dem ersten Datenbankeintrag der ersten Datenbank ist eine zweite Zuordnung des zweiten Salt-Werts zu dem Einmalkennwort gespeichert.

Das Validieren des Provisionierungstokens umfasst ferner ein Empfangen des Einmalkennworts und Prüfen des zweiten Hashwerts unter Verwendung des empfangenen Einmalkennworts sowie des ausgelesenen ersten Datenbankeintrags.

Beispiele können den Vorteil haben, dass zusätzlich zu dem Besitz des Provisionierungstoken das entsprechende Einmalkennwort, etwa eine TAN, zum erfolgreichen Nachweis der Berechtigung zum Empfang eines auszustellenden digitalen Dokuments mit einem Endgerät und zur kryptographischen Kopplung an das Endgerät im Zuge der Ausstellung notwendig.

Beispielsweise umfasst der zweite Datensatz des ausgestellten Dokuments ferner eine Angabe eines Zeitpunkts der Ausstellung des Dokuments.

Beispiele können den Vorteil haben, dass dem Ausstellen des Dokuments ein Zeitpunkt zugeordnet wird. Bei der Angabe des Zeitpunkts handelt es sich beispielsweise um ein Ausstelldatum. Beispielsweise umfasst die Angabe des Zeitpunkts zusätzlich zu dem Ausstelldatum eine Angabe von Stunde, Minute und/oder Sekunde. Anhand der Angabe eines Zeitpunkts der Ausstellung des Dokuments kann beispielsweise geprüft werden, ob es sich bei dem entsprechenden Dokument um eine aktuelle Version mit aktuellen Datenelementen handelt oder ob eine Aktualisierung notwendig ist.

Beispielsweise umfasst das Verfahren ferner ein Aktualisieren des ausgestellten Dokuments. Das Aktualisieren umfasst:
∘ Empfangen einer Aktualisierungsanfrage zum Aktualisieren des ausgestellten Dokuments von dem Endgerät, wobei die Aktualisierungsanfrage das ausgestellte Dokument umfasst,
∘ Auslesen des zweiten Datenbankeintrags aus der zweiten Datenbank unter Verwendung des ersten Datenelements oder des Pseudonyms des empfangenen Dokuments, wobei der zweite Datenbankeintrag eine Angabe eines Zeitpunkts einer letzten Aktualisierung des zweiten Datenbankeintrags umfasst,
∘ Vergleichen der Angabe des Zeitpunkts der Ausstellung des empfangenen Dokuments mit der Angabe des Zeitpunkts der letzten Aktualisierung des zweiten Datenbankeintrags,
∘ Feststellen, dass die letzte Aktualisierung des zweiten Datenbankeintrags nach dem Ausstellen des Dokuments erfolgt ist,
∘ Ausstellen eines aktualisierten Dokuments, wobei das Ausstellen des aktualisierten Dokuments umfasst:
   - Erstellen eines dritten Datensatzes, welcher ein oder mehrere der Datenelemente des ausgelesenen zweiten Datenbankeintrags, welche dem auszustellenden Dokument zugeordnet sind, in Klartext umfasst,
   - Hinzufügen des öffentlichen kryptographischen Schlüssels des Endgeräts aus dem empfangenen Dokument zu dem dritten Datensatz zum kryptographischen Binden des dritten Datensatzes an das Endgerät,
   - Signieren des dritten Datensatzes mit dem zweiten kryptographischen Signaturschlüssel des Ausstellerdienstes,
   - Bereitstellen des aktualisierten Dokuments in Form des signierten dritten Datensatzes,
∘ Senden des aktualisierten Dokuments an das Endgerät.

Beispiele können den Vorteil haben, dass so basierend auf einem Vergleich der Angabe des Zeitpunkts der Ausstellung des Dokuments mit der Angabe des Zeitpunkts der letzten Aktualisierung des zweiten Datenbankeintrags geprüft werden kann, ob das Dokument aktuell ist, d.h. die letzte Aktualisierung des zweiten Datenbankeintrags in der zweiten Datenbank berücksichtigt. Wird festgestellt, dass die letzte Aktualisierung des zweiten Datenbankeintrags nach dem Ausstellen des Dokuments erfolgt ist, wird ein aktualisiertes Dokument ausgestellt. Somit kann sichergestellt werden, dass stets eine aktuelle Version des Dokuments zur Verfügung steht.

Beispielsweise umfasst der dritte Datensatz zudem das Pseudonym in Klartext.

Beispielsweise ist das empfangene ausgestellte Dokument mit einem dem Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des Endgeräts unter Verwendung des von dem empfangenen Dokument umfassten öffentlichen kryptographischen Schlüssels des Endgeräts.

Beispiele können den Vorteil haben, dass das Dokument als Voraussetzung für eine Aktualisierung zunächst validiert wird. Somit kann sichergestellt werden, dass nur für ein authentisches Dokument bzw. ein gültiges Dokument eine Aktualisierung ausgeführt wird.

Beispielsweise ist das von der Aktualisierungsanfrage umfasste Dokument mit dem privaten kryptographischen Schlüssel des Endgeräts signiert. Beispielsweise ist die das Dokument umfassende Aktualisierungsanfrage mit dem privaten kryptographischen Schlüssel des Endgeräts signiert.

Nach Ausführungsformen, falls basierend auf dem Vergleichen der Angabe des Zeitpunkts der Ausstellung des Dokuments mit der Angabe des Zeitpunkts der letzten Aktualisierung des zweiten Datenbankeintrags festgestellt wird, dass die letzte Aktualisierung des zweiten Datenbankeintrags vor dem Ausstellen des Dokuments erfolgt ist, wird eine Information an den Anfragensteller gesendet, welche angibt, dass es sich bei dem ausgestellten Dokument um ein aktuelles Dokument mit aktuellen Datenelementen handelt.

Beispielsweise handelt es sich bei dem ausgestellten Dokument um ein Fahrzeugdokument, beispielsweise um eine elektronische Zulassungsbescheinigung Teil I.

Beispiele können den Vorteil haben, dass eine Zulassungsbescheinigung Teil I in Form eines digitalen Dokuments ausgestellt werden kann.

Ausführungsformen umfassen ferner einen Server eines Ausstellerdienstes zum Ausstellen eines digitalen Dokuments unter Verwendung eines pseudonymisierten Provisionierungstokens. Der Server umfasst einen Prozessor, einen Speicher mit Programminstruktionen und eine Kommunikationsschnittstelle zur Kommunikation über ein Netzwerk.

Der Provisionierungstoken weist eine Berechtigung zum Empfang des auszustellenden digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert, welcher unter Verwendung einer ersten Kombination eines Pseudonyms und eines dem Pseudonym zugeordneten ersten Salt-Werts erzeugt ist. Der erste Datensatz ist mit einem ersten Signaturschlüssel eines den Provisionierungstoken erzeugenden Ausstellerdienstes signiert.

Der Server besitzt Zugriff auf eine erste Datenbank, in der ein erster Datenbankeintrag mit einer ersten Zuordnung des ersten Salt-Werts zu dem Pseudonym gespeichert ist. Das Pseudonym dient als Datenbankzugriffschlüssel zum Identifizieren des in der ersten Datenbank gespeicherten ersten Datenbankeintrags.

Der Server besitzt ferner Zugriff auf eine zweite Datenbank, in der ein zweiter Datenbankeintrag mit Datenelementen des auszustellenden Dokuments gespeichert ist. Das Pseudonym dient ferner als Datenbankzugriffschlüssel zum Identifizieren des in der zweiten Datenbank gespeicherten zweiten Datenbankeintrags. Beispielsweise umfasst der zweite Datenbankeintrag das Pseudonym.

Ein Ausführen der Programminstruktionen durch den Prozessor veranlasst den Prozessor dazu, den Server zu steuern zum:
∘ Empfangen einer Ausstellungsanfrage zum Ausstellen des auszustellenden Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen Pseudonyms,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen des Dokuments, wobei das Ausstellen des Dokuments umfasst:
   - Auslesen des zweiten Datenbankeintrags aus der zweiten Datenbank unter Verwendung des empfangenen Pseudonyms,
   - Erstellen eines zweiten Datensatzes, welcher ein oder mehrere der Datenelemente des zweiten Datenbankeintrags, welche dem auszustellenden Dokument zugeordnet sind, in Klartext umfasst,
   - Senden einer Schlüsselabfrage an das Endgerät,
   - Empfangen eines dem Endgerät zugeordneten öffentlichen kryptographischen Schlüssels,
   - Hinzufügen des empfangenen öffentlichen kryptographischen Schlüssels des Endgeräts zu dem zweiten Datensatz zum kryptographischen Binden des zweiten Datensatzes an das Endgerät,
   - Signieren des zweiten Datensatzes mit einem dem Ausstellerdienst zugeordneten zweiten kryptographischen Signaturschlüssel,
   - Bereitstellen des ausgestellten Dokuments in Form des signierten zweiten Datensatzes,
   - Speichern einer Zuordnung des empfangenen öffentlichen kryptographischen Schlüssels des Endgeräts zu dem ausgestellten Dokument in dem ersten Datenbankeintrag in der ersten Datenbank,
∘ Senden des ausgestellten Dokuments an das Endgerät.

Beispielsweise ist der Server dazu konfiguriert jede der zuvor beschrieben Ausführungsformen des Verfahrens zum Ausstellen des digitalen Dokuments auszuführen.

Ausführungsformen umfassen ferner ein System umfassend einen Server eines Ausstellerdienstes nach einer der vorangehend beschriebenen Ausführungsformen sowie einen weiteren Server, welcher den Zugriff auf die zweite Datenbank bereitgestellt. Der zweite Server umfasst einen weiteren Prozessor, einen weiteren Speicher mit weiteren Programminstruktionen und eine weitere Kommunikationsschnittstelle zur Kommunikation über das Netzwerk.

In der zweiten Datenbank ist der zweite Datenbankeintrag gespeichert, welcher von dem auszustellenden Dokument zu umfassende Daten umfasst. Das Pseudonym dient ferner als Datenbankzugriffschlüssel zum Identifizieren des in der zweiten Datenbank gespeicherten zweiten Datenbankeintrags.

Ein Ausführen der weiteren Programminstruktionen durch den weiteren Prozessor veranlasst den weiteren Prozessor dazu, den weiteren Server zum Senden des zweiten Datenbankeintrags an den Server zu senden in Antwort auf ein Empfangen einer Abfrage des zweiten Datenbankeintrags durch den Server.

Das Abfragen des zweiten Datenbankeintrags umfasst ein Senden einer Abfrage von dem Server an den weiteren Server und einen Empfang des von dem weiteren Server in Antwort auf die Abfrage gesendeten zweiten Datenbankeintrags durch den Server.

Beispielsweise ist das System dazu konfiguriert jede der zuvor beschrieben Ausführungsformen des Verfahrens zum Ausstellen des digitalen Dokuments auszuführen.

Beispielsweise umfasst das System ferner das Endgerät.

Ausführungsformen umfassen ferner ein digitales Dokument, welches einen Datensatz mit Datenelementen in Klartext umfasst. Der Datensatz ist mit einem Signaturschlüssel eines das Dokument ausstellenden Ausstellerdienstes signiert. Der Datensatz umfasst ferner einen öffentlichen kryptographischen Schlüssel eines Endgeräts zum kryptographischen Binden des Dokuments an das Endgerät. Beispielsweise umfasst der Datensatz das Pseudonym.

Beispielsweise handelt es sich bei dem digitalen Dokument um ein Erzeugnis eines der zuvor beschriebenen Ausführungsformen des Verfahrens zum Ausstellen des digitalen Provisionierungstokens.

Beispielsweise umfasst der signierte Datensatz ferner eine Angabe eines Zeitpunkts der Ausstellung des Dokuments.

Beispielsweise handelt es sich bei dem Dokument um ein Fahrzeugdokument, beispielsweise um eine elektronische Zulassungsbescheinigung Teil I.

Ausführungsformen umfassen ein Verfahren zum pseudonymisierten Erzeugen eines digitalen Provisionierungstokens durch einen Ausstellerdienst. Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach.

Das Verfahren umfasst durch einen ersten Server des Ausstellerdienstes:
∘ Empfangen einer Erstellungsanfrage zum Erstellen des Provisionierungstokens,
∘ Identifizieren des Anfragenstellers unter Verwendung des ausgestellten digitalen Dokuments,
∘ Erstellen des angefragten Provisionierungstokens in Form eines signierten Datensatzes, wobei das Erstellen umfasst:
   - Empfangen eines Pseudonyms, welches als Datenbankzugriffschlüssel zum Identifizieren eines in der einer zweiten Datenbank gespeicherten zweiten Datenbankeintrags dient, welcher von dem auszustellenden Dokument zu umfassende Daten umfasst,
   - Prüfen des Pseudonyms unter Verwendung des in der zweiten Datenbank gespeicherten zweiten Datenbankeintrags,
   - Erzeugen eines ersten Salt-Werts, welcher dem Pseudonym zugeordnet wird, wobei das Zuordnen ein Speichern einer ersten Zuordnung des ersten Salt-Werts zu dem Pseudonym in einem ersten Datenbankeintrag in einer ersten Datenbank umfasst,
   - Berechnen eines ersten Hashwerts unter Verwendung einer ersten Kombination des Pseudonyms und des ersten Salt-Werts,
   - Erstellen eines Datensatzes, welcher den ersten Hashwert sowie einen Indikator umfasst, wobei der Indikator anzeigt, dass es sich um einen Provisionierungstoken für eine Kopie des ausgestellten Dokuments handelt,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierten Anfragensteller.

Beispiele können den Vorteil haben, dass in kryptographisch gesicherter Weise ein Provisionierungstoken bereitgestellt wird. Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach. Diese Berechtigung wird durch die Signatur des Datensatzes mit dem dem Ausstellerdienst zugeordneten kryptographischen Signaturschlüssel bestätigt. Bei dem kryptographischen Signaturschlüssel handelt es sich beispielsweise um einen privaten kryptographischen Schlüssel eines dem Ausstellerdienst zugeordneten asymmetrischen kryptographischen Schlüsselpaars.

Zunächst wird der Anfragensteller identifiziert unter Verwendung des ausgestellten digitalen Dokuments. Beispielsweise wird das ausgestellte digitale Dokument mit der Erstellungsanfrage gesendet, wobei die Erstellungsanfrage und/oder das empfangene Dokument mit einem privaten kryptographischen Schlüssel des Endgeräts, beispielsweise eines mobilen Endgeräts, signiert ist, an welches das Dokument kryptographisch gekoppelt ist. Beispielsweise sind die Datenelemente des zweiten Datenbankeintrags bzw. der zweite Datenbankeintrag einer bestimmten Person oder Entität zugeordnet. Durch das Identifizieren des Anfragenstellers kann beispielsweise sichergestellt werden, dass sich bei dem Anfragensteller um die entsprechende berechtigte Person oder Entität handelt.

Ferner wird geprüft, ob es sich bei dem empfangenen Pseudonym tatsächlich um ein Pseudonym handelt, welches als Datenbankzugriffschlüssel zum Identifizieren eines in der einer zweiten Datenbank gespeicherten zweiten Datenbankeintrags dient.

Das Pseudonym wird zum Identifizieren des in der zweiten Datenbank gespeicherten zweiten Datenbankeintrags mit den von dem auszustellenden Dokument zu umfassenden Datenverwendet. Das Pseudonym dient einer Pseudonymisierung, im Zuge derer das Pseudonym beispielsweise als Datenbankzugriffschlüssel zum Identifizieren des in der ersten Datenbank gespeicherten ersten Datenbankeintrags verwendet wird, wodurch der Zugriff auf den ersten Datenbankeintrag und/oder der erste Datenbankeintrag selbst pseudonymisiert werden. Das Pseudonym kann für ein Identifizieren des zweiten Datenbankeintrags verwendet werden, ohne dass hierfür eine über das Pseudonym hinausgehende Kenntnis des Inhalts des zweiten Datenbankeintrags notwendig ist. Zudem wir dadurch der erste Datenbankeintrag in der ersten Datenbank mit dem zweiten Datenbankeintrag in der zweiten Datenbank verknüpft werden, ohne dass dafür in dem ersten Datenbankeintrag über das Pseudonym hinausgehende Daten aus dem zweiten Datenbankeintrag gespeichert werden. Aus einer Kenntnis des ersten Datenbankeintrags ergibt sich mithin keine über das Pseudonym hinausgehende Kenntnis des Inhalts des zweiten Datenbankeintrags.

Dies kann mithin den Vorteil haben, dass die erste Datenbank unabhängig von der zweiten Datenbank implementiert werden und der erste Datenbankeintrag mit dem zweiten Datenbankeintrag verknüpft werden kann, ohne dass dadurch die Sicherheit der in dem zweiten Datenbankeintrag gespeicherten daten reduziert wird. Selbst wenn Sicherungsmaßnahmen zur Sicherung der ersten Datenbank geringer ausfallen, als Sicherungsmaßnahmen zur Sicherung der zweiten Datenbank, wird dadurch das Sicherheitsniveau für die in dem zweiten Datenbankeintrag gesicherten und von dem auszustellenden Dokument zu umfassenden Daten nicht reduziert. Dies gilt selbst für den Fall, dass die erste Datenbank und/oder der erste Datenbankeintrag in der ersten Datenbank kompromittiert werden.

Somit kann anhand des in dem Provisionierungstoken gespeicherten ersten Hashwerts, welcher von dem Pseudonym abhängt, der zum Ausstellen der entsprechenden Kopie des Dokuments zu verwendende Datenbankeintrag der zweiten Datenbank, nämlich der zweite Datenbankeintrag, identifiziert werden. Zudem kann der erste Datensatz in der ersten Datenbank identifiziert werden, welcher die Zuordnung des Pseudonyms zu dem ersten Salt-Wert umfasst. Das Pseudonym dient dabei beispielsweise selbst als ein Datenbankzugriffsschlüssel, z.B. ein Primärschlüssel, oder zum Ableiten eines Datenbankzugriffsschlüssels, z.B. eines Primärschlüssels.

Beispielsweise werden keine Datenelemente des Dokuments bzw. der Kopie des Dokuments in dem Provisionierungstoken verwendet. Beispielsweise wird selbst das Pseudonym nicht in Klartext, sondern nur in gehashter und damit geschützter Form gespeichert. Somit kann sichergestellt werden, dass das Pseudonym nicht aus dem Provisionierungstoken abgeleitet werden kann. Um das Hashen zusätzlich abzusichern, wird das Pseudonym mit einem Salt-Wert kombiniert und die resultierte Kombination zum Erzeugen des in dem Provisionierungstoken gespeicherten Hashwerts, d.h. des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise das Pseudonym, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Er dient bei Vorlage des Provisionierungstokens zum Nachweis, dass es sich bei dem entsprechenden Hashwert des Provisionierungstokens und damit dem Provisionierungstoken selbst um einen gültigen Hashwert bzw. ein gültiges Provisionierungstoken handelt. Hierzu muss die gehashte Kombination aus Pseudonym, welches den ersten Datenbankeintrag in der ersten Datenbank identifiziert, und dem in dem identifizierten Datenbankeintrag hinterlegten Salt-Wert mit dem in dem vorgelegten Provisionierungstoken gespeicherten Hashwert übereinstimmen. Nach einer Verwendung des Provisionierungstokens zum Nachweis der Berechtigung zum Empfang der auszustellenden digitalen Kopie des Dokuments, wird der Salt-Wert in dem ersten Datenbankeintrag beispielsweise gelöscht. Somit kann sichergestellt werden, dass der Provisionierungstoken nur einmal verwendet werden kann. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang der auszustellenden digitalen Kopie des Dokuments verwendet werden.

Der Provisionierungstoken stellt somit ein kryptographisch gesichertes Verbindungsglied zwischen einer Identifizierung eines Anfragenstellers mittels des nur von dem Anfragensteller zu verwendenden Dokuments und einem Ausstellen der auszustellenden Kopie des Dokuments dar. Dabei kann die Ausstellung der Kopie des Dokuments von einem anderen Nutzer angefragt werden, welcher keinen Zugriff auf das ausgestellte Dokument besitzt. Mithin kann das Ausstellen über einen von dem Identifizieren unabhängigen Kanal erfolgen.

Das Senden des Provisionierungstoken kann auf verschiedene Weise erfolgen. Beispielsweise kann der Provisionierungstoken automatisch gesendet werden. Beispielsweise kann ein QR-Code zum Herunterladen des Provisionierungstoken bereitgestellt werden. Beispielsweise können Informationen zum Nachweisen einer Berechtigung zum Herunterladen des Provisionierungstoken an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und der zweiten Datenbank um Teile ein und derselben Datenbank. Beispielsweise handelt es sich bei der ersten Datenbank und der zweiten Datenbank um voneinander unabhängige Datenbanken. Insbesondere kann ein Zugang zu den beiden unabhängigen Datenbanken beispielsweise über voneinander unabhängige Server erfolgen.

Die erste Datenbank stellt beispielsweise Daten bereit, welche zum Prüfen der Gültigkeit von Provisionierungstoken, Dokument und/oder Dokumentenkopien dienen. Durch die Verwendung eines Pseudonyms kann sichergestellt werden, dass aus einer solchen Gültigkeitsprüfung bzw. aus einem Zugriff auf die erste Datenbank an sich keine Informationen über den Inhalt von Provisionierungstoken, Dokument und/oder Dokumentenkopien ableiten lassen. Selbst wenn ein allgemeiner Zugriff auf die erste Datenbank, etwa in Form einer öffentlichen Datenbank ermöglicht wird, können daraus keine Informationen die von dem Dokument und/oder Dokumentenkopien umfassten Daten bzw. Personen, Gegenstände und/oder Sachverhalte, auf welche sich das Dokument und/oder die Dokumentenkopien beziehen, abgeleitet werden.

In der zweiten Datenbank sind beispielsweise Datenelemente auszustellender Dokumente und/oder Dokumentenkopien gespeichert. Die zweite Datenbank stellt dabei die entsprechenden Daten beispielsweise zur Ausstellung der Dokumente und/oder Dokumentenkopien zur Verfügung bzw. die Dokumente und/oder Dokumentenkopien dienen zum Beleg der entsprechenden in der zweiten Datenbank gespeicherten Daten. Die zweite Datenbank gewährleistet somit beispielsweise eine Datenkonsistenz und dient als Vertrauensanker. Beispielsweise handelt es sich bei der zweiten Datenbank um einen Single Point of Truth (SPOT), d.h. einen für die Dokumente und/oder Dokumentenkopien allgemeingültigen Datenbestand, der den Anspruch hat, korrekt zu sein und auf den man sich verlassen kann. Ein solches Datenmodell, in dem ein allgemeingültiger Datenbestand in Form von Dokumenten und/oder Dokumentenkopien verfügbar gemacht werden wird, mit der notwendigen Datenqualität und Verlässlichkeit, ist vor allem dann wichtig, wenn Daten durch die entsprechenden Dokumente und/oder Dokumentenkopien redundant vorliegen.

Die zweite Datenbank dient somit der langfristigen Speicherung der zugrundeliegenden Daten, bei welchen es sich beispielsweis um sicherheitsrelevante und/oder personenbezogene Daten handelt, die vor unberechtigten Zugriffen zu schützen sind. Somit sind der zweiten Datenbank beispielsweise vergleichsweise hohe Sicherheitsanforderungen zugrunde zu legen, welche für die pseudonymisierte erste Datenbank niedriger ausfallen können. Beispielsweise können für die erste Datenbank Schreibrechte beschränkt und auf ausgewählte berechtigte Entitäten limitiert sein, während Leserechte beispielsweise allgemein vergeben sein können, d.h. die Datenbank beispielsweise öffentlich einsehbar sein kann. Demgegenüber sind in der zweiten Datenbank beispielsweise Lese- und Schreibrechte auf ausgewählte berechtigte Entitäten limitiert.

Ein entsprechendes Provisionierungstoken für eine digitale Kopie eines Dokuments ermöglicht es dem Besitzer des Dokuments einem anderen Nutzer, welcher keinen Zugriff auf das entsprechende Dokument besitzt, eine digitale Kopie zur Verfügung zu stellen. Der andere Nutzer erhält den Provisionierungstoken und kann unter Verwendung des Provisionierungstoken beispielsweise selbstständig die Kopie des Dokuments ausstellen lassen und herunterladen bzw. empfangen.

Beispielsweise handelt es sich bei der Kopie des Dokuments um eine Kopie einer elektronischen Zulassungsbescheinigung I. In diesem Fall kann ein Fahrzeughalter anderen Fahrern eines Fahrzeugs jeweils eine Kopie der elektronischen Zulassungsbescheinigung I zur Verwendung bereitstellen. Dies kann insbesondere im Falle von anderen Familienmitgliedern, welche dasselbe Fahrzeug nutzen, Mitarbeitern, welche denselben Firmenwagen nutzen, Teilnehmer eines Car-Sharing-Services, welche sich dasselbe Fahrzeug teilen, oder Kunden einer Autovermietung, welche dasselbe Fahrzeug, mieten, von Vorteil sein.

Anhand des Indikators wird angezeigt, dass es sich um einen Provisionierungstoken für eine Kopie handelt. Beispielsweise unterscheidet sich der Provisionierungstoken für eine Kopie von einem Provisionierungstoken für das Originaldokument lediglich durch den entsprechenden Indikator.

Beispielsweise wird das Pseudonym verwendet zum Bereitstellen eines Datenbankzugriffsschlüssels zum Identifizieren eines in der ersten Datenbank gespeicherten ersten Datenbankeintrags mit der ersten Zuordnung des erzeugten ersten Salt-Werts zu dem Pseudonym.

Beispiele können den Vorteil haben, dass unter Verwendung des Pseudonyms, auf den ersten Datenbankeintrag in der ersten Datenbank zugegriffen werden kann, welcher Daten bereitstellt, die zum Prüfen der Gültigkeit des Provisionierungstokens dienen.

Beispielsweise wird das Pseudonym von dem Anfragensteller empfangen und das Prüfen umfasst ein Prüfen, ob der zweite Datenbankeintrag das Pseudonym umfasst oder ob das Pseudonym einen existierenden zweiten Datenbankeintrag identifiziert.

Beispielsweise wird eine Anfrage an die zweite Datenbank gesendet, ob das Pseudonym, gegebenenfalls mit weiteren empfangenen Daten, wie etwa Identifikationsdaten des Anfragenstellers, in dem zweiten Datenbankeintrag gespeichert ist. Beispielsweise sendet die zweite Datenbank in Antwort auf eine solche Prüfanfrage eine Antwort, welche angibt, ob das Pseudonym in dem zweiten Datenbankeintrag gespeichert ist bzw. es einen zweiten Datenbankeintrag gibt, welcher durch das Pseudonym identifiziert wird. Alternativerweise kann die zweite Datenbank in Antwort auf eine solche Prüfanfrage den unter Verwendung des Pseudonyms identifizierten zweiten Datensatz oder einen Auszug desselben zur weiteren Prüfung senden. Anhand des so empfangene zweiten Datensatzes oder des Auszugs desselben kann dann geprüft werden, ob das Pseudonym, gegebenenfalls mit weiteren empfangenen Daten, wie etwa Identifikationsdaten des Anfragenstellers, von dem zweiten Datenbankeintrag umfasst ist.

Beispiele können den Vorteil haben, dass somit sichergestellt werden kann, dass das von dem Anfragensteller empfangene erste Datenelement korrekt ist bzw. ein Datenbankeintrag mit Datenelementen für die auszustellende Kopie des Dokuments in der zweiten Datenbank gespeichert ist.

Beispielsweise wird das das Pseudonym als Teil des zweiten Datenbankeintrags der zweiten Datenbank empfangen und das Prüfen ein Prüfen, ob das Pseudonym aus dem zweiten Datenbankeintrag stammt. Zum Identifizieren des auszulesenden zweiten Datenbankeintrags können in diesem Fall beispielsweise Identifikationsdaten des Anfragenstellers dienen, welche im Zuge des Identifizierens des Anfragenstellers empfangen werden.

Beispiele können den Vorteil haben, dass das erste Datenelement aus dem zweiten Datenbankeintrags der zweiten Datenbank ausgelesen wird. Damit kann sichergestellt werden, dass es sich bei dem empfangenen ersten Datenelement um ein korrektes Datenelement handelt bzw. ein Datenbankeintrag mit Datenelementen für die auszustellende Kopie des Dokuments in der zweiten Datenbank gespeichert ist.

Beispielsweise wird ein Zugriff auf die zweite Datenbank über einen zweiten Server bereitgestellt. Das Abfragen des zweiten Datenbankeintrags umfasst ein Senden einer Abfrage an den zweiten Server und den Empfang des zweiten Datenbankeintrags in Antwort auf die Abfrage.

Beispiele können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Beispielsweise erfolgt das Abfragen des zweiten Datenbankeintrags unter Verwendung des Pseudonyms. Beispielsweise umfasst die Abfrage des zweiten Datenbankeintrags das Pseudonym.

Beispielsweise erfolgt das Abfragen des zweiten Datenbankeintrags unter Verwendung von Identifikationsdaten aus dem ausgestellten Dokument. Beispielsweise umfasst die Abfrage des zweiten Datenbankeintrags die entsprechenden Identifikationsdaten. Beispielsweise können auch Identifikationsdaten des identifizierten Anfragenstellers dazu dienen, einen dem Anfragensteller zugeordneten zweiten Datenbankeintrag in der zweiten Datenbank zu identifizieren.

Beispielsweise umfasst der erste Datensatz ferner Pseudonym in Klartext. Beispielsweise umfasst der erste Datensatz das Pseudonym nicht in Klartext.

Beispielsweise umfasst das Erstellen des angefragten Provisionierungstokens ferner:
- Erzeugen eines dem identifizierten Anfragensteller zugeordneten Einmalkennworts für den Provisionierungstoken,
- Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung des Pseudonyms in der ersten Datenbank umfasst,
- Berechnen eines zweiten Hashwerts unter Verwendung einer zweiten Kombination des Einmalkennworts und des zweiten Salt-Werts,
- Verwenden des zweiten Hashwerts zum Erstellen des Datensatzes, wobei der Datensatz den zweiten Hashwert umfasst,
- Senden des Einmalkennworts an den identifizierten Anfragensteller.

Beispiele können den Vorteil haben, dass zusätzlich ein Einmalpasswort für den Anfragensteller bzw. den zukünftigen Nutzer des Provisionierungstokens bereitgestellt und kryptographisch an den Provisionierungstoken gebunden werden kann. Somit ist zusätzlich zu dem Besitz des Provisionierungstoken das entsprechende Einmalkennwort, etwa eine TAN, zum erfolgreichen Nachweis der Berechtigung zum Empfang eines auszustellenden digitalen Dokuments mit einem Endgerät und zur kryptographischen Kopplung an das Endgerät im Zuge der Ausstellung der Kopie notwendig.

Beispielsweise erfolgt das Senden des Einmalkennworts an den identifizierten Anfragensteller über einen Kanal, welcher unabhängig von demjenigen Kanal ist, über welchen das ausgestellte Provisionierungstoken an den identifizierten Anfragensteller gesendet wird. Beispielsweise wird das Einmalpasswort per Brief oder per SMS an den Anfragensteller gesendet.

Beispielsweise umfasst das Erstellen des angefragten Provisionierungstokens ferner:
- Empfangen einer Angabe einer für die auszustellende Kopie vorgesehene Gültigkeitsdauer,
- Verwenden der Angabe der Gültigkeitsdauer zum Erstellen des Datensatzes, wobei der Datensatz die Angabe der Gültigkeitsdauer umfasst.

Beispiele können den Vorteil haben, dass in dem Provisionierungstoken bereits eine Gültigkeitsdauer für die auszustellende Kopie des Dokuments festgelegt werden kann. So kann der Besitzer des Dokuments effektiv die Gültigkeitsdauer der auszustellenden Kopie des Dokuments beschränken, selbst wenn der Provisionierungstoken zum Anfragen des Ausstellens der Kopie selbständig durch einen anderen Nutzer erfolgt.

Beispielsweise umfasst das Verwenden der Angabe der Gültigkeitsdauer zum Erstellen des Datensatzes ferner:
- Erzeugen eines dritten Salt-Werts, welcher der Angabe der Gültigkeitsdauer zugeordnet wird, wobei das Zuordnen ein Speichern einer dritten Zuordnung des dritten Salt-Werts zu der Angabe der Gültigkeitsdauer unter Verwendung des Pseudonyms in der ersten Datenbank umfasst,
- Berechnen eines dritten Hashwerts unter Verwendung einer dritten Kombination der Angabe der Gültigkeitsdauer mit dem dritten Salt-Wert,
- Verwenden des dritten Hashwerts zum Erstellen des Datensatzes, wobei der Datensatz die Angabe der Gültigkeitsdauer in Form des dritten Hashwerts umfasst.

Beispiele können den Vorteil haben, dass die Gültigkeitsdauer in kryptographisch gesicherter Form als Hashwert in dem Provisionierungstoken codiert werden kann.

Beispielsweise wird der Indikator, welcher anzeigt, dass es sich bei dem Provisionierungstoken um einen Provisionierungstoken für eine Kopie des ausgestellten Dokuments handelt, von dem Datensatz in Form eines vierten Hashwerts umfasst. Das Erstellen des angefragten Provisionierungstokens umfasst ferner:
- Erzeugen eines vierten Salt-Werts, welcher dem Indikator zugeordnet wird, wobei das Zuordnen ein Speichern einer vierten Zuordnung des vierten Salt-Werts zu dem Indikator unter Verwendung des Pseudonyms in der ersten Datenbank umfasst,
- Berechnen eines vierten Hashwerts unter Verwendung einer vierten Kombination des Indikators mit dem vierten Salt-Wert,
- Verwenden des vierten Hashwerts zum Erstellen des Datensatzes.

Beispiele können den Vorteil haben, dass der Indikator in kryptographisch gesicherter Form als Hashwert in dem Provisionierungstoken codiert werden kann.

Beispielsweise erfolgt das Signieren des Datensatzes nur unter Voraussetzung eines erfolgreichen Identifizierens des Anfragenstellers, sodass durch die Signatur ein erfolgreiches Identifizieren bestätigt wird.

Beispiele können den Vorteil haben, dass durch das signierte Provisionierungstoken somit das erfolgreiche Identifizieren des Anfragenstellers anhand des ausgestellten Dokuments nachgewiesen werden kann.

Beispielsweise umfasst das Verfahren ferner ein Revozieren des Provisionierungstokens. Das Revozieren umfasst:
∘ Empfangen einer Revozierungsanfrage zum Revozieren des Provisionierungstokens von einem an das ausgestellte Dokument kryptographisch gebundenen Endgeräts,
∘ Löschen zumindest der dem zu revozierenden Provisionierungstoken zugeordneten Salt-Werte,
∘ Senden einer Revozierungsbestätigung an das Endgerät.

Beispiele können den Vorteil haben, dass eine Möglichkeit zum Revozieren eines ausgegebenen Provisionierungstoken bereitgestellt werden kann. Somit kann der Besitzer des Dokuments, selbst nach einer Übergabe des Provisionierungstokens an einen anderen Nutzer zum Ausstellen der Kopie des Dokuments, noch ein Ausstellen der entsprechenden Kopie unterbinden.

Beispielsweise werden im Zuge des Löschens alle Daten zum dem zu revozierenden Provisionierungstoken aus der ersten Datenbank gelöscht. In diesem Fall, umfasst die erste Datenbank keine Daten mehr zum Validieren des Provisionierungstokens, weshalb dieses nicht mehr verwendet werden kann.

Sind die Daten für individuelle Provisionierungstoken in der ersten Datenbank individuell identifizierbar, kann ein gezieltes Löschen von Daten für bestimmte Provisionierungstoken erfolgen. Beispielsweise werden den Hashwerten individueller Provisionierungstoken jeweils Identifikatoren des entsprechende individuellen Provisionierungstoken zugeordnet, welche es ermöglichen, Daten, insbesondere Hashwerte, für individuelle Provisionierungstoken in der ersten Datenbank individuell zu identifizieren.

Beispielsweise werden im Zuge des Löschens Daten zu allen Provisionierungstoken aus der ersten Datenbank gelöscht, welche eine Berechtigung zum Empfang der digitalen Kopie des vorliegenden digitalen Dokuments nachweisen. Sind die Daten für individuelle Provisionierungstoken in der ersten Datenbank individuell nicht identifizierbar, werden beispielsweise die Daten für alle Provisionierungstoken gelöscht.

Beispielsweise umfasst die Revozierungsanfrage das ausgestellte Dokument. Das empfangene ausgestellte Dokument ist mit einem dem an das ausgestellte Dokument kryptographisch gebundenen Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des an das ausgestellte Dokument kryptographisch gebundenen Endgeräts unter Verwendung des von dem empfangenen Dokument umfassten öffentlichen kryptographischen Schlüssels des an das ausgestellte Dokument kryptographisch gebundenen Endgeräts.

Beispiele können den Vorteil haben, dass ein Revozieren nur unter Nachweis einer entsprechenden Berechtigung in Form des ausgestellten Dokuments ermöglicht wird.

Beispielsweise ist das von der Revozierungsanfrage umfasste Dokument mit dem privaten kryptographischen Schlüssel des an das ausgestellte Dokument kryptographisch gebundenen Endgeräts signiert. Beispielsweise ist die das Dokument umfassende Revozierungsanfrage mit dem privaten kryptographischen Schlüssel des an das ausgestellte Dokument kryptographisch gebundenen Endgeräts signiert.

Beispielsweise handelt es sich bei der auszustellenden Kopie um eine Kopie eines Fahrzeugdokuments, beispielsweise um eine elektronische Zulassungsbescheinigung Teil I. Bei dem ausgestellten Dokument handelt es sich um das entsprechende Fahrzeugdokument.

Beispiele können den Vorteil haben, dass ein Provisionierungstoken zum Nachweis einer Berechtigung zum Empfang einer auszustellenden Kopie einer elektronischen Zulassungsbescheinigung Teil I mit einem Endgerät und zur kryptographischen Kopplung an das Endgerät im Zuge der Ausstellung nachgewiesen werden kann.

Ausführungsformen umfassen ferner einen Server eines Ausstellerdienstes zum Erzeugen eines digitalen Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach.

Ein Ausführen der Programminstruktionen durch den Prozessor veranlasst den Prozessor dazu, den Server zu steuern zum:
∘ Empfangen einer Erstellungsanfrage zum Erstellen des Provisionierungstokens,
∘ Identifizieren des Anfragenstellers unter Verwendung des ausgestellten digitalen Dokuments,
∘ Erstellen des angefragten Provisionierungstokens in Form eines signierten Datensatzes, wobei das Erstellen umfasst:
   - Empfangen eines Pseudonyms, welches als Datenbankzugriffschlüssel zum Identifizieren eines in der einer zweiten Datenbank gespeicherten zweiten Datenbankeintrags dient, welcher von dem auszustellenden Dokument zu umfassende Daten umfasst,
   - Prüfen des Pseudonyms unter Verwendung des in der zweiten Datenbank gespeicherten zweiten Datenbankeintrags,
   - Erzeugen eines ersten Salt-Werts, welcher dem Pseudonym zugeordnet wird, wobei das Zuordnen ein Speichern einer ersten Zuordnung des ersten Salt-Werts zu dem Pseudonym in einem ersten Datenbankeintrag in einer ersten Datenbank umfasst,
   - Berechnen eines ersten Hashwerts unter Verwendung einer ersten Kombination des Pseudonyms und des ersten Salt-Werts,
   - Erstellen eines Datensatzes, welcher den ersten Hashwert sowie einen Indikator umfasst, wobei der Indikator anzeigt, dass es sich um einen Provisionierungstoken für eine Kopie des ausgestellten Dokuments handelt,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierten Anfragensteller.

Beispielsweise ist der Server dazu konfiguriert jede der zuvor beschrieben Ausführungsformen des Verfahrens zum Erzeugen des digitalen Provisionierungstokens auszuführen.

Ausführungsformen umfassen ferner ein System umfassend einen Server eines Ausstellerdienstes nach einer der vorangehend beschriebenen Ausführungsformen sowie einen weiteren Server, welcher einen Zugriff auf die zweite Datenbank bereitgestellt. Der weitere Server umfasst einen weiteren Prozessor, einen weiteren Speicher mit weiteren Programminstruktionen und eine weitere Kommunikationsschnittstelle zur Kommunikation über das Netzwerk.

In der zweiten Datenbank ist der zweite Datenbankeintrag gespeichert, welcher von dem auszustellenden Dokument zu umfassende Daten umfasst. Das Pseudonym dient ferner als Datenbankzugriffschlüssel zum Identifizieren des in der zweiten Datenbank gespeicherten zweiten Datenbankeintrags.

Ein Ausführen der weiteren Programminstruktionen durch den weiteren Prozessor veranlasst den weiteren Prozessor dazu, den weiteren Server zum Senden des zweiten Datenbankeintrags an den Server zu senden in Antwort auf ein Empfangen einer Abfrage des zweiten Datenbankeintrags durch den Server.

Beispielsweise ist das System dazu konfiguriert jede der zuvor beschrieben Ausführungsformen des Verfahrens zum Erzeugen des digitalen Provisionierungstokens auszuführen.

Ausführungsformen umfassen ferner einen digitalen Provisionierungstoken zum Nachweis einer Berechtigung zum Empfang einer auszustellenden digitalen Kopie eines ausgestellten digitalen Dokuments mit einem Endgerät und zur kryptographischen Kopplung an das Endgerät im Zuge der Ausstellung. Der Provisionierungstoken umfasst einen Datensatz mit einem ersten Hashwert und einem Indikator. Der erste Hashwert ist unter Verwendung einer ersten Kombination eines Pseudonyms und eines dem ersten Datenelement zugeordneten ersten Salt-Werts erzeugt. Der Indikator zeigt an, dass es sich um einen Provisionierungstoken für eine Kopie des ausgestellten Dokuments handelt. Der Datensatz ist mit einem Signaturschlüssel eines den Provisionierungstoken erzeugenden Ausstellerdienstes signiert.

Beispielsweise handelt es sich bei dem digitalen Provisionierungstoken um ein Erzeugnis eines der zuvor beschriebenen Ausführungsformen des Verfahrens zum Erzeugen des digitalen Provisionierungstokens.

Beispielsweise umfasst der erste Datensatz ferner Pseudonym in Klartext. Beispielsweise umfasst der erste Datensatz das Pseudonym nicht in Klartext.

Beispielsweise umfasst der signierte Datensatz ferner einen zweiten Hashwert, welcher unter Verwendung einer zweiten Kombination eines dem identifizierten Anfragensteller zugeordneten Einmalkennworts und eines dem Einmalkennwort zugeordneten zweiten Salt-Werts erzeugt ist.

Beispielsweise umfasst der signierte Datensatz ferner eine Angabe einer für die auszustellende Kopie vorgesehene Gültigkeitsdauer.

Beispielsweise umfasst der Datensatz die Angabe der für die auszustellende Kopie vorgesehenen Gültigkeitsdauer in Form eines dritten Hashwerts, welcher unter Verwendung einer dritten Kombination der Angabe der Gültigkeitsdauer und eines dritten Salt-Werts erzeugt ist.

Beispielsweise umfasst der Datensatz den Indikator in Form eines vierten Hashwerts, welcher unter Verwendung einer vierten Kombination des Indikators und eines vierten Salt-Werts erzeugt ist.

Ausführungsformen umfassen ein Verfahren zum Ausstellen einer digitalen Kopie eines ausgestellten digitalen Dokuments unter Verwendung eines pseudonymisierten digitalen Provisionierungstokens.

Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert und einem Indikator. Der erste Hashwert ist unter Verwendung einer ersten Kombination eines Pseudonyms eines dem Pseudonym zugeordneten ersten Salt-Werts erzeugt. Der Indikator zeigt an, dass es sich um einen Provisionierungstoken für eine Kopie des ausgestellten Dokuments handelt. Der erste Datensatz ist mit einem ersten Signaturschlüssel eines den Provisionierungstoken erzeugenden Ausstellerdienstes signiert ist.

In einer ersten Datenbank ist ein erster Datenbankeintrag mit einer ersten Zuordnung des ersten Salt-Werts zu dem Pseudonym gespeichert. Das Pseudonym dient als Datenbankzugriffschlüssel zum Identifizieren des in der ersten Datenbank gespeicherten ersten Datenbankeintrags.

In einer zweiten Datenbank ist ein zweiter Datenbankeintrag mit Datenelementen des ausgestellten Dokuments gespeichert. Das Pseudonym dient ferner als Datenbankzugriffschlüssel zum Identifizieren des in der zweiten Datenbank gespeicherten zweiten Datenbankeintrags. Beispielsweise umfasst der zweite Datenbankeintrag das Pseudonym.

Das Verfahren umfasst durch einen ersten Server des Ausstellerdienstes:
∘ Empfangen einer Ausstellungsanfrage zum Ausstellen der auszustellenden Kopie des ausgestellten Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen Pseudonyms,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen der Kopie des Dokuments, wobei das Ausstellen der Kopie des Dokuments umfasst:
   - Auslesen des zweiten Datenbankeintrags aus der zweiten Datenbank unter Verwendung des empfangenen Pseudonyms,
   - Erstellen eines zweiten Datensatzes, welcher ein oder mehrere der Datenelemente des zweiten Datenbankeintrags, welche dem auszustellenden Dokument zugeordnet sind, in Klartext umfasst, wobei der zweite Datensatz ferner einen Indikator in Klartext umfasst, welcher anzeigt, dass es sich um einen Datensatz einer Kopie des ausgestellten Dokuments handelt,
   - Senden einer Schlüsselabfrage an das Endgerät,
   - Empfangen eines dem Endgerät zugeordneten öffentlichen kryptographischen Schlüssel,
   - Hinzufügen des empfangenen öffentlichen kryptographischen Schlüssels des Endgeräts zu dem zweiten Datensatz zum kryptographischen Binden des zweiten Datensatzes an das Endgerät,
   - Signieren des zweiten Datensatzes mit einem dem Ausstellerdienst zugeordneten zweiten kryptographischen Signaturschlüssel,
   - Bereitstellen der ausgestellten Kopie des Dokuments in Form des signierten zweiten Datensatzes,
   - Speichern einer Zuordnung des empfangenen öffentlichen kryptographischen Schlüssels des Endgeräts zu der ausgestellten Kopie des Dokuments in dem ersten Datenbankeintrag in der ersten Datenbank,
∘ Senden der ausgestellten Kopie des Dokuments an das Endgerät.

Beispiele können den Vorteil haben, dass eine digitale Kopie eines Dokuments ausgestellt werden kann, welche kryptographisch an ein Endgerät, insbesondere ein mobiles Endgerät, wie beispielsweise ein Smartphone, gebunden bzw. gekoppelt ist. Eine Berechtigung zur Verwendung der entsprechenden Kopie des Dokuments kann mit einem dem öffentlichen kryptographischen Schlüssel zugeordneten privaten kryptographischen Schlüssel des Endgeräts nachgewiesen werden, welcher beispielsweise in einem geschützten Speicherbereich eines Speichers des Endgeräts, beispielsweise einem Sicherheitselement, gespeichert ist. Hierzu wird beispielsweise eine Signatur mit dem entsprechenden privaten kryptographischen Schlüssel erstellt, welche mit dem von der Kopie des Dokuments umfassten öffentlichen kryptographischen Schlüssel des Endgeräts validiert werden kann. Insbesondere kann die Kopie eines Dokuments an ein anderes Endgerät gekoppelt werden als das Dokument.

Beispielsweise umfasst der zweite Datensatz zudem das Pseudonym.

Zum Nachweis der Berechtigung zum Empfang der auszustellenden digitalen Kopie des Dokuments mit dem Endgerät und zur kryptographischen Kopplung an das Endgerät im Zuge der Ausstellung ist der Provisionierungstoken notwendig. Wer sich im Besitz des entsprechenden Provisionierungstokens befindet, kann das Ausstellen der Kopie des Dokuments initiieren.

Durch das Löschen zumindest der in dem ersten Datenbankeintrag gespeicherten ein oder mehreren Salt-Werte des Provisionierungstokens kann sichergestellt werden, dass der Provisionierungstoken nur einmal zum Ausstellen einer Kopie des Dokuments verwendet werden kann.

Beispielsweise werden in dem Provisionierungstoken keine Datenelemente des Dokuments bzw. der Kopie des Dokuments verwendet. Beispielsweise wird selbst das Pseudonym nicht in Klartext, sondern nur in gehashter und damit geschützter Form gespeichert. Somit kann sichergestellt werden, dass das Pseudonym nicht aus dem Provisionierungstoken abgeleitet werden kann. Um das Hashen zusätzlich abzusichern, wird das Pseudonym mit einem Salt-Wert kombiniert und die resultierte Kombination zum Erzeugen des in dem Provisionierungstoken gespeicherten Hashwerts, d.h. des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise das Pseudonym, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Er dient bei Vorlage des Provisionierungstokens zum Nachweis, dass es sich bei dem entsprechenden Hashwert des Provisionierungstokens und damit dem Provisionierungstoken selbst um einen gültigen Hashwert bzw. ein gültiges Provisionierungstoken handelt. Hierzu muss die gehashte Kombination aus Pseudonym, welches den ersten Datenbankeintrag in der ersten Datenbank identifiziert, und dem in dem identifizierten Datenbankeintrag hinterlegten Salt-Wert mit dem in dem vorgelegten Provisionierungstoken gespeicherten Hashwert übereinstimmen. Nach einer Verwendung des Provisionierungstokens zum Nachweis der Berechtigung zum Empfang der auszustellenden digitalen Kopie des Dokuments, wird der Salt-Wert in dem ersten Datenbankeintrag beispielsweise gelöscht. Somit kann sichergestellt werden, dass der Provisionierungstoken nur einmal verwendet werden kann. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang der auszustellenden digitalen Kopie des Dokuments verwendet werden.

Der Provisionierungstoken stellt ein kryptographisch gesichertes Verbindungsglied zwischen einer Identifizierung eines Anfragenstellers bei Erstellen des Provisionierungstoken und einem Ausstellen der auszustellenden Kopie des Dokuments dar. Mithin kann das Ausstellen über einen von dem Identifizieren unabhängigen Kanal erfolgen.

Zunächst wird der Provisionierungstoken validiert. Das Validieren des Provisionierungstoken umfasst ein Validieren der Signatur des Provisionierungstokens sowie ein Validieren der von dem Provisionierungstoken umfassten Hashwerte. Dabei wird durch den Indikator angezeigt, dass mit dem entsprechenden Provisionierungstoken lediglich eine Kopie des Dokuments ausgestellt werden kann.

Auf ein erfolgreiches Validieren des Provisionierungstoken hin, wird die von dem Ausstellerdienst signierte Kopie des Dokuments ausgestellt, welches die Datenelemente des Dokuments in Klartext sowie den öffentlichen kryptographischen Schlüssel des Endgeräts zur kryptographischen Bindung bzw. Kopplung an das entsprechende Endgerät umfasst.

Ein entsprechendes Provisionierungstoken für eine digitale Kopie eines Dokuments ermöglicht es dem Besitzer des Dokuments einem anderen Nutzer, welcher keinen Zugriff auf das entsprechende Dokument besitzt, eine digitale Kopie zur Verfügung zu stellen. Der andere Nutzer kann unter Verwendung des Provisionierungstoken selbstständig die Kopie des Dokuments ausstellen lassen und herunterladen bzw. empfangen.

Beispielsweise handelt es sich bei der Kopie des Dokuments um eine Kopie einer elektronischen Zulassungsbescheinigung I. In diesem Fall kann ein Fahrzeughalter anderen Fahrern eines Fahrzeugs mit dem vorliegenden Verfahren jeweils eine Kopie der elektronischen Zulassungsbescheinigung I zur Verwendung bereitstellen. Dies kann insbesondere im Falle von anderen Familienmitgliedern, welche dasselbe Fahrzeug nutzen, Mitarbeitern, welche denselben Firmenwagen nutzen, Teilnehmer eines Car-Sharing-Services, welche sich dasselbe Fahrzeug teilen, oder Kunden einer Autovermietung, welche dasselbe Fahrzeug, mieten, von Vorteil sein.

Anhand des Indikators der ausgestellten Kopie wird angezeigt, dass es sich um eine Kopie des Dokuments handelt. Beispielsweise unterscheidet sich eine solche Kopie von dem Originaldokument lediglich durch den entsprechenden Indikator und die kryptographische Bindung an ein anderes Endgerät, d.h. einem anderen von der Kopie umfassten kryptographischen Schlüssel im Vergleich zu dem von dem Originaldokument umfassten kryptographischen Schlüssel.

Das Senden der ausgesellten Kopie kann auf verschiedene Weise erfolgen. Beispielsweise kann die Kopie automatisch gesendet werden. Beispielsweise kann ein QR-Code zum Herunterladen der Kopie bereitgestellt werden. Beispielsweise können Informationen zum Nachweisen einer Berechtigung zum Herunterladen der Kopie an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und der zweiten Datenbank um Teile ein und derselben Datenbank. Beispielsweise handelt es sich bei der ersten Datenbank und der zweiten Datenbank um voneinander unabhängige Datenbanken. Insbesondere kann ein Zugang zu den beiden unabhängigen Datenbanken beispielsweise über voneinander unabhängige Server erfolgen.

Die erste Datenbank stellt beispielsweise Daten bereit, welche zum Prüfen der Gültigkeit von Provisionierungstoken, Dokument und/oder Dokumentenkopien dienen. Durch die Verwendung eines Pseudonyms kann sichergestellt werden, dass aus einer solchen Gültigkeitsprüfung bzw. aus einem Zugriff auf die erste Datenbank an sich keine Informationen über den Inhalt von Provisionierungstoken, Dokument und/oder Dokumentenkopien ableiten lassen. Selbst wenn ein allgemeiner Zugriff auf die erste Datenbank, etwa in Form einer öffentlichen Datenbank ermöglicht wird, können daraus keine Informationen die von dem Dokument und/oder Dokumentenkopien umfassten Daten bzw. Personen, Gegenstände und/oder Sachverhalte, auf welche sich das Dokument und/oder die Dokumentenkopien beziehen, abgeleitet werden. Die zweite Datenbank stellt dabei die entsprechenden Daten beispielsweise zur Ausstellung der Dokumente und/oder Dokumentenkopien zur Verfügung bzw. die Dokumente und/oder Dokumentenkopien dienen zum Beleg der entsprechenden in der zweiten Datenbank gespeicherten Daten. Die zweite Datenbank gewährleistet somit beispielsweise eine Datenkonsistenz und dient als Vertrauensanker. Beispielsweise handelt es sich bei der zweiten Datenbank um einen Single Point of Truth (SPOT), d.h. einen für die Dokumente und/oder Dokumentenkopien allgemeingültigen Datenbestand, der den Anspruch hat, korrekt zu sein und auf den man sich verlassen kann. Ein solches Datenmodell, in dem ein allgemeingültiger Datenbestand in Form von Dokumenten und/oder Dokumentenkopien verfügbar gemacht werden wird, mit der notwendigen Datenqualität und Verlässlichkeit, ist vor allem dann wichtig, wenn Daten durch die entsprechenden Dokumente und/oder Dokumentenkopien redundant vorliegen.

Die zweite Datenbank dient somit der langfristigen Speicherung der zugrundeliegenden Daten, bei welchen es sich beispielsweis um sicherheitsrelevante und/oder personenbezogene Daten handelt, die vor unberechtigten Zugriffen zu schützen sind. Somit sind der zweiten Datenbank beispielsweise vergleichsweise hohe Sicherheitsanforderungen zugrunde zu legen, welche für die pseudonymisierte erste Datenbank niedriger ausfallen können. Beispielsweise können für die erste Datenbank Schreibrechte beschränkt und auf ausgewählte berechtigte Entitäten limitiert sein, während Leserechte beispielsweise allgemein vergeben sein können, d.h. die Datenbank beispielsweise öffentlich einsehbar sein kann. Demgegenüber sind in der zweiten Datenbank beispielsweise Lese- und Schreibrechte auf ausgewählte berechtigte Entitäten limitiert.

In der zweiten Datenbank sind beispielsweise Datenelemente auszustellender Dokumente und/oder Dokumentenkopien gespeichert.

Beispielsweise umfasst das Verfahren ferner ein Empfangen des Pseudonyms und ein Verwenden des empfangenen Pseudonyms zum Auslesen des ersten Datenbankeintrags aus der ersten Datenbank.

Beispiele können den Vorteil haben, dass unter Verwendung des Pseudonyms der erste Datenbankeintrag mit den zum Validieren des Provisionierungstoken notwendigen Daten, beispielsweise den Salt-Werten, ausgelesen werden kann.

Beispielsweise wird die Zuordnung des empfangenen öffentlichen kryptographischen Schlüssels des Endgeräts zu der ausgestellten Kopie des Dokuments in dem ersten Datenbankeintrag der ersten Datenbank gespeichert.

Beispiele können den Vorteil haben, dass somit die kryptographische Bindung bzw. Kopplung an das entsprechende Endgerät zentral bei dem Ausstellerdient hinterlegt bzw. festgelegt werden kann.

Beispielsweise umfasst das Validieren des Provisionierungstokens, auf eine erfolgreiche Prüfung hin, ein Löschen aller dem Provisionierungstoken zugeordneter Daten aus dem ersten Datenbankeintrag in der ersten Datenbank. Beispielsweise bleibt dabei aber die Zuordnung des Pseudonyms zu dem öffentlichen kryptographischen Schlüssel des Endgeräts in dem ersten Datenbankeintrag erhalten, da es sich hierbei um dem Dokument bzw. der Kopie des Dokuments zugeordnete Daten handelt.

Beispiele können den Vorteil haben, dass sichergestellt werden kann, dass der Provisionierungstoken kein weiters Mal zum Ausstellen einer Kopie des Dokuments verwendet werden kann.

Beispielsweise umfasst der zweite Datensatz alle der Datenelemente des zweiten Datenbankeintrags, welche dem ausgestellten Dokument zugeordnet sind, in Klartext. Beispiele können den Vorteil haben, dass die ausgestellte Kopie des Dokuments alle Datenelemente des Dokuments umfasst, wie sie in dem zweiten Datenbankeintrag hinterlegt sind.

Beispielsweise umfasst der zweite Datensatz dabei auch das Pseudonym, welches beispielsweise in dem Datenbankeintrag gespeichert ist.

Beispielsweise handelt es sich bei dem ersten kryptographischen Signaturschlüssel und dem zweiten kryptographischen Signaturschlüssel des Ausstellerdienstes um ein und denselben Signaturschlüssel. Beispielsweise handelt es sich dem ersten kryptographischen Signaturschlüssel und dem zweiten kryptographischen Signaturschlüssel des Ausstellerdienstes um zwei verschiedene kryptographischen Signaturschlüssel.

Beispielsweise wird der Provisionierungstoken zusammen mit der Ausstellungsanfrage empfangen. Beispielsweise wird auf den Empfang der Ausstellungsanfrage hin eine Abfrage des Provisionierungstokens an den Anfragensteller gesendet. In Antwort auf das Senden der Abfrage des Provisionierungstokens wird der Provisionierungstoken von dem Anfragensteller empfangen.

Beispielsweise wird das Pseudonym verwendet zum Bereitstellen eines Datenbankzugriffsschlüssels zum Identifizieren des in der ersten Datenbank gespeicherten ersten Datenbankeintrags mit der ersten Zuordnung des erzeugten ersten Salt-Werts zu dem Pseudonym.

Beispiele können den Vorteil haben, dass unter Verwendung des Pseudonyms auf den ersten Datenbankeintrag in der ersten Datenbank zugegriffen werden kann, welcher Daten bereitstellt, die zum Prüfen der Gültigkeit des Provisionierungstokens dienen.

Beispielsweise wird ein Zugriff auf die zweite Datenbank über einen zweiten Server bereitgestellt. Das Abfragen des zweiten Datenbankeintrags umfasst ein Senden einer Abfrage an den zweiten Server und einen Empfang des zweiten Datenbankeintrags in Antwort auf die Abfrage.

Beispiele können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Beispielsweise erfolgt das Abfragen des zweiten Datenbankeintrags unter Verwendung des Pseudonyms, welches den zweiten Datenbankeintrag identifiziert. Beispielsweise umfasst die Abfrage des zweiten Datenbankeintrags das Pseudonym, welches den zweiten Datenbankeintrag identifiziert. Das Pseudonym dient beispielsweise zum Bereitstellen eines Datenbankzugriffsschlüssels, beispielsweise als Primärschlüssel, zum Zugreifen auf den zweiten Datenbankeintrag.

Beispielsweise umfasst der erste Datensatz des Provisionierungstokens ferner einen zweiten Hashwert, welcher unter Verwendung einer zweiten Kombination eines Einmalkennworts und eines dem Einmalkennwort zugeordneten zweiten Salt-Werts erzeugt ist. In dem ersten Datenbankeintrag ist der ersten Datenbank eine zweite Zuordnung des zweiten Salt-Werts zu dem Einmalkennwort gespeichert.

Das Validieren des Provisionierungstokens umfasst ferner ein Empfangen des Einmalkennworts und Prüfen des zweiten Hashwerts unter Verwendung des empfangenen Einmalkennworts sowie des ausgelesenen ersten Datenbankeintrags.

Beispiele können den Vorteil haben, dass zusätzlich zu dem Besitz des Provisionierungstoken das entsprechende Einmalkennwort, etwa eine TAN, zum erfolgreichen Nachweis der Berechtigung zum Empfang einer auszustellenden digitalen Kopie des Dokuments mit einem Endgerät und zur kryptographischen Kopplung an das Endgerät im Zuge der Ausstellung notwendig.

Beispielsweise umfasst der zweite Datensatz der ausgestellten Kopie des Dokuments ferner eine Angabe eines Zeitpunkts der Ausstellung der Kopie.

Beispiele können den Vorteil haben, dass dem Ausstellen der Kopie des Dokuments ein Zeitpunkt zugeordnet wird. Bei der Angabe des Zeitpunkts handelt es sich beispielsweise um ein Ausstelldatum. Beispielsweise umfasst die Angabe des Zeitpunkts zusätzlich zu dem Ausstelldatum eine Angabe von Stunde, Minute und/oder Sekunde. Anhand der Angabe eines Zeitpunkts der Ausstellung der Kopie kann beispielsweise geprüft werden, ob es sich bei der entsprechenden Kopie um eine aktuelle Version mit aktuellen Datenelementen handelt oder ob eine Aktualisierung notwendig ist.

Beispielsweise umfasst das Verfahren ferner ein Aktualisieren der ausgestellten Kopie des Dokuments. Das Aktualisieren umfasst:
∘ Empfangen einer Aktualisierungsanfrage zum Aktualisieren der ausgestellten Kopie des Dokuments von dem Endgerät, wobei die Aktualisierungsanfrage die ausgestellte Kopie umfasst,
∘ Auslesen des zweiten Datenbankeintrags aus der zweiten Datenbank unter Verwendung des ersten Datenelements oder des Pseudonyms der empfangenen Kopie des Dokuments, wobei der zweite Datenbankeintrag eine Angabe eines Zeitpunkts einer letzten Aktualisierung des zweiten Datenbankeintrags umfasst,
∘ Vergleichen der Angabe des Zeitpunkts der Ausstellung der empfangenen Kopie des Dokuments mit der Angabe des Zeitpunkts der letzten Aktualisierung des zweiten Datenbankeintrags,
∘ Feststellen, dass die letzte Aktualisierung des zweiten Datenbankeintrags nach dem Ausstellen der Kopie des Dokuments erfolgt ist,
∘ Ausstellen einer aktualisierten Kopie des Dokuments, wobei das Ausstellen der aktualisierten Kopie des Dokuments umfasst:
   - Erstellen eines drittdritten Datensatzes, welcher ein oder mehrere der Datenelemente des ausgelesenen zweiten Datenbankeintrags, welche der auszustellenden Kopie des Dokuments zugeordnet sind, in Klartext umfasst, wobei der dritte Datensatz ferner einen Indikator in Klartext umfasst, welcher anzeigt, dass es sich um einen Datensatz einer Kopie des ausgestellten Dokuments handelt,
   - Hinzufügen des öffentlichen kryptographischen Schlüssels des Endgeräts aus der empfangenen Kopie des Dokuments zu dem drittdritten Datensatz zum kryptographischen Binden des drittdritten Datensatzes an das Endgerät,
   - Signieren des drittdritten Datensatzes mit dem zweiten kryptographischen Signaturschlüssel des Ausstellerdienstes,
   - Bereitstellen der aktualisierten Kopie des Dokuments in Form des signierten drittdritten Datensatzes,
∘ Senden der aktualisierten Kopie des Dokuments an das Endgerät.

Beispiele können den Vorteil haben, dass so basierend auf einem Vergleich der Angabe des Zeitpunkts der Ausstellung der Kopie des Dokuments mit der Angabe des Zeitpunkts der letzten Aktualisierung des zweiten Datenbankeintrags geprüft werden kann, ob die Kopie aktuell ist, d.h. die letzte Aktualisierung des zweiten Datenbankeintrags in der zweiten Datenbank berücksichtigt. Wird festgestellt, dass die letzte Aktualisierung des zweiten Datenbankeintrags nach dem Ausstellen der Kopie erfolgt ist, wird eine aktualisierte Kopie des Dokuments ausgestellt. Somit kann sichergestellt werden, dass stets eine aktuelle Version der Kopie des Dokuments zur Verfügung steht.

Beispielsweise umfasst der dritte Datensatz zudem das Pseudonym in Klartext.

Beispielsweise ist die empfangene ausgestellte Kopie des Dokuments mit einem dem Endgerät zugeordneten privaten kryptographischen Schlüssel signiert. Das Verfahren umfasst ferner ein Validieren der empfangenen Kopie des Dokuments. Das Validieren umfasst ein Prüfen der Signatur der empfangenen Kopie des Dokuments mit dem privaten kryptographischen Schlüssel des Endgeräts unter Verwendung des von der empfangenen Kopie des Dokuments umfassten öffentlichen kryptographischen Schlüssels des Endgeräts.

Beispiele können den Vorteil haben, dass die Kopie als Voraussetzung für eine Aktualisierung zunächst validiert wird. Somit kann sichergestellt werden, dass nur für eine authentische Kopie bzw. eine gültige Kopie eine Aktualisierung ausgeführt wird.

Beispielsweise ist die von der Aktualisierungsanfrage umfasste Kopie des Dokuments mit dem privaten kryptographischen Schlüssel des Endgeräts signiert. Beispielsweise ist die die Kopie umfassende Aktualisierungsanfrage mit dem privaten kryptographischen Schlüssel des Endgeräts signiert.

Nach Ausführungsformen, falls basierend auf dem Vergleichen der Angabe des Zeitpunkts der Ausstellung der Kopie mit der Angabe des Zeitpunkts der letzten Aktualisierung des zweiten Datenbankeintrags festgestellt wird, dass die letzte Aktualisierung des zweiten Datenbankeintrags vor dem Ausstellen der Kopie erfolgt ist, wird eine Information an den Anfragensteller gesendet, welche angibt, dass es sich bei der ausgestellten Kopie des Dokuments um eine aktuelle Kopie mit aktuellen Datenelementen handelt.

Beispielsweise umfasst der zweite Datensatz ferner eine Angabe einer für die ausgestellte Kopie vorgesehene Gültigkeitsdauer im Klartext.

Beispiele können den Vorteil haben, dass für die Kopie des Dokuments eine Gültigkeitsdauer festgelegt werden kann. So kann der Besitzer des Dokuments effektiv die Gültigkeitsdauer der auszustellenden Kopie des Dokuments beschränken, selbst wenn der Provisionierungstoken zum Anfragen des Ausstellens der Kopie selbständig durch einen anderen Nutzer erfolgt.

Beispielsweise umfasst der Provisionierungstoken ferner einen dritten Hashwert, welcher unter Verwendung einer dritten Kombination der Angabe der Gültigkeitsdauer mit einem dritten Salt-Wert erzeugt ist. In dem ersten Datenbankeintrag in der ersten Datenbank ist eine dritte Zuordnung des dritten Salt-Werts zu der Angabe der Gültigkeitsdauer gespeichert.

die Angabe der für die auszustellende Kopie vorgesehenen Gültigkeitsdauer in Form eines dritten Hashwerts, welcher unter Verwendung einer dritten Kombination der Angabe der Gültigkeitsdauer und eines dritten Salt-Werts erzeugt ist.

Beispiele können den Vorteil haben, dass die Gültigkeitsdauer in kryptographisch gesicherter Form als Hashwert in dem Provisionierungstoken codiert werden kann.

Beispielsweise umfasst das Prüfen der in dem Provisionierungstoken eingetragenen Hashwerte ein Prüfen des dritten Hashwerts.

Beispiele können den Vorteil haben, dass ein Prüfen der Gültigkeitsdauer erfolgt.

Beispielsweise umfasst das Verfahren ferner ein Revozieren der ausgestellten Kopie des Dokuments. Das Revozieren umfasst:
∘ Empfangen einer Revozierungsanfrage zum Revozieren der ausgestellten Kopie des Dokuments von einem an das ausgestellte Dokument kryptographisch gebundenen Endgerät,
∘ Löschen zumindest der Zuordnung des öffentlichen kryptographischen Schlüssels des an die zu revozierende Kopie des Dokuments kryptographisch gebundenen Endgeräts aus der ersten Datenbank,
∘ Senden einer Revozierungsbestätigung an das Endgerät.

Beispiele können den Vorteil haben, dass eine Möglichkeit zum Revozieren einer ausgestellten Kopie des Dokuments bereitgestellt werden kann. Somit kann der Besitzer des Dokuments, selbst nach einer Übergabe des Provisionierungstokens an einen anderen Nutzer und dem Ausstellen der Kopie des Dokuments, noch die entsprechende Kopie revozieren.

Beispielsweise werden im Zuge des Löschens alle Daten zu der zu revozierenden Kopie des Dokuments aus der ersten Datenbank gelöscht. In diesem Fall, umfasst die erste Datenbank keine Daten mehr zum Validieren der Kopie des Dokuments, weshalb diese nicht mehr verwendet werden kann.

Sind die Daten für individuelle Kopien in der ersten Datenbank individuell identifizierbar, kann ein gezieltes Löschen von Daten für bestimmte Kopien desselben Dokuments erfolgen. Beispielsweise werden den Hashwerten individueller Kopien des Dokuments jeweils Identifikatoren der entsprechenden individuellen Kopie zugeordnet, welche es ermöglichen, Daten, insbesondere Hashwerte, für individuelle Kopien in der ersten Datenbank individuell zu identifizieren.

Beispielsweise werden im Zuge des Löschens Daten zu allen Kopien des vorliegenden digitalen Dokuments aus der ersten Datenbank gelöscht. Sind die Daten für individuelle Kopien des Dokuments in der ersten Datenbank individuell nicht identifizierbar, werden beispielsweise die Daten für alle Kopien gelöscht
Beispielsweise umfasst die Revozierungsanfrage das ausgestellte Dokument. Das empfangene ausgestellte Dokument ist mit einem dem an das ausgestellte Dokument kryptographisch gebundenen Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des an das ausgestellte Dokument kryptographisch gebundenen Endgeräts unter Verwendung des von dem empfangenen Dokument umfassten öffentlichen kryptographischen Schlüssels des an das ausgestellte Dokument kryptographisch gebundenen Endgeräts.

Beispiele können den Vorteil haben, dass ein Revozieren nur unter Nachweis einer entsprechenden Berechtigung in Form des ausgestellten Dokuments ermöglicht wird.

Beispielsweise ist das von der Revozierungsanfrage umfasste Dokument mit dem privaten kryptographischen Schlüssel des an das ausgestellte Dokument kryptographisch gebundenen Endgeräts signiert. Beispielsweise ist die das Dokument umfassende Revozierungsanfrage mit dem privaten kryptographischen Schlüssel des an das ausgestellte Dokument kryptographisch gebundenen Endgeräts signiert.

Beispielsweise handelt es sich bei der ausgestellten Kopie des Dokuments um eine Kopie eines Fahrzeugdokuments, beispielsweise um eine Kopie einer elektronischen Zulassungsbescheinigung Teil I.

Beispiele können den Vorteil haben, dass Kopie einer elektronischen Zulassungsbescheinigung Teil I ausgestellt werden kann. Dies kann insbesondere im Falle von anderen Familienmitgliedern, welche dasselbe Fahrzeug nutzen, Mitarbeitern, welche denselben Firmenwagen nutzen, Teilnehmer eines Car-Sharing-Services, welche sich dasselbe Fahrzeug teilen, oder Kunden einer Autovermietung, welche dasselbe Fahrzeug, mieten, von Vorteil sein.

Ausführungsformen umfassen ferner einen Server eines Ausstellerdienstes zum Ausstellen einer digitalen Kopie eines ausgestellten digitalen Dokuments unter Verwendung eines pseudonymisierten digitalen Provisionierungstokens. Der der Server umfasst einen Prozessor, einen Speicher mit Programminstruktionen und eine Kommunikationsschnittstelle zur Kommunikation über ein Netzwerk.

Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert und einem Indikator. Der erste Hashwert ist unter Verwendung einer ersten Kombination eines Pseudonyms und eines dem ersten Datenelement zugeordneten ersten Salt-Werts erzeugt. Der Indikator zeigt an, dass es sich um einen Provisionierungstoken für eine Kopie des ausgestellten Dokuments handelt. Der erste Datensatz ist mit einem ersten Signaturschlüssel eines den Provisionierungstoken erzeugenden Ausstellerdienstes signiert.

Der Server besitzt Zugriff auf eine erste Datenbank, in der ein erster Datenbankeintrag mit einer ersten Zuordnung des ersten Salt-Werts zu dem Pseudonym gespeichert ist. Das Pseudonym dient als Datenbankzugriffschlüssel zum Identifizieren des in der ersten Datenbank gespeicherten ersten Datenbankeintrags.

Der Server besitzt ferner Zugriff auf eine zweite Datenbank, in der ein zweiter Datenbankeintrag mit Datenelementen des ausgestellten Dokuments gespeichert ist. Das Pseudonym dient ferner als Datenbankzugriffschlüssel zum Identifizieren des in der zweiten Datenbank gespeicherten zweiten Datenbankeintrags. Beispielsweise umfasst der zweite Datenbankeintrag das Pseudonym.

Ein Ausführen der Programminstruktionen durch den Prozessor veranlasst den Prozessor dazu, den Server zu steuern zum:
∘ Empfangen einer Ausstellungsanfrage zum Ausstellen der auszustellenden Kopie des ausgestellten Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen Pseudonyms,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen der Kopie des Dokuments, wobei das Ausstellen der Kopie des Dokuments umfasst:
   - Auslesen des zweiten Datenbankeintrags aus der zweiten Datenbank unter Verwendung des empfangenen Pseudonyms,
   - Erstellen eines zweiten Datensatzes, welcher ein oder mehrere der Datenelemente des zweiten Datenbankeintrags, welche dem auszustellenden Dokument zugeordnet sind, in Klartext umfasst, wobei der zweite Datensatz ferner einen Indikator in Klartext umfasst, welcher anzeigt, dass es sich um einen Datensatz einer Kopie des ausgestellten Dokuments handelt,
   - Senden einer Schlüsselabfrage an das Endgerät,
   - Empfangen eines dem Endgerät zugeordneten öffentlichen kryptographischen Schlüssel,
   - Hinzufügen des empfangenen öffentlichen kryptographischen Schlüssels des Endgeräts zu dem zweiten Datensatz zum kryptographischen Binden des zweiten Datensatzes an das Endgerät,
   - Signieren des zweiten Datensatzes mit einem dem Ausstellerdienst zugeordneten zweiten kryptographischen Signaturschlüssel,
   - Bereitstellen der ausgestellten Kopie des Dokuments in Form des signierten zweiten Datensatzes,
   - Speichern einer Zuordnung des empfangenen öffentlichen kryptographischen Schlüssels des Endgeräts zu der ausgestellten Kopie des Dokuments in dem ersten Datenbankeintrag in der ersten Datenbank,
∘ Senden der ausgestellten Kopie des Dokuments an das Endgerät.

Beispielsweise ist der Server dazu konfiguriert jede der zuvor beschrieben Ausführungsformen des Verfahrens zum Ausstellen der Kopie des digitalen Dokuments auszuführen.

Ausführungsformen umfassen ferner ein System umfassend einen Server eines Ausstellerdienstes nach einer der vorangehenden Ausführungsformen sowie einen weiteren Server, welcher den Zugriff auf die zweite Datenbank bereitgestellt. Der zweite Server umfasst einen weiteren Prozessor, einen weiteren Speicher mit weiteren Programminstruktionen und eine weitere Kommunikationsschnittstelle zur Kommunikation über das Netzwerk.

In der zweiten Datenbank ist der zweite Datenbankeintrag gespeichert, welcher von dem auszustellenden Dokument zu umfassende Daten umfasst. Das Pseudonym dient ferner als Datenbankzugriffschlüssel zum Identifizieren des in der zweiten Datenbank gespeicherten zweiten Datenbankeintrags.

Ein Ausführen der weiteren Programminstruktionen durch den weiteren Prozessor veranlasst den weiteren Prozessor dazu, den weiteren Server zum Senden des zweiten Datenbankeintrags an den Server zu senden in Antwort auf ein Empfangen einer Abfrage des zweiten Datenbankeintrags durch den Server.

Das Abfragen des zweiten Datenbankeintrags umfasst ein Senden einer Abfrage von dem Server an den weiteren Server und einen Empfang des von dem weiteren Server in Antwort auf die Abfrage gesendeten zweiten Datenbankeintrags durch den Server.

Beispielsweise ist das System dazu konfiguriert jede der zuvor beschrieben Ausführungsformen des Verfahrens zum Ausstellen der digitalen Kopie des Dokuments auszuführen.

Beispielsweise umfasst das System ferner das Endgerät.

Ausführungsformen umfassen ferner eine digitale Kopie eines ausgestellten Dokuments. Die Kopie umfasst einen Datensatz mit Datenelementen und einen Indikator in Klartext. Der Indikator zeigt an, dass es sich um eine Kopie des ausgestellten Dokuments handelt. Der Datensatz ist mit einem Signaturschlüssel eines die Kopie des Dokuments ausstellenden Ausstellerdienstes signiert. Der Datensatz umfasst ferner einen öffentlichen kryptographischen Schlüssel eines Endgeräts zum kryptographischen Binden der Kopie des Dokuments an das Endgerät. Beispielsweise umfasst der Datensatz das Pseudonym.

Beispielsweise handelt es sich bei der digitalen Kopie des Dokuments um ein Erzeugnis eines der zuvor beschriebenen Ausführungsformen des Verfahrens zum Ausstellen der Kopie des Dokuments.

Beispielsweise umfasst der signierte Datensatz ferner eine Angabe einer Gültigkeitsdauer der Kopie des Dokuments im Klartext.

Beispielsweise umfasst der signierte Datensatz ferner eine Angabe eines Zeitpunkts der Ausstellung der Kopie des Dokuments in Klartext.

Beispielsweise handelt es sich bei der Kopie um eine Kopie eines Fahrzeugdokuments, beispielsweise um eine Kopie einer elektronischen Zulassungsbescheinigung Teil I.

Es versteht sich, dass eine oder mehrere der vorgenannten Ausführungsformen miteinander kombiniert werden können, solange sich die Ausführungsformen nicht gegenseitig ausschließen.

### KURZE BESCHREIBUNG DER ZEICHNUNGEN

Im Folgenden werden Beispiele anhand der Zeichnungen näher erläutert. Es zeigen:
Figur 1 ein Flussdiagramm eines exemplarischen Verfahrens zum Erstellen eines Provisionierungstokens für ein digitales Dokument,
Figur 2 ein Flussdiagramm eines exemplarischen Verfahrens zum Ausstellen eines digitalen Dokuments,
Figur 3 ein Flussdiagramm eines exemplarischen Verfahrens zum Aktualisieren eines digitalen Dokuments,
Figur 4 ein Flussdiagramm eines exemplarischen Verfahrens zum Erstellen eines Provisionierungstokens für eine Kopie eines digitalen Dokuments,
Figur 5 ein Flussdiagramm eines exemplarischen Verfahrens zum Ausstellen einer Kopie eines digitalen Dokuments,
Figur 6 ein Flussdiagramm eines exemplarischen Verfahrens zum Aktualisieren einer Kopie eines digitalen Dokuments,
Figur 7 ein Flussdiagramm eines exemplarischen Verfahrens zum Revozieren einer Kopie eines digitalen Dokuments,
Figur 8 ein Flussdiagramm eines exemplarischen Verfahrens zum Erstellen eines Provisionierungstokens für ein digitales Dokument,
Figur 9 ein Flussdiagramm eines exemplarischen Verfahrens zum Erstellen eines Provisionierungstokens für ein digitales Dokument,
Figur 10 ein Flussdiagramm eines exemplarischen Verfahrens zum Erstellen eines Provisionierungstokens für eine Kopie eines digitalen Dokuments,
Figur 11 ein Flussdiagramm eines exemplarischen Verfahrens zum Erstellen eines Provisionierungstokens für ein digitales Dokument,
Figur 12 ein Flussdiagramm eines exemplarischen Verfahrens zum Ausstellen eines digitalen Dokuments,
Figur 13 ein Flussdiagramm eines exemplarischen Verfahrens zum Ausstellen einer Kopie eines digitalen Dokuments,
Figur 14 ein Flussdiagramm eines exemplarischen Verfahrens zum Aktualisieren eines digitalen Dokuments,
Figur 15 ein Flussdiagramm eines exemplarischen Verfahrens zum Aktualisieren einer Kopie eines digitalen Dokuments,
Figur 16 ein Flussdiagramm eines exemplarischen Verfahrens zum Revozieren eines Provisionierungstokens oder einer Kopie eines digitalen Dokuments,
Figur 17 ein exemplarisches System zum Erstellen eines Provisionierungstokens für ein digitales Dokument,
Figur 18 ein exemplarisches System zum Ausstellen eines digitalen Dokuments,
Figur 19 ein exemplarisches System zum Erstellen eines Provisionierungstokens für eine Kopie eines digitalen Dokuments,
Figur 20 ein exemplarisches System zum Ausstellen einer Kopie eines digitalen Dokuments,
Figur 21 ein exemplarisches Provisionierungstoken für ein digitales Dokument,
Figur 22 ein exemplarisches digitales Dokument,
Figur 23 ein exemplarisches Provisionierungstoken für eine Kopie eines digitalen Dokuments und
Figur 24 eine exemplarische Kopie eines digitalen Dokuments.

### DETAILLIERTE BESCHREIBUNG

Im Folgenden werden einander ähnliche Elemente mit den gleichen Bezugszeichen gekennzeichnet.

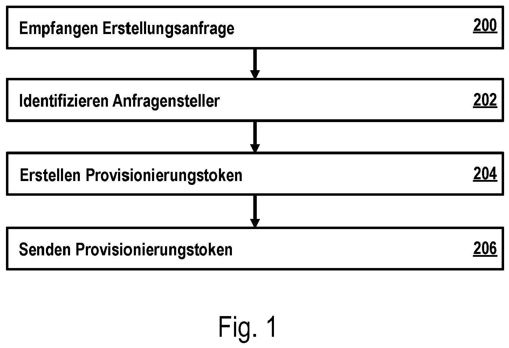

Figur 1 zeigt ein exemplarisches Verfahren zum pseudonymisierten Erzeugen eines digitalen Provisionierungstokens durch einen Ausstellerdienst. Der Provisionierungstoken weist eine Berechtigung zum Empfang des auszustellenden digitalen Dokuments mit einem Endgerät und zur kryptographischen Kopplung an das Endgerät im Zuge der Ausstellung nach.

In Block 200 empfängt der erste Server des Ausstellerdienstes eine Erstellungsanfrage zum Erstellen des Provisionierungstokens. In Block 202 wird der Anfragensteller unter Verwendung empfangener Identifikationsdaten des Anfragenstellers identifiziert. In Block 204 wird das angefragte Provisionierungstokens in Form eines signierten Datensatzes erstellt. Das Erstellen des signierten Datensatzes umfasst ein Empfangen eines dem auszustellenden Dokument zugeordneten ersten Datenelements, welches das auszustellende Dokument identifiziert. Das erste Datenelement wird unter Verwendung eines in einer zweiten Datenbank gespeicherten zweiten Datenbankeintrags, welcher von dem auszustellenden Dokument zu umfassende Daten umfasst, geprüft. Es wird auf eine erfolgreiche Prüfung hin ein erster Salt-Wert erzeugt. Ferner wird ein Pseudonym bereitgestellt, welches als Datenbankzugriffschlüssel zum Identifizieren eines in der ersten Datenbank gespeicherten ersten Datenbankeintrags dient. Der erste Salt-Wert wird dem Pseudonym zugeordnet. Dabei umfasst das Zuordnen ein Speichern des ersten Salt-Werts in dem ersten Datenbankeintrag in der ersten Datenbank. Es wird ein erster Hashwert unter Verwendung einer ersten Kombination des Pseudonyms und des ersten Salt-Werts berechnet. Es wird der Datensatz erstellt, welcher den ersten Hashwert umfasst. Der Datensatz wird mit einem dem Ausstellerdienst zugeordneten kryptographischen Signaturschlüssel signiert. Der angefragte Provisionierungstokens in Form des signierten Datensatzes bereitgestellt. In Block 206 wird der Provisionierungstoken an den identifizierten Anfragensteller gesendet.

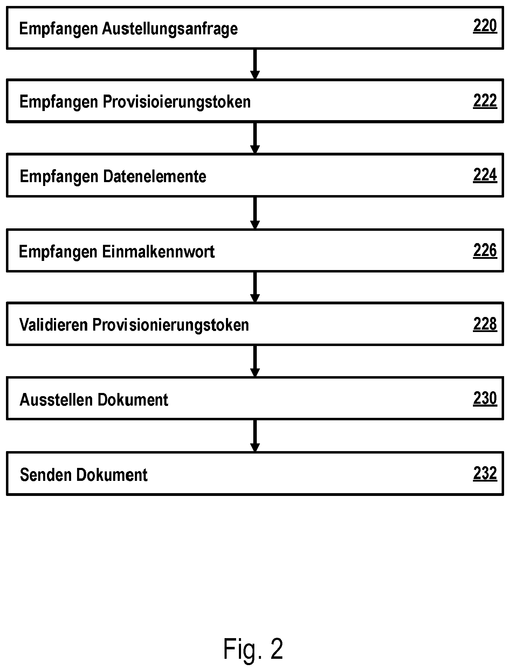

Figur 2 zeigt ein exemplarisches Verfahren zum Ausstellen eines digitalen Dokuments unter Verwendung eines pseudonymisierten digitalen Provisionierungstokens, wie er etwa unter Verwendung des Verfahrens nach Figur 1 erstellt werden kann. Der Provisionierungstoken weist eine Berechtigung zum Empfang des auszustellenden digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert, welcher unter Verwendung einer ersten Kombination eines Pseudonyms und eines dem Pseudonym zugeordneten ersten Salt-Werts erzeugt ist. Beispielsweise kann der Datensatz noch weitere Hashwerte von Datenelementen umfassen, welche unter Verwendung weiterer Salt-Werte erzeugt sind. Zudem kann der Datensatz beispielsweise einen Hashwert eines Einmalkennworts umfassen, welcher beispielsweise ebenfalls unter Verwendung eines Salt-Werts erzeugt ist. Der erste Datensatz ist mit einem ersten Signaturschlüssel eines den Provisionierungstoken erzeugenden Ausstellerdienstes signiert.

In einer ersten Datenbank ist ein erster Datenbankeintrag mit einer ersten Zuordnung des ersten Salt-Werts zu dem Pseudonym gespeichert. Das Pseudonym dient als Datenbankzugriffschlüssel zum Identifizieren des in der ersten Datenbank gespeicherten ersten Datenbankeintrags. Zudem können in dem ersten Datenbankeintrag Zuordnungen weiterer Salt-Werte, etwa zu einem Einmalkennwort, gespeichert sein. In einer zweiten Datenbank ist ein zweiter Datenbankeintrag mit Datenelementen des auszustellenden Dokuments gespeichert. Das Pseudonym dient ferner als Datenbankzugriffschlüssel zum Identifizieren des in der zweiten Datenbank gespeicherten zweiten Datenbankeintrags. Beispielsweise umfasst der zweite Datenbankeintrag das Pseudonym.

In Block 220 wird durch einen ersten Server des Ausstellerdienstes eine Ausstellungsanfrage zum Ausstellen des auszustellenden Dokuments von einem Endgerät eines Anfragenstellers empfangen. In Block 222 wird der Provisionierungstoken von dem Endgerät empfangen. In Block 224 werden Datenelemente, deren Hashwerte in dem Provisionierungstoken gespeichert sind, empfangen. In Block 226 wird beispielsweise ferner ein Einmalkennwort empfangen. In Block 228 wird der Provisionierungstoken beispielsweise unter Verwendung der empfangenen Datenelemente und des Einmalkennworts validiert.

Das Validieren des Provisionierungstokens umfasst ein Validieren der Signatur des Provisionierungstokens unter Verwendung eines ersten Signaturprüfschlüssels des Ausstellerdienstes. Unter Verwendung des Pseudonyms wird der erste Datenbankeintrag aus der ersten Datenbank ausgelesen. Die in dem Provisionierungstoken eingetragenen Hashwerte, beispielsweise Hashwerte von Datenelementen und/oder des Einmalkennworts, werden unter Verwendung des ausgelesenen ersten Datenbankeintrags geprüft. Hierzu werden die in dem ersten Datenbankeintrag gespeicherten Salt-Werte verwendet. Auf eine erfolgreiche Prüfung hin, werden zumindest die in dem ersten Datenbankeintrag gespeicherten Salt-Werte in der ersten Datenbank gelöscht. Beispielsweise werden alle dem entsprechenden Provisionierungstoken zugeordneten Daten in dem ersten Datenbankeintrag gelöscht.

In Block 230 wird das Dokument ausgestellt. Das Ausstellen des Dokuments umfasst beispielsweise ein Auslesen des zweiten Datenbankeintrags mit den Datenelementen des auszustellenden Dokuments aus der zweiten Datenbank unter Verwendung des empfangenen Pseudonyms. Ein zweiter Datensatz wird erstellt, welcher ein oder mehrere der Datenelemente des zweiten Datenbankeintrags, welche dem auszustellenden Dokument zugeordnet sind, in Klartext umfasst. Eine Schlüsselabfrage wird an das Endgerät des Anfragenstellers gesendet. Ein dem Endgerät zugeordneter öffentlicher kryptographischer Schlüssel wird empfangen. Der empfangene öffentliche kryptographische Schlüssel des Endgeräts wird zu dem zweiten Datensatz hinzugefügt zum kryptographischen Binden des zweiten Datensatzes an das Endgerät. Der zweite Datensatz wird mit einem dem Ausstellerdienst zugeordneten zweiten kryptographischen Signaturschlüssel signiert. Das ausgestellte Dokument wird in Form des signierten zweiten Datensatzes gespeichert. Zudem wird eine Zuordnung des empfangenen öffentlichen kryptographischen Schlüssels des Endgeräts zu dem ausgestellten Dokument in dem ersten Datenbankeintrag in der ersten Datenbank gespeichert. In Block 232 wird schließlich das in Block 230 ausgestellte Dokument an das Endgerät gesendet.

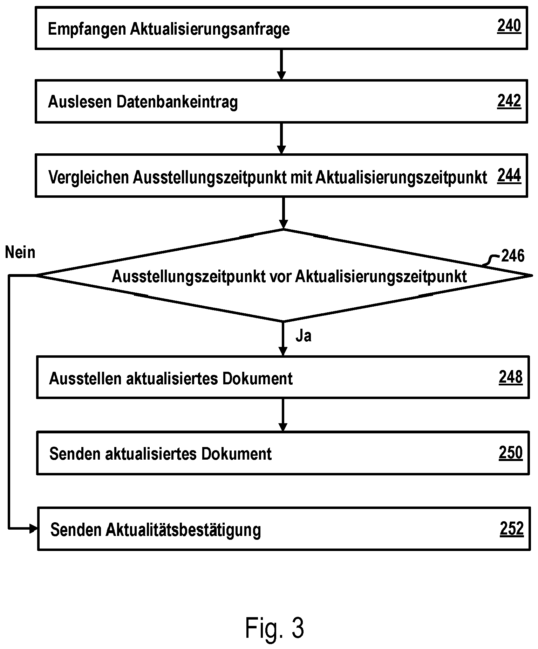

Figur 3 zeigt ein exemplarisches Verfahren zum Aktualisieren eines ausgestellten Dokuments. Das Dokument umfasst eine Angabe eines Zeitpunkts einer Ausstellung des Dokuments. In Block 240 umfasst das Aktualisieren ein Empfangen einer Aktualisierungsanfrage zum Aktualisieren des ausgestellten Dokuments von einem Endgerät eines Anfragenstellers, wobei die Aktualisierungsanfrage das ausgestellte Dokument umfasst. In Block 242 wird der zweite Datenbankeintrag aus der zweiten Datenbank ausgelesen unter Verwendung eines Datenelements oder des Pseudonyms des empfangenen Dokuments. Das entsprechende Datenelement wird beispielsweise zum Bereitstellen eines Datenbankzugriffsschlüssels zum Zugreifen auf den zweiten Datenbankeintrag verwendet. Der zweite Datenbankeintrag umfasst eine Angabe eines Zeitpunkts einer letzten Aktualisierung des zweiten Datenbankeintrags. In Block 244 wird die Angabe des Zeitpunkts der Ausstellung des empfangenen Dokuments mit der Angabe des Zeitpunkts der letzten Aktualisierung des zweiten Datenbankeintrags verglichen. In Block 246 wird geprüft, ob das Ausstellen des Dokuments vor einer letzten Aktualisierung des zweiten Datenbankeintrags erfolgt ist. Falls dies nicht der Fall, wird das Verfahren mit Block 252 fortgesetzt, in welchem eine Aktualitätsbestätigung, d.h. eine Information, an den Anfragensteller gesendet, welche angibt, dass es sich bei dem ausgestellten Dokument um ein aktuelles Dokument mit aktuellen Datenelementen handelt.

Falls das Ausstellen des Dokuments nach der letzten Aktualisierung des zweiten Datenbankeintrags erfolgt ist, wird das Verfahren mit Block 248 fortgesetzt. In Block 248 wird ein aktualisiertes Dokument ausgestellt. Das Ausstellen des aktualisierten Dokuments umfasst ein Erstellen eines Datensatzes, welcher ein oder mehrere der Datenelemente des ausgelesenen zweiten Datenbankeintrags, welche dem auszustellenden Dokument zugeordnet sind, in Klartext umfasst. Beispielsweise umfasst der Datensatz zudem das Pseudonym in Klartext. Es wird der öffentliche kryptographische Schlüssel des Endgeräts aus dem empfangenen Dokument zu dem Datensatz zum kryptographischen Binden des Datensatzes an das Endgerät hinzugefügt. Der resultierende Datensatz wird mit dem zweiten kryptographischen Signaturschlüssel des Ausstellerdienstes signiert. Das aktualisierte Dokument wird in Form des signierten Datensatzes bereitgestellt und in Block 250 an das Endgerät gesendet.

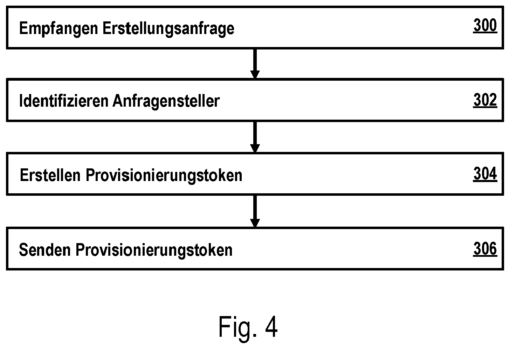

Figur 4 zeigt ein exemplarisches Verfahren zum pseudonymisierten Erzeugen eines digitalen Provisionierungstokens durch einen Ausstellerdienst. Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach. In Block 300 wird durch einen ersten Server des Ausstellerdienstes eine Erstellungsanfrage zum Erstellen des Provisionierungstokens empfangen. In Block 302 wird der Anfragensteller unter Verwendung des ausgestellten digitalen Dokuments identifiziert. Beispielsweise sendet der Anfragensteller mit der Anfrage das entsprechende Dokument und signiert die Anfrage und/oder das gesendete Dokument. Die entsprechende Signatur kann unter Verwendung des von dem Dokument umfasst öffentlichen kryptographischen Schlüssels validiert werden. Durch die entsprechende Validierung wird beispielsweise auch der Anfragensteller identifiziert.

In Block 304 wird das angefragte Provisionierungstoken in Form eines signierten Datensatzes erstellt. Das Erstellen umfasst ein Empfangen eines Pseudonyms, welches als Datenbankzugriffschlüssel zum Identifizieren eines in der einer zweiten Datenbank gespeicherten zweiten Datenbankeintrags dient, welcher von dem auszustellenden Dokument zu umfassende Daten umfasst. Das Pseudonym wird unter Verwendung des in der zweiten Datenbank gespeicherten zweiten Datenbankeintrags geprüft. Beispielsweise können ferner zusätzlich ein oder mehr Datenelemente des Dokuments geprüft werden. Ein erster Salt-Wert wird erzeugt, welcher dem Pseudonym zugeordnet wird. Das Zuordnen umfasst ein Speichern einer ersten Zuordnung des ersten Salt-Werts zu dem Pseudonym in einem ersten Datenbankeintrag in einer ersten Datenbank. Es wird ein erster Hashwert unter Verwendung einer ersten Kombination des Pseudonyms und des ersten Salt-Werts berechnet. Es wird ein Datensatz erstellt, welcher den ersten Hashwert sowie einen Indikator umfasst. Der Indikator zeigt an, dass es sich um einen Provisionierungstoken für eine Kopie des ausgestellten Dokuments handelt. Beispielsweise umfasst der Datensatz zusätzlich das Pseudonym in Klartext. Beispielsweise umfasst der Datensatz das Pseudonym nicht zusätzlich in Klartext. Der Datensatz wird mit einem dem Ausstellerdienst zugeordneten kryptographischen Signaturschlüssel signiert. Das angefragte Provisionierungstoken wird in Form des signierten Datensatzes bereitgestellt. In Block 306 wird der Provisionierungstoken schließlich an den identifizierten Anfragensteller gesendet.

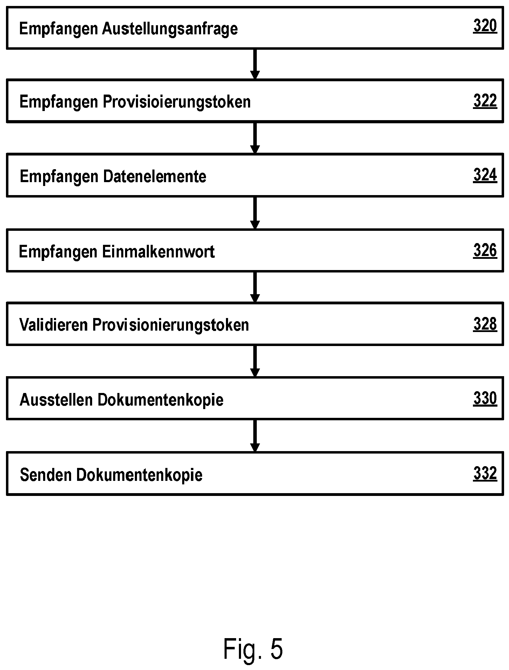

Figur 5 zeigt ein exemplarisches Verfahren zum Ausstellen einer digitalen Kopie eines ausgestellten digitalen Dokuments unter Verwendung eines pseudonymisierten digitalen Provisionierungstokens, wie er etwa unter Verwendung des Verfahrens nach Figur 4 erstellt werden kann. Der Provisionierungstoken weist eine Berechtigung zum Empfang der auszustellenden digitalen Kopie eines ausgestellten digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert und einem Indikator. Der erste Hashwert ist unter Verwendung einer ersten Kombination eines Pseudonyms und eines dem Pseudonym zugeordneten ersten Salt-Werts erzeugt. Der Indikator zeigt an, dass es sich um einen Provisionierungstoken für eine Kopie des ausgestellten Dokuments handelt. Beispielsweise kann der Datensatz noch weitere Hashwerte von Datenelementen umfassen, welche unter Verwendung weiterer Salt-Werte erzeugt sind. Zudem kann der Datensatz beispielsweise einen Hashwert eines Einmalkennworts umfassen, welcher beispielsweise ebenfalls unter Verwendung eines Salt-Werts erzeugt ist. Der erste Datensatz ist mit einem ersten Signaturschlüssel eines den Provisionierungstoken erzeugenden Ausstellerdienstes signiert ist.

In einer ersten Datenbank ist ein erster Datenbankeintrag mit einer ersten Zuordnung des ersten Salt-Werts zu dem Pseudonym gespeichert. Das Pseudonym dient als Datenbankzugriffschlüssel zum Identifizieren des in der ersten Datenbank gespeicherten ersten Datenbankeintrags. Zudem können in dem ersten Datenbankeintrag Zuordnungen weiterer Salt-Werte, beispielsweise zu einem Einmalkennwort gespeichert sein. In einer zweiten Datenbank ist ein zweiter Datenbankeintrag mit Datenelementen des ausgestellten Dokuments gespeichert. Das Pseudonym dient ferner als Datenbankzugriffschlüssel zum Identifizieren des in der zweiten Datenbank gespeicherten zweiten Datenbankeintrags. Beispielsweise umfasst der zweite Datenbankeintrag das Pseudonym.

In Block 320 wird durch einen ersten Server des Ausstellerdienstes eine Ausstellungsanfrage zum Ausstellen der auszustellenden Kopie des ausgestellten Dokuments von einem Endgerät eines Anfragenstellers empfangen. In Block 222 wird der Provisionierungstoken von dem Endgerät empfangen. In Block 324 werden Datenelemente, deren Hashwerte in dem Provisionierungstoken gespeichert sind, empfangen. In Block 326 wird beispielsweise ferner ein Einmalkennwort empfangen. In Block 328 wird der Provisionierungstoken beispielsweise unter Verwendung der empfangenen Datenelemente und des Einmalkennworts validiert.

Das Validieren des Provisionierungstokens umfasst ein Validieren der Signatur des Provisionierungstokens unter Verwendung eines ersten Signaturprüfschlüssels des Ausstellerdienstes. Unter Verwendung des Pseudonyms wird der erste Datenbankeintrag aus der ersten Datenbank ausgelesen. Die in dem Provisionierungstoken eingetragenen Hashwerte, beispielsweise Hashwerte des Pseudonyms und/oder des Einmalkennworts, werden unter Verwendung des ausgelesenen ersten Datenbankeintrags geprüft. Hierzu werden die in dem ersten Datenbankeintrag gespeicherten Salt-Werte verwendet. Auf eine erfolgreiche Prüfung hin, werden zumindest die in dem ersten Datenbankeintrag gespeicherten Salt-Werte in der ersten Datenbank gelöscht. Beispielsweise werden alle dem entsprechenden Provisionierungstoken zugeordneten Daten in dem ersten Datenbankeintrag gelöscht, sodass dieser beispielsweise nur noch dem ausgestellten Dokument und/oder der Kopie des Dokuments zugeordnete Daten umfasst.

In Block 330 wird die Kopie des Dokuments ausgestellt. Das Ausstellen der Kopie des Dokuments umfasst beispielsweise ein Auslesen des zweiten Datenbankeintrags aus der zweiten Datenbank unter Verwendung des Pseudonyms. Ein zweiter Datensatz wird erstellt, welcher ein oder mehrere der Datenelemente des zweiten Datenbankeintrags, welche dem auszustellenden Dokument zugeordnet sind, in Klartext umfasst. Der zweite Datensatz umfasst ferner einen Indikator in Klartext, welcher anzeigt, dass es sich um einen Datensatz einer Kopie des ausgestellten Dokuments handelt. Beispielsweise umfasst der zweite Datensatz zudem das Pseudonym. Eine Schlüsselabfrage wird an das Endgerät des Anfragenstellers gesendet. Ein dem Endgerät zugeordneter öffentlicher kryptographischer Schlüssel wird empfangen. Der empfangene öffentliche kryptographische Schlüssel des Endgeräts wird zu dem zweiten Datensatz hinzugefügt zum kryptographischen Binden des zweiten Datensatzes an das Endgerät. Der zweite Datensatz wird mit einem dem Ausstellerdienst zugeordneten zweiten kryptographischen Signaturschlüssel signiert. Die ausgestellte Kopie des Dokuments wird in Form des signierten zweiten Datensatzes bereitgestellt. Zudem wird eine Zuordnung des empfangenen öffentlichen kryptographischen Schlüssels des Endgeräts zu der ausgestellten Kopie des Dokuments in dem ersten Datenbankeintrag in der ersten Datenbank, beispielsweise in dem ersten Datenbankeintrag, gespeichert. In Block 332 wird schließlich die in Block 330 ausgestellte Kopie des Dokuments an das Endgerät gesendet.

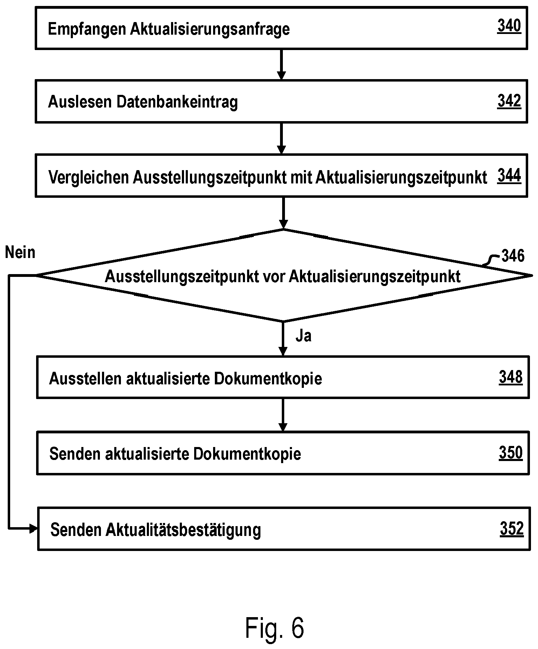

Figur 6 zeigt ein exemplarisches Verfahren zum Aktualisieren einer ausgestellten Dokumentenkopie. Die Dokumentenkopie umfasst eine Angabe eines Zeitpunkts einer Ausstellung der Dokumentenkopie. In Block 340 umfasst das Aktualisieren ein Empfangen einer Aktualisierungsanfrage zum Aktualisieren der ausgestellten Dokumentenkopie von einem Endgerät eines Anfragenstellers, wobei die Aktualisierungsanfrage die ausgestellte Dokumentenkopie umfasst. In Block 342 wird der zweite Datenbankeintrag aus der zweiten Datenbank ausgelesen unter Verwendung eines Datenelements der empfangenen Dokumentenkopie, beispielsweise des Pseudonyms. Das entsprechende Datenelement wird beispielsweise zum Bereitstellen eines Datenbankzugriffsschlüssels zum Zugreifen auf den zweiten Datenbankeintrag verwendet. Der zweite Datenbankeintrag umfasst eine Angabe eines Zeitpunkts einer letzten Aktualisierung des zweiten Datenbankeintrags. In Block 344 wird die Angabe des Zeitpunkts der Ausstellung der empfangenen Dokumentenkopie mit der Angabe des Zeitpunkts der letzten Aktualisierung des zweiten Datenbankeintrags verglichen. In Block 346 wird geprüft, ob das Ausstellen der Dokumentenkopie vor einer letzten Aktualisierung des zweiten Datenbankeintrags erfolgt ist. Falls dies nicht der Fall, wird das Verfahren mit Block 352 fortgesetzt, in welchem eine Aktualitätsbestätigung, d.h. eine Information, an den Anfragensteller gesendet, welche angibt, dass es sich bei der ausgestellten Dokumentenkopie um eine aktuelle Dokumentenkopie mit aktuellen Datenelementen handelt.

Falls das Ausstellen der Dokumentenkopie nach der letzten Aktualisierung des zweiten Datenbankeintrags erfolgt ist, wird das Verfahren mit Block 348 fortgesetzt. In Block 348 wird eine aktualisierte Dokumentenkopie ausgestellt. Das Ausstellen der aktualisierten Dokumentenkopie umfasst ein Erstellen eines Datensatzes, welcher ein oder mehrere der Datenelemente des ausgelesenen zweiten Datenbankeintrags, welche der auszustellenden Dokumentenkopie zugeordnet sind, in Klartext umfasst. Beispielsweise umfasst der Datensatz zudem das Pseudonym in Klartext. Der Datensatz umfasst ferner einen Indikator in Klartext, welcher anzeigt, dass es sich um einen Datensatz einer Kopie des ausgestellten Dokuments handelt. Es wird der öffentliche kryptographische Schlüssel des Endgeräts aus der empfangenen Dokumentenkopie zu dem Datensatz zum kryptographischen Binden des Datensatzes an das Endgerät hinzugefügt. Der resultierende Datensatz wird mit dem zweiten kryptographischen Signaturschlüssel des Ausstellerdienstes signiert. Die aktualisierte Dokumentenkopie wird in Form des signierten Datensatzes bereitgestellt und in Block 350 an das Endgerät gesendet.

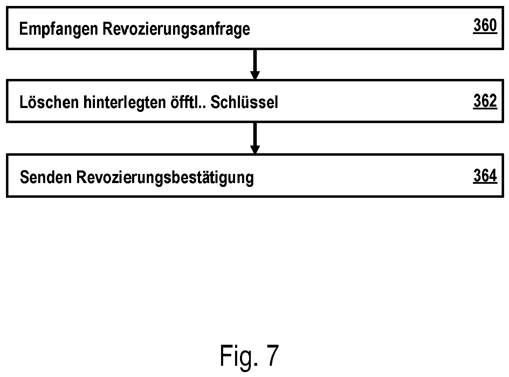

Figur 7 zeigt ein exemplarisches Verfahren zum Revozieren der in Figur 5 ausgestellten Kopie des Dokuments. In Block 360 empfängt der Server des Ausstellerdienstes eine Revozierungsanfrage zum Revozieren der ausgestellten Kopie des Dokuments von einem an das ausgestellte Dokument kryptographisch gebundenen Endgerät. Beispielsweise umfasst die Revozierungsanfrage das ausgestellte Dokument. Das empfangene ausgestellte Dokument ist mit einem dem an das ausgestellte Dokument kryptographisch gebundenen Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des an das ausgestellte Dokument kryptographisch gebundenen Endgeräts unter Verwendung des von dem empfangenen Dokument umfassten öffentlichen kryptographischen Schlüssels des an das ausgestellte Dokument kryptographisch gebundenen Endgeräts. In Block 362 wird zumindest eine Zuordnung des öffentlichen kryptographischen Schlüssels des an die zu revozierende Kopie des Dokuments kryptographisch gebundenen Endgeräts aus der ersten Datenbank gelöscht. Beispielsweise können alle der zu revozierenden Kopie des Dokuments zugeordneten Daten aus der ersten Datenbank gelöscht. In Block 364 senden der Server eine Revozierungsbestätigung an das Endgerät.

Auf analoge Weise kann auch ein Provisionierungstoken zum Empfang einer auszustellenden digitalen Kopie eines ausgestellten digitalen Dokuments revoziert werden, bevor die entsprechende Kopie ausgestellt wurde. In diesem Fall werden beispielsweise in der ersten Datenbank für den zu revozierenden Provisionierungstoken gespeicherte Salt-Werte gelöscht. Beispielsweise werden in der ersten Datenbank alle dem zu revozierenden Provisionierungstoken zugeordnete Daten gelöscht.

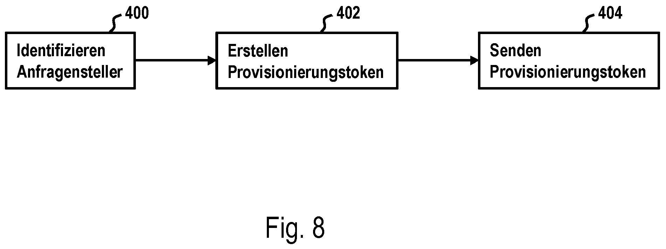

Figur 8 zeigt ein exemplarisches Verfahren zum Erstellen eines digitalen Provisionierungstokens für ein auszustellendes digitales Dokument. In Block 400 wird der Anfragenstellen, welcher eine Anfrage zum Erstellen des Provisionierungstokens stellt, identifiziert. In Block 402 wird das entsprechende Provisionierungstoken erstellt. In Block 404 wird der Provisionierungstoken an den Anfragensteller gesendet.

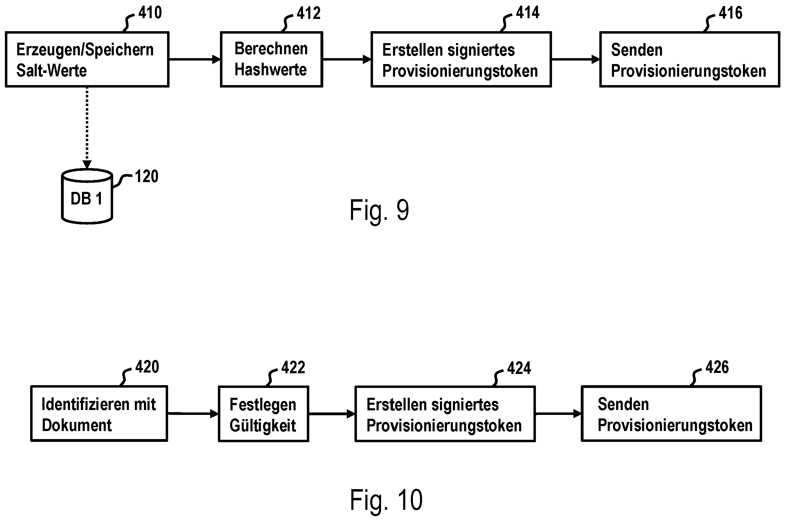

Figur 9 zeigt das Erstellen des Provisionierungstokens gemäß Block 402 der Figur 8 detaillierter. In Block 410 werden Salt-Werte erzeugt und einer ersten Datenbank 120 gespeichert. In Block 412 werden unter Verwendung der in Block 410 erzeugten ersten Salt-Werte Hashwerte zum Speichern in dem Provisionierungstoken berechnet. In Block 414 wird das signierte Provisionierungstoken unter Verwendung der Hashwerte aus Block 412 erstellt und in Block 416 an den Anfragensteller gesendet.

Figur 10 zeigt ein exemplarisches Verfahren zum Erstellen eines digitalen Provisionierungstokens für eine digitale Kopie eines digitalen Dokuments. In Block 420 wird ein Anfragensteller, welcher eine Anfrage zum Erstellen des entsprechenden Provisionierungstokens an den Server eines Ausstellerdienstes stellt, unter Verwendung des Dokuments, welches sich in seinem Besitz befindet, identifiziert. In Block 422 wird eine Gültigkeitsdauer für die mit dem Provisionierungstoken zu erlangende Dokumentenkopie definiert. In Block 424 wird das signierte Provisionierungstoken erstellt und in Block 426 an den Anfragensteller gesendet.

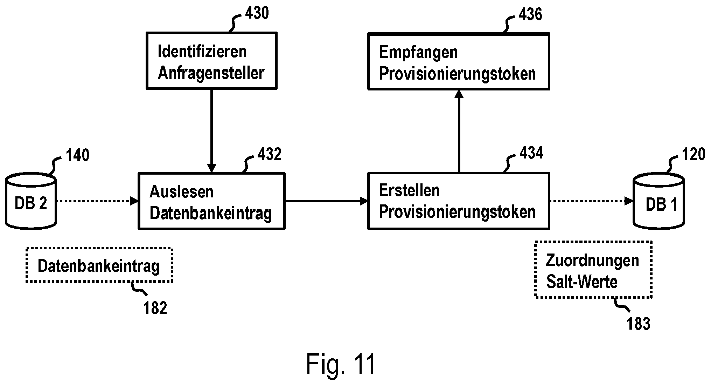

Figur 11 zeigt ein weiteres exemplarisches Verfahren zum Erstellen eines digitalen Provisionierungstokens für ein auszustellendes digitales Dokument. In Block 430 wird der Anfragenstellen, welcher eine Anfrage zum Erstellen des Provisionierungstokens stellt, identifiziert. In Block 432 wird ein Datenbankeintrag 182 mit Datenelementen des auszustellenden Dokuments aus der zweiten Datenbank 140 ausgelesen. Dieser Datenbankeintrag 182 wird zur Prüfung verwendet, dass Hashwerte, die in den Provisionierungstoken eingetragen werden, auf korrekten, existierenden Datenelementen beruhen. In Block 434 wird der Provisionierungstoken erstellt. Im Zuge der Erstellung des Provisionierungstokens werden Hashwerte unter Verwendung eines Pseudonyms sowie eines Salt-Werts erzeugt. Eine Zuordnung des Pseudonyms zu dem Salt-Wert wird in einer ersten Datenbank 120 gespeichert. In Block 436 wird der erstellte Provisionierungstoken an den Anfragensteller gesendet, welcher diesen empfängt.

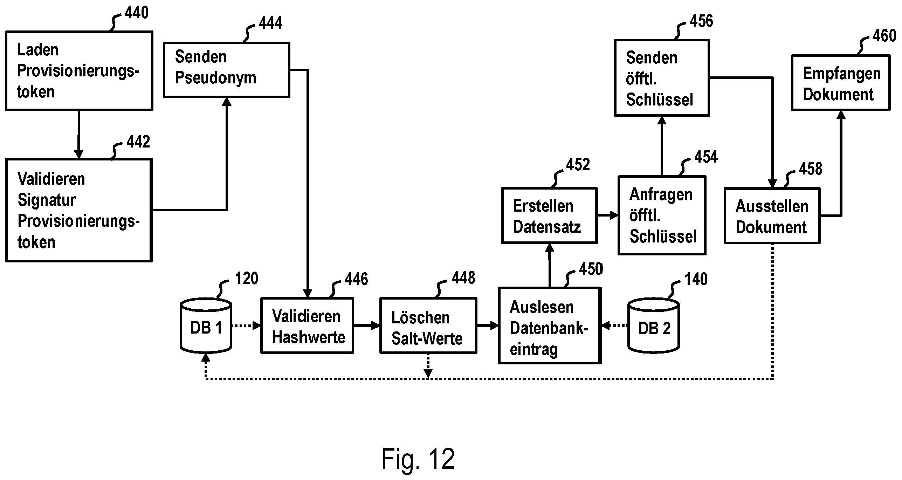

Figur 12 zeigt ein exemplarisches Verfahren zum Ausstellen eines digitalen Dokuments unter Verwendung eines Provisionierungstokens. In Block 440 wird der digitale Provisionierungstoken auf einem Endgerät, beispielsweise in einer App, geladen. In Block 442 wird der Provisionierungstoken an einen Server eines Ausstellerdienstes gesendet, welcher eine Signatur des Provisionierungstokens validiert. In Block 444 wird von dem Anfragensteller das Pseudonym zum Validieren der von dem Provisionierungstoken umfassten Hashwerten abgefragt. Beispielsweise wird dabei auch ein Einmalkennwort des Anfragenstellers abgefragt. Beispielsweise wird das Pseudonym auch von dem Provisionierungstoken selbst in Klartext bereitgestellt. In Block 446 werden die Hashwerte des Provisionierungstokens unter Verwendung der von der ersten Datenbank 120 bereitgestellten Salt-Werten validiert. Auf eine erfolgreiche Validierung hin, werden in Block 448 die in der ersten Datenbank 120 für den Provisionierungstoken gespeicherten Salt-Werte gelöscht, sodass der Provisionierungstoken nicht erneut zum Ausstellen des Dokuments verwendet werden kann. In Block 450 werden Datenelemente für das auszustellende Dokument aus einem Datenbankeintrag in einer zweiten Datenbank 140 ausgelesen, beispielsweise unter Verwendung des Pseudonyms. In Block 452 wird mit den von dem ausgelesenen Datenbankeintrag umfassten Datenelementen ein Datensatz für das Dokument erstellt. Beispielsweise umfasst der Datensatz zudem das Pseudonym. In Block 454 wird von dem Anfragensteller ein öffentlicher kryptographischer Schlüssel eines Endgeräts des Anfragenstellers angefragt, um das Dokument kryptographisch an das entsprechende Endgerät binden zu können. In Block 456 wird der angefragte öffentliche kryptographische Schlüssel des Endgeräts an den Server des Ausstellerdienstes gesendet, welcher in Block 458 das Dokument ausstellt. In Block 460 wird das ausgestellte, d.h., signierte Dokument mit den Datenelementen aus dem ausgelesenen Datenbankeintrag und dem öffentlichen kryptographischen Schlüssel des Endgeräts an den Anfragensteller gesendet, welcher das Dokument empfängt.

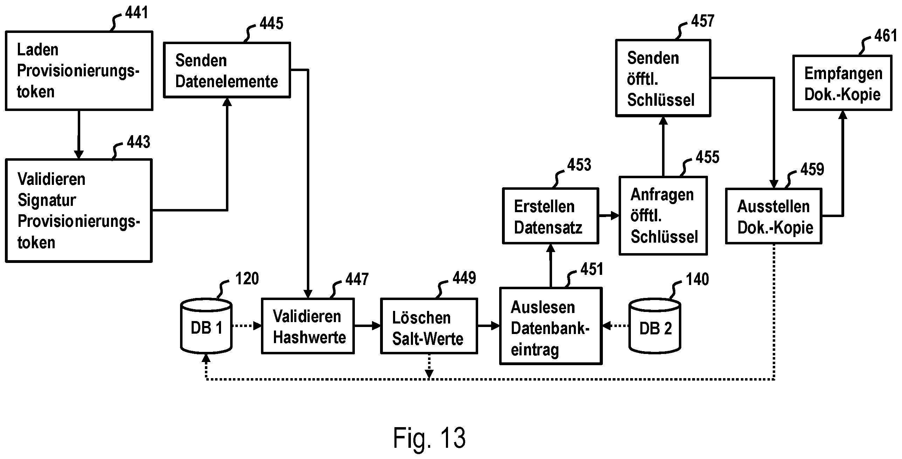

Figur 13 zeigt ein exemplarisches Verfahren zum Ausstellen einer digitalen Kopie eines Dokuments unter Verwendung eines Provisionierungstokens. In Block 441 wird der digitale Provisionierungstoken auf einem Endgerät, beispielsweise in einer App, geladen. In Block 443 wird der Provisionierungstoken an einen Server eines Ausstellerdienstes gesendet, welcher eine Signatur des Provisionierungstokens validiert. In Block 445 wird von dem Anfragensteller das Pseudonym zum Validieren der von dem Provisionierungstoken umfassten Hashwerten abgefragt. Beispielsweise wird dabei auch ein Einmalkennwort des Anfragenstellers abgefragt. Beispielsweise wird das Pseudonym auch von dem Provisionierungstoken selbst in Klartext bereitgestellt. In Block 447 werden die Hashwerte des Provisionierungstokens unter Verwendung der von der ersten Datenbank 120 bereitgestellten Salt-Werten validiert. Auf eine erfolgreiche Validierung hin, werden in Block 449 die in der ersten Datenbank 120 für den Provisionierungstoken gespeicherten Salt-Werte gelöscht, sodass der Provisionierungstoken nicht erneut zum Ausstellen einer Kopie des Dokuments verwendet werden kann. In Block 451 werden Datenelemente für die auszustellende Kopie des Dokuments aus einem Datenbankeintrag in einer zweiten Datenbank 140 ausgelesen, beispielsweise unter Verwendung des Pseudonyms. In Block 453 wird mit den von dem ausgelesenen Datenbankeintrag umfassten Datenelementen ein Datensatz für die Kopie des Dokuments erstellt. Beispielsweise umfasst der Datensatz zudem das Pseudonym. In Block 455 wird von dem Anfragensteller ein öffentlicher kryptographischer Schlüssel eines Endgeräts des Anfragenstellers angefragt, um die Kopie des Dokuments kryptographisch an das entsprechende Endgerät binden zu können. In Block 457 wird der angefragte öffentliche kryptographische Schlüssel des Endgeräts an den Server des Ausstellerdienstes gesendet, welcher in Block 459 die Kopie des Dokuments ausstellt. In Block 461 wird die ausgestellte, d.h., signierte Dokumentenkopie mit den Datenelementen aus dem ausgelesenen Datenbankeintrag und dem öffentlichen kryptographischen Schlüssel des Endgeräts an den Anfragensteller gesendet, welcher die Kopie empfängt.

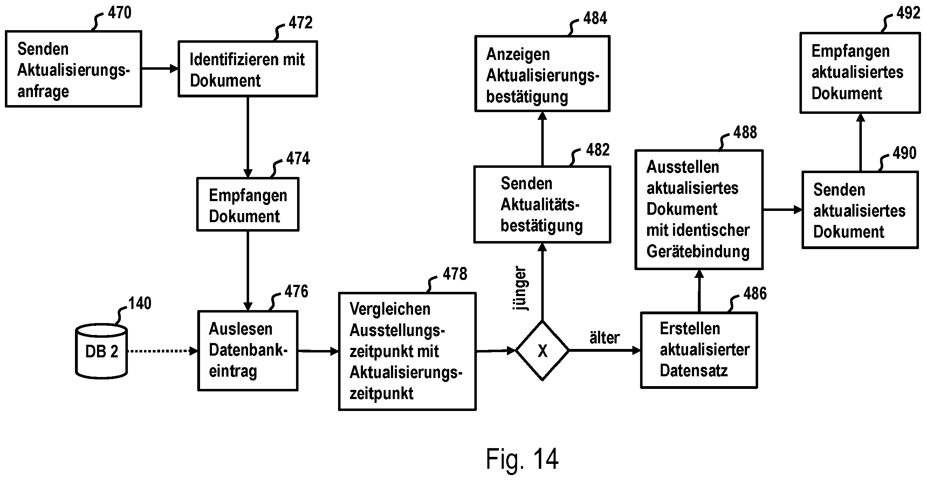

Figur 14 zeigt ein exemplarisches Verfahren zum Aktualisieren eines ausgestellten Dokuments. In Block 470 sendet ein Anfragensteller eine Aktualisierungsanfrage unter Verwendung eines Endgeräts, beispielsweise eines mobilen Endgeräts, und einer darauf laufenden App an einen Server eines Austellerdienstes. Hierbei identifiziert sich der Anfragensteller in Block 472 mit dem ausgestellten Dokument. Beispielsweise wird das entsprechende Dokument mit der Aktualisierungsanfrage mitgesendet. In Block 474 wird das Dokument von dem Server empfangen. In Block 476 wird ein Datenbankeintrag mit aktuellen Datenelementen für das Dokument aus der Datenbank 140 ausgelesen. In Block 478 wird ein Ausstellzeitpunkt des Dokuments mit einem Aktualisierungszeitpunkt einer letzten Aktualisierung des ausgelesenen Datenbankeintrags verglichen. Ist der Ausstellerzeitpunkt jünger, bedeutet diese, dass das Dokument auf dem aktuellsten Stand ist. In Block 482 wird eine Aktualitätsbestätigung an das Endgerät des Anfragenstellers gesendet, welche bestätigt, dass das Dokument auf dem aktuellsten Stand ist. In Block 484 wird die Aktualitätsbestätigung beispielsweise auf dem Endgerät des Anfragenstellers angezeigt.

Ist der Ausstellerzeitpunkt älter, bedeutet diese, dass das Dokument nicht auf dem aktuellsten Stand ist. In Block 486 wird ein aktualisierter Datensatz mit den aktuellen Datenelementen aus dem ausgelesenen Datenbankeintrag erstellt. In Block 488 wird ein aktualisiertes Dokument mit identischer Gerätebindung, wie das bisherige Dokument, d.h. mit demselben öffentlichen kryptographischen Schlüssel des Endgeräts des Anfragenstellers ausgestellt. In Block 490 wird das aktualisierte Dokument an den Anfragensteller gesendet, welcher das aktualisierte Dokument in Block 492 auf seinem Endgerät empfängt.

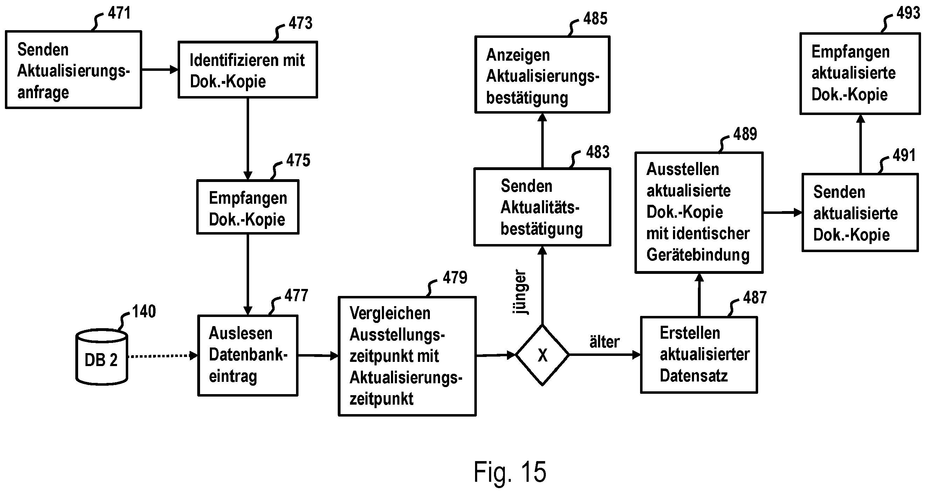

Figur 15 zeigt ein exemplarisches Verfahren zum Aktualisieren einer ausgestellten Kopie eines Dokuments. In Block 471 sendet ein Anfragensteller eine Aktualisierungsanfrage unter Verwendung eines Endgeräts, beispielsweise eines mobilen Endgeräts, und einer darauf laufenden App an einen Server eines Austellerdienstes. Hierbei identifiziert sich der Anfragensteller in Block 473 mit der ausgestellten Kopie des Dokuments. Beispielsweise wird die entsprechende Kopie mit der Aktualisierungsanfrage mitgesendet. In Block 475 wird die Dokumentenkopie von dem Server empfangen. In Block 477 wird ein Datenbankeintrag mit aktuellen Datenelementen für die Kopie des Dokuments aus der Datenbank 140 ausgelesen. In Block 479 wird ein Ausstellzeitpunkt der Dokumentenkopie mit einem Aktualisierungszeitpunkt einer letzten Aktualisierung des ausgelesenen Datenbankeintrags verglichen. Ist der Ausstellerzeitpunkt jünger, bedeutet diese, dass die Kopie auf dem aktuellsten Stand ist. In Block 483 wird eine Aktualitätsbestätigung an das Endgerät des Anfragenstellers gesendet, welche bestätigt, dass die Kopie des Dokuments auf dem aktuellsten Stand ist. In Block 485 wird die Aktualitätsbestätigung beispielsweise auf dem Endgerät des Anfragenstellers angezeigt.

Ist der Ausstellerzeitpunkt älter, bedeutet diese, dass die Kopie des Dokuments nicht auf dem aktuellsten Stand ist. In Block 487 wird ein aktualisierter Datensatz mit den aktuellen Datenelementen aus dem ausgelesenen Datenbankeintrag erstellt. In Block 489 wird eine aktualisierte Dokumentenkopie mit identischer Gerätebindung, wie die bisherige Dokumentenkopie, d.h. mit demselben öffentlichen kryptographischen Schlüssel des Endgeräts des Anfragenstellers ausgestellt. In Block 491 wird die aktualisierte Kopie des Dokuments an den Anfragensteller gesendet, welcher die aktualisierte Kopie des Dokuments in Block 493 auf seinem Endgerät empfängt.

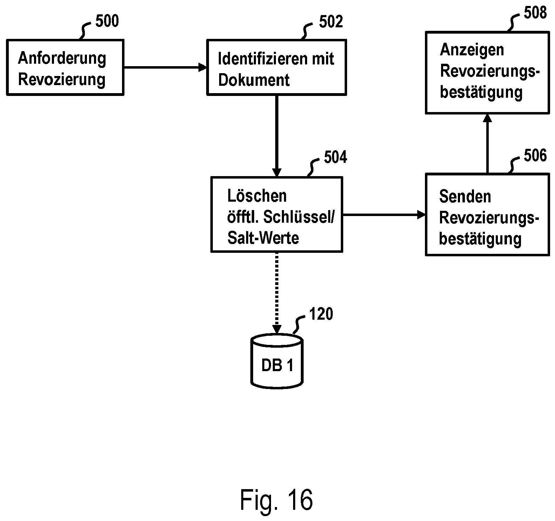

Figur 16 zeigt ein exemplarisches Verfahren zum Revozieren eines digitalen Provisionierungstokens zum Ausstellen einer digitalen Kopie eines digitalen Dokuments oder der ausgestellten Kopie des Dokuments. In Block 500 wird eine Revozierungsanforderung von einem Anfragensteller, welcher sich im Besitz des Dokuments befindet, gestellt. In Block 502 identifiziert sich der Anfragensteller mit dem Dokument, beispielsweise wird das Dokument mit der Revozierungsanforderung zusammen von einem Endgerät des Anfragenstellers an einen Server eines Ausstellerdienstes gesendet. In Block 504 werden in der ersten Datenbank 120 Daten gelöscht, welche dem Provisionierungstoken oder der ausgestellten Kopie des Dokuments zugeordnet sind. Im ersten Fall beispielsweise Salt-Werte, im zweiten Fall beispielsweise der öffentliche kryptographische Schlüssel des Endgeräts, an welches die Kopie kryptographisch gebunden ist. Durch das Löschen der entsprechenden Daten können der Provisionierungstoken bzw. die Dokumentenkopie nicht mehr validiert und somit nicht mehr verwendet werden. In Block 506 wird daher eine Revozierungsbestätigung an den Anfragensteller gesendet, welcher die in Block 508 mit seinem Endgerät empfängt und sich beispielsweise auf demselben anzeigt.

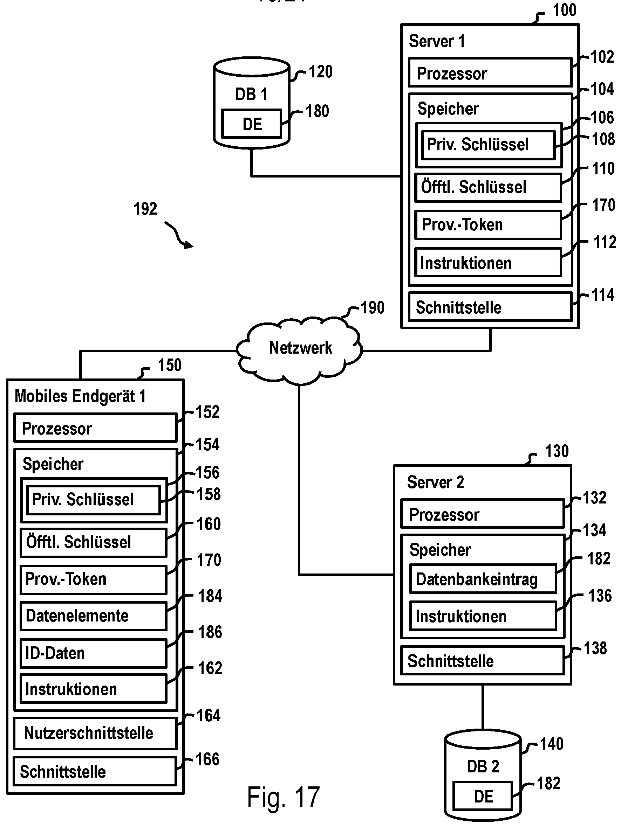

Figur 17 zeigt ein exemplarisches System 192 zum Erzeugen eines digitalen Provisionierungstokens 170 für ein digitales Dokument durch einen Ausstellerdienst. Das System 192 umfasst einen erste Server 100 des Ausstellerdienstes. Der Server 100 umfasst einen Prozessor 102, einen Speicher 104 mit Programminstruktionen 112 und eine Kommunikationsschnittstelle 114 zur Kommunikation über ein Netzwerk 190. Ferner besitzt der Server 100 beispielsweise Zugriff auf eine erste Datenbank 120. Ein Ausführen der Programminstruktionen 112 durch den Prozessor 102 veranlasst den Prozessor 102 dazu, den Server 100 zu steuern zum Ausführen eines Verfahrens zum Erzeugen eines digitalen Provisionierungstokens 170. Beispielsweise handelt es sich um das Verfahren nach Figur 1.

Das System 192 umfasst beispielsweise ferner einen zweiten Server 130, welche für den ersten Server 100 des Ausstellerdienstes einen Zugriff auf eine zweite Datenbank 140 bereitstellt. In der Datenbank 140 ist ein Datenbankeintrag 182 mit Datenelementen für ein digitales Dokument gespeichert. Der zweite Server 130 umfasst einen Prozessor 132, einen Speicher 134 mit Programminstruktionen 136 und eine Kommunikationsschnittstelle 138 zur Kommunikation über das Netzwerk 190. Ein Ausführen der Programminstruktionen 136 durch den Prozessor 132 veranlasst den Prozessor 132 dazu, den Server 130 zu steuern zum Bereitstellen des Datenbankeintrag 182 für den ersten Server 100.

Ferner umfasst das System 192 beispielsweise ein Endgerät 150, insbesondere ein mobiles Endgerät, wie etwa ein Smartphone. Das Endgerät 150 umfasst einen Prozessor 152, einen Speicher 154 mit Programminstruktionen 162 und eine Kommunikationsschnittstelle 166 zur Kommunikation über das Netzwerk 190. Zudem umfasst das Endgerät 150 beispielsweise eine Nutzerschnittstelle 164, über welche ein Nutzer das Endgerät 150 steuern kann, beispielsweise zum Anfragen eines Erstellens eines Provisionierungstokens 170 für ein digitales Dokument. Ein Ausführen der Programminstruktionen 162, welche beispielsweise eine entsprechende App auf dem Endgerät 150 implementieren, durch den Prozessor 152 veranlasst den Prozessor 152 dazu, das Endgerät 150 zum Anfragen des Provisionierungstokens 170 über das Netzwerk 190 bei dem Server 100 des Ausstellerdienstes zu steuern.

Beispielsweise identifiziert sich der Anfragesteller zunächst mit dem Endgerät 150 unter Verwendung der Identifikationsdaten 186 gegenüber dem Server 100. Ferner kann das Endgerät 150 ein oder mehrere Datenelemente 184 des auszustellenden Dokuments an den Server 100 senden. Anhand der empfangenen Datenelemente kann der Server 100 den Datenbankeintrag 182 identifizieren, welchen er über den Server 130 aus der zweiten Datenbank 140 ausliest. Mit diesem Datenbankeintrag 182 kann der Server 100 die Korrektheit der Datenelemente 184 prüfen. Ferner wird ein Pseudonym, beispielsweise von dem ersten Server 100 oder dem zweiten Server 130 bereitgestellt, aus welchem ein Hashwert für den Provisionierungstoken 170 berechnet werden kann. Hierzu wird dem Pseudonym ein Salt-Wert zugeordnet und die entsprechenden Zuordnungen in der ersten Datenbank 120 in einem ersten Datenbankeintrag 180 gespeichert. Beispielsweise dient das Pseudonym als Datenbankzugriffschlüssel zum Identifizieren des in der ersten Datenbank 120 gespeicherten ersten Datenbankeintrags 180. Beispielsweise dient das Pseudonym zudem als Datenbankzugriffschlüssel zum Identifizieren des in der zweiten Datenbank 140 gespeicherten zweiten Datenbankeintrags 182, nachdem das Pseudonym in dem zweiten Datenbankeintrag 182 gespeichert wurde. Der Server 100 signiert den erstellten Provisionierungstokens 170 unter Verwendung des privaten kryptographischen Schlüssels 108, welcher als Signaturschlüssel verwendet wird. Der private kryptographische Schlüssels 108 ist beispielsweise in einem geschützten Speicherbereich 106 des Speichers 104 gespeichert. Die resultierende Signatur kann mit einem öffentlichen kryptographischen Schlüssel 110 des Servers 100 als Signaturprüfschlüssel geprüft werden. Der so erstellte Provisionierungstokens 170 wird dem Endgerät 150 über das Netzwerk 190 zur Verfügung gestellt.

Beispielsweise umfasst auch das Endgerät 150 ein symmetrisches kryptographisches Schlüsselpaar, welches dem Endgerät 150 zugeordnet ist. Dieses asymmetrische kryptographische Schlüsselpaar umfasst einen privaten kryptographischen Schlüssel 158 und einen öffentlichen kryptographischen Schlüssel 160. Der private kryptographische Schlüssel 158 ist beispielsweise in einem geschützten Speicherbereich 156 des Speichers 154 gespeichert.

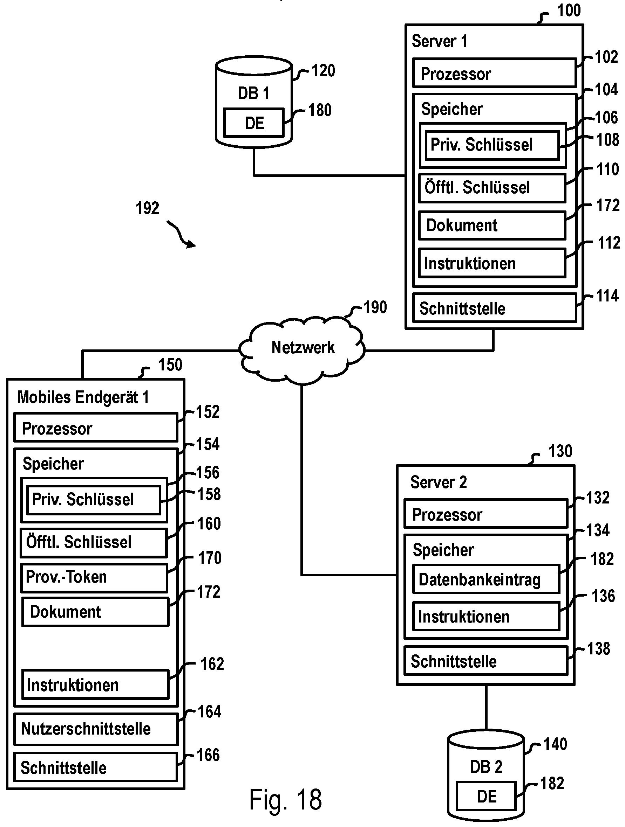

Figur 18 zeigt ein exemplarisches System 192 zum Ausstellen eines digitalen Dokuments unter Verwendung des Provisionierungstokens 170. Das System 192 in Figur 18 entspricht dem System 192 in Figur 17. Das Endgerät 150 verwendet den Provisionierungstoken 170 zum Anfragen eines Ausstellens des digitalen Dokuments 172 durch den Server 100. Der Server 100 validiert den Provisionierungstoken 170. Die Validierung umfasst beispielsweise eine Signaturprüfung unter Verwendung des öffentlichen kryptographischen Schlüssels 110 sowie der von dem Provisionierungstoken 170 umfassten Hashwerten. Hierfür werden beispielsweise die Salt-Werte aus dem ersten Datenbankeintrag 180 und das Pseudonym verwendet. Zum Auslesen der Salt-Werte aus dem ersten Datenbankeintrag 180 wird beispielsweise das Pseudonym als Datenbankzugriffschlüssel verwendet. Auf eine erfolgreiche Validierung hin werden die Salt-Werte aus dem ersten Datenbankeintrag 180 gelöscht, sodass der Provisionierungstoken 170 nicht noch einmal verwendet werden kann.

Ferner wird das Dokument 172 erstellt, welches Datenelemente des Dokuments aus dem zweiten Datenbankeintrag 182 umfasst und beispielsweise mit dem privaten kryptographischen Schlüssel 108 signiert wird. Zum Auslesen der Datenelemente des Dokuments aus dem zweiten Datenbankeintrag 182 wird beispielsweise das Pseudonym als Datenbankzugriffschlüssel verwendet. Für eine kryptographische Bindung des Dokuments 172 an das Endgerät 150 wird zusätzlich der öffentliche kryptographische Schlüssel 160 des Endgeräts 150 zu dem Dokument 172 hinzugefügt. Das resultierende Dokument wird dem Endgerät 150 beispielsweise über das Netzwerk 190 zugesendet.

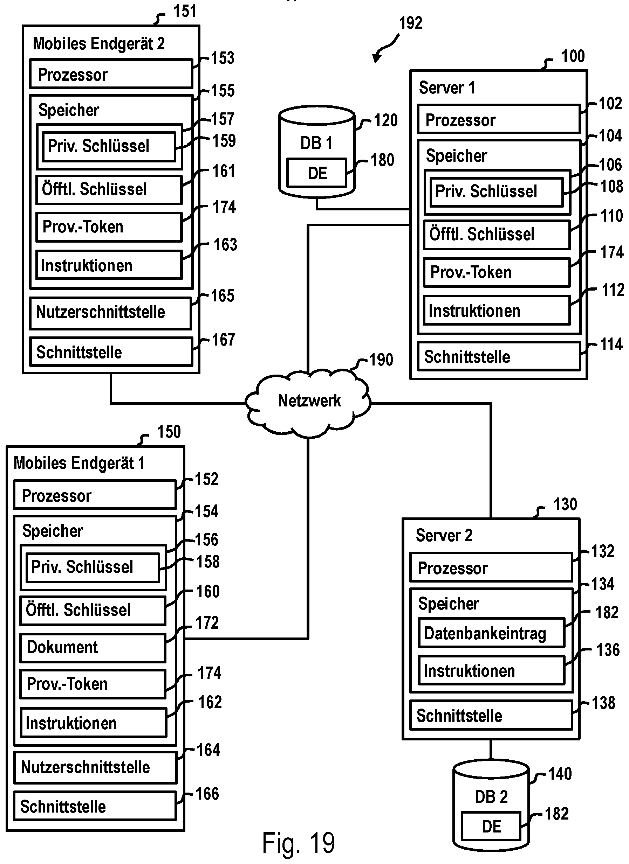

Figur 19 zeigt ein exemplarisches System 192 zum Erzeugen eines digitalen Provisionierungstokens 174 für eine Kopie des digitalen Dokuments 172 durch den Ausstellerdienst. Das System 192 in Figur 19 entspricht dem System 192 in Figur 18. Ein Nutzer verwendet das Endgerät um einen digitalen Provisionierungstokens 174 für eine Kopie eines ausgestellten Dokuments, beispielsweise des Dokuments 172, zu beantragen. Das Endgerät 150 identifiziert den Anfragensteller gegenüber dem Server 100 beispielsweise unter Verwendung des Dokuments 172. Der Server 100 erstellt ein Provisionierungstoken 174 für eine Kopie des digitalen Dokuments 172. Das Erstellen des Provisionierungstokens 174 entspricht beispielsweise dem Erstellen des Provisionierungstokens 170 in Figur 17. Von dem Provisionierungstokens 170 unterscheidet sich der Provisionierungstoken 174 beispielsweise dadurch, dass er einen Indikator umfasst, welcher anzeigt, dass es sich um einen Provisionierungstoken für eine Kopie eines Dokuments handelt. Ferner umfasst der Provisionierungstoken 174 beispielsweise eine Angabe einer Gültigkeitsdauer der auszustellenden Kopie des Dokuments. Diese Gültigkeitsdauer kann beispielsweise der Nutzer des Endgeräts 150 festlegen. Der erstellte Provisionierungstoken 174 wird von dem Server 100 an das Endgerät 150 gesendet. Das Endgerät 150 kann den Provisionierungstoken 174 beispielsweise an ein weiteres Endgerät 151 eines anderen Nutzers weiterleiten. Somit wird der andere Nutzer dazu in die Lage versetzt sich eine Kopie des Dokuments 172 ausstellen zulassen, ohne dass dafür eine weitere Tätigkeit seitens des Nutzers des Endgeräts 150, d.h. des Besitzers des Dokuments 172, nötig wäre.

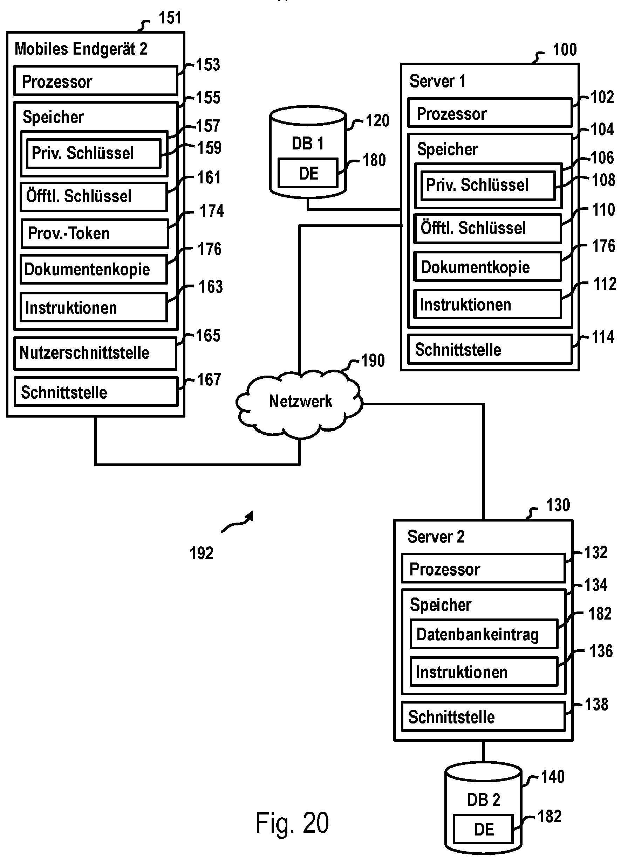

Bei dem Endgerät 151 handelt es sich beispielsweise um ein mobiles Endgerät, wie etwa ein Smartphone. Das Endgerät 151 umfasst einen Prozessor 153, einen Speicher 155 mit Programminstruktionen 163 und eine Kommunikationsschnittstelle 167 zur Kommunikation über das Netzwerk 190. Zudem umfasst das Endgerät 151 beispielsweise eine Nutzerschnittstelle 165, über welche ein Nutzer das Endgerät 151 steuern kann, beispielsweise zum Anfragen eines Ausstellens einer Kopie des Dokuments 172 unter Verwendung des von dem Endgerät 150 empfangenen Provisionierungstokens 174. Ein Ausführen der Programminstruktionen 163, welche beispielsweise eine entsprechende App auf dem Endgerät 151 implementieren, durch den Prozessor 153 veranlasst den Prozessor 153 dazu, das Endgerät 151 zum Anfragen eines Ausstellens einer Kopie des Dokuments 172 über das Netzwerk 190 bei dem Server 100 des Ausstellerdienstes zu steuern. Dies ist in Figur 20 dargestellt.

Figur 20 zeigt ein exemplarisches System 192 zum Ausstellen einer Kopie eines digitalen Dokuments unter Verwendung des Provisionierungstokens 174. Das System 192 in Figur 20 entspricht beispielsweise dem System in Figur 19 ohne das Endgerät 150, welches beim Ausstellen der Kopie des Dokuments beispielsweise keine weitere Rolle mehr spielt.

Das Endgerät 151 verwendet den Provisionierungstoken 174 zum Anfragen eines Ausstellens der digitalen Kopie 176 des Dokuments durch den Server 100. Der Server 100 validiert den Provisionierungstoken 174. Die Validierung umfasst beispielsweise eine Signaturprüfung unter Verwendung des öffentlichen kryptographischen Schlüssels 110 sowie der von dem Provisionierungstoken 174 umfassten Hashwerte. Hierfür werden beispielsweise die Salt-Werte aus dem ersten Datenbankeintrag 180 und das Pseudonym aus dem zweiten Datenbankeintrag 182 verwendet. Zum Auslesen der Salt-Werte aus dem ersten Datenbankeintrag 180 wird beispielsweise das Pseudonym als Datenbankzugriffschlüssel verwendet. Auf eine erfolgreiche Validierung hin werden die Salt-Werte aus dem ersten Datenbankeintrag 180 gelöscht, sodass der Provisionierungstoken 174 nicht noch einmal verwendet werden kann.

Ferner wird die Kopie 176 des Dokuments erstellt, welche Datenelemente des Dokuments aus dem zweiten Datenbankeintrag 182 umfasst und beispielsweise mit dem privaten kryptographischen Schlüssel 108 signiert wird. Zum Auslesen der Datenelemente des Dokuments aus dem zweiten Datenbankeintrag 182 wird beispielsweise das Pseudonym als Datenbankzugriffschlüssel verwendet. Für eine kryptographische Bindung der Dokumentenkopie 176 an das Endgerät 151 wird zusätzlich der öffentliche kryptographische Schlüssel 161 des Endgeräts 151 zu der Dokumentenkopie 176 hinzugefügt. Die resultierende Dokumentenkopie 176 wird dem Endgerät 151 beispielsweise über das Netzwerk 190 zugesendet.

Die Dokumentenkopie 176 umfasst einen Indikator, welcher sie als eine Kopie identifiziert, d.h. welcher anzeigt, dass es sich um eine Kopie eines Dokuments handelt. Ferner umfasst die Dokumentenkopie 176 beispielsweise eine Angabe einer Gültigkeitsdauer der ausgestellten Kopie des Dokuments.

Beispielsweise umfasst auch das Endgerät 151 ein symmetrisches kryptographisches Schlüsselpaar, welches dem Endgerät 151 zugeordnet ist. Dieses asymmetrische kryptographische Schlüsselpaar umfasst einen privaten kryptographischen Schlüssel 159 und einen öffentlichen kryptographischen Schlüssel 161. Der private kryptographische Schlüssel 159 ist beispielsweise in einem geschützten Speicherbereich 157 des Speichers 155 gespeichert.

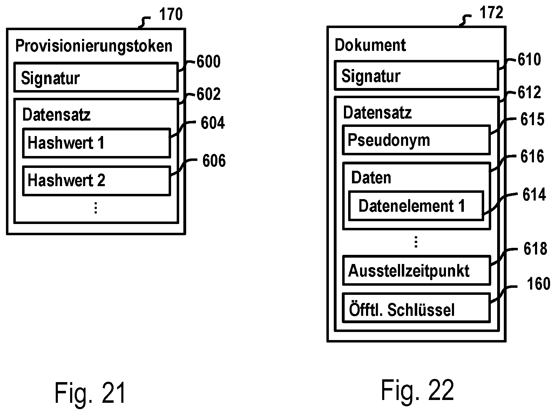

Figur 21 zeigt einen exemplarischen digitalen Provisionierungstoken 170 zum Nachweis einer Berechtigung zum Empfang eines auszustellenden digitalen Dokuments mit einem Endgerät und zur kryptographischen Kopplung an das Endgerät im Zuge der Ausstellung. Ein entsprechender Provisionierungstoken 170 kann beispielsweise mit dem Verfahren nach Figur 1 erstellt werden. Der Provisionierungstoken 170 umfasst einen Datensatz 602 mit einem Hashwert 604, welcher unter Verwendung einer Kombination aus dem Pseudonym und einem dem Pseudonym zugeordneten Salt-Wert erzeugt ist. Datensatz 602 umfasst beispielsweise ferner einen Hashwert 606, welche unter Verwendung einer Kombination aus einem Einmalkennwort und einem dem Einmalkennwort zugeordneten Salt-Wert erzeugt ist. Der Datensatz 602 ist mit einem Signaturschlüssel eines den Provisionierungstoken 170 erzeugenden Ausstellerdienstes signiert, d.h. mit der Signatur 600. Datensatz 602 kann beispielsweise zusätzlich das Pseudonym in Klartext umfassen.

Figur 22 zeigt ein exemplarisches digitales Dokument 172, welches einen Datensatz 612 mit Datenelementen 614, 615 in Klartext umfasst. Ein entsprechendes Dokument 172 kann beispielsweise mit dem Verfahren nach Figur 2 ausgestellt werden. Ferner umfasst der Datensatz 612 beispielsweise das Pseudonym 615. Der Datensatz 612 ist mit einem Signaturschlüssel eines das Dokument ausstellenden Ausstellerdienstes signiert, d.h. mit der Signatur 610. Der Datensatz 610 umfasst ferner einen öffentlichen kryptographischen Schlüssel 160 eines Endgeräts zum kryptographischen Binden des Dokuments 172 an das entsprechende Endgerät. Zusätzlich umfasst der Datensatz 610 beispielsweise noch eine Angabe 618 eines Ausstellzeitpunkts des Dokument 172.

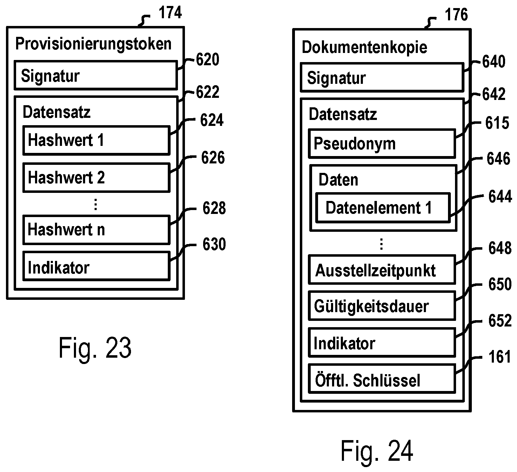

Figur 23 zeigt einen exemplarischen digitalen Provisionierungstoken 174 zum Nachweis einer Berechtigung zum Empfang einer auszustellenden digitalen Kopie eines ausgestellten digitalen Dokuments mit einem Endgerät und zur kryptographischen Kopplung an das Endgerät im Zuge der Ausstellung. Ein entsprechender Provisionierungstoken 174 kann beispielsweise mit dem Verfahren nach Figur 4 erstellt werden. Der Provisionierungstoken 174 umfasst einen Datensatz 622 mit Hashwerten 624, 626, 628 und einem Indikator 630. Der Hashwert 624 ist beispielsweise unter Verwendung einer Kombination aus dem Pseudonym und einem dem Pseudonym zugeordneten Salt-Wert erzeugt. Der Hashwert 626 ist beispielsweise unter Verwendung einer Kombination aus einem Einmalkennwort und einem dem Einmalkennwort zugeordneten Salt-Wert erzeugt. Der Hashwert 628 ist beispielsweise ein Hashwert einer Angabe einer Gültigkeitsdauer der auszustellenden Dokumentenkopie, welcher unter Verwendung eines Salt-Werts erzeugt ist. Der Indikator 630 zeigt an, dass es sich um einen Provisionierungstoken 174 für eine Kopie des ausgestellten Dokuments handelt. Der Datensatz 620 ist mit einem Signaturschlüssel eines den Provisionierungstoken 174 erzeugenden Ausstellerdienstes signiert, d.h. mit der Signatur 620. Datensatz 622 kann beispielsweise zusätzlich das Pseudonym in Klartext umfassen.

Figur 24 zeigt eine exemplarische digitale Kopie 176 eines ausgestellten Dokuments. Ein entsprechende Dokumentenkopie 176 kann beispielsweise mit dem Verfahren nach Figur 5 ausgestellt werden. Die Kopie 176 umfasst einen Datensatz 642 mit Datenelementen 644, 645 und einen Indikator 652 in Klartext. Der Indikator 652 zeigt an, dass es sich um eine Dokumentenkopie handelt. Ferner umfasst der Datensatz 642 beispielsweise das Pseudonym 615. Der Datensatz 642 ist mit einem Signaturschlüssel eines die Kopie 176 des Dokuments ausstellenden Ausstellerdienstes signiert, d.h. mit der Signatur 640. Der Datensatz 642 umfasst ferner einen öffentlichen kryptographischen Schlüssel 161 eines Endgeräts zum kryptographischen Binden der Kopie 174 des Dokuments an das Endgerät. Schließlich umfasst der Datensatz 642 beispielsweise noch eine Angabe 648 eines Ausstellzeitpunkts der Dokumentenkopie 176 und eine Angabe 650 einer Gültigkeitsdauer der Dokumentenkopie 176.

Beispiele können ferner folgende Merkmalskombinationen umfassen:
1. Verfahren zum pseudonymisierten Erzeugen eines digitalen Provisionierungstokens durch einen Ausstellerdienst, wobei der Provisionierungstoken eine Berechtigung zum Empfang des auszustellenden digitalen Dokuments mit einem Endgerät und zur kryptographischen Kopplung an das Endgerät im Zuge der Ausstellung nachweist,
   wobei das Verfahren durch einen ersten Server des Ausstellerdienstes umfasst:
   ∘ Empfangen einer Erstellungsanfrage zum Erstellen des Provisionierungstokens,
   ∘ Identifizieren des Anfragenstellers unter Verwendung empfangener Identifikationsdaten des Anfragenstellers,
   ∘ Erstellen des angefragten Provisionierungstokens in Form eines signierten Datensatzes, wobei das Erstellen umfasst:
      - Empfangen eines dem auszustellenden Dokument zugeordneten ersten Datenelements, welches einen in einer zweiten Datenbank gespeicherten zweiten Datenbankeintrag identifiziert, welcher von dem auszustellenden Dokument zu umfassende Daten umfasst,
      - Prüfen des ersten Datenelements unter Verwendung des in der zweiten Datenbank gespeicherten zweiten Datenbankeintrags,
      - Erzeugen eines ersten Salt-Werts,
      - Bereitstellen eines Pseudonyms, welches als Datenbankzugriffschlüssel zum Identifizieren eines in der ersten Datenbank gespeicherten ersten Datenbankeintrags dient, wobei der erste Salt-Wert dem Pseudonym zugeordnet wird, wobei das Zuordnen ein Speichern des ersten Salt-Werts in dem ersten Datenbankeintrag in der ersten Datenbank umfasst,
      - Berechnen eines ersten Hashwerts unter Verwendung einer ersten Kombination des Pseudonyms und des ersten Salt-Werts,
      - Erstellen eines Datensatzes, welcher den ersten Hashwert umfasst,
      - Signieren des Datensatzes mit einem dem Ausstellerdienst zugeordneten kryptographischen Signaturschlüssel,
      - Bereitstellen des angefragten Provisionierungstokens in Form des signierten Datensatzes,
   ∘ Senden des Provisionierungstokens an den identifizierten Anfragensteller.
2. Verfahren nach Merkmalskombination 1, wobei das Bereitstellen des Pseudonyms ein Erzeugen des Pseudonyms umfasst.
3. Verfahren nach Merkmalskombination 2, wobei das Pseudonym im Zuge des Prüfens des ersten Datenelements erzeugt und zum Speichern als Datenbankzugriffschlüssel zum Identifizieren des in der zweiten Datenbank gespeicherten zweiten Datenbankeintrags an die zweite Datenbank gesendet wird.
4. Verfahren nach Merkmalskombination 1, wobei das Bereitstellen des Pseudonyms ein Empfangen des Pseudonyms im Zuge des Prüfens des ersten Datenelements umfasst, welches als Datenbankzugriffschlüssel zum Identifizieren des in der zweiten Datenbank gespeicherten zweiten Datenbankeintrags dient.
5. Verfahren nach einer der vorangehenden Merkmalskombinationen, wobei das erste Datenelement von dem Anfragensteller empfangen wird und das Prüfen ein Prüfen umfasst, ob der zweite Datenbankeintrag das erste Datenelement umfasst.
6. Verfahren nach einer der Merkmalskombinationen 1 bis 4, wobei das erste Datenelement als Teil des im Zuge des Prüfens aus der zweiten Datenbank ausgelesenen zweiten Datenbankeintrags der zweiten Datenbank empfangen wird und das Prüfen ein Prüfen umfasst, ob das erste Datenelement aus dem zweiten Datenbankeintrag stammt.
7. Verfahren nach einer der vorangehenden Merkmalskombinationen, wobei ein Zugriff auf die zweite Datenbank über einen zweiten Server bereitgestellt wird.
8. Verfahren nach einer der vorangehenden Merkmalskombinationen, wobei ein es sich bei dem Pseudonym um eine Zufallszahl handelt oder wobei es sich bei dem Pseudonym um einen Hashwert des ersten Datenelements handelt.
9. Verfahren nach einer der vorangehenden Merkmalskombinationen, wobei das Erstellen des angefragten Provisionierungstokens ferner umfasst:
   - Erzeugen eines dem identifizierten Anfragensteller zugeordneten Einmalkennworts für den Provisionierungstoken,
   - Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung des Pseudonyms in der ersten Datenbank umfasst,
   - Berechnen eines zweiten Hashwerts unter Verwendung einer zweiten Kombination des Einmalkennworts und des zweiten Salt-Werts,
   - Verwenden des zweiten Hashwerts zum Erstellen des Datensatzes, wobei der Datensatz den zweiten Hashwert umfasst,
   - Senden des Einmalkennworts an den identifizierten Anfragensteller.
10. Verfahren nach einer der vorangehenden Merkmalskombinationen, wobei die Identifikationsdaten des Anfragenstellers ein oder mehrere der folgenden Daten umfassen: einen Nutzernamen, ein Passwort, eine mit einem Signaturschlüssel des Anfragenstellers erstellte Signatur in Kombination mit einem Zertifikat mit einem Signaturprüfschlüssels des Anfragenstellers, ein oder mehrere aus einem ID-Token des Anfragenstellers ausgelesene Attribute des Anfragenstellers, welche mit einem Signaturschlüssel eines ID-Provider-Dienst signiert sind, Attribute des Anfragenstellers, welche von einem Computersystem einer zum Identifizieren des Nutzers autorisierten Entität empfangen werden.
11. Verfahren nach einer der vorangehenden Merkmalskombinationen, wobei das Signieren des Datensatzes nur unter Voraussetzung eines erfolgreichen Identifizierens des Anfragenstellers erfolgt, sodass durch die Signatur ein erfolgreiches Identifizieren bestätigt wird.
12. Verfahren nach einer der vorangehenden Merkmalskombinationen, wobei es sich bei dem auszustellenden Dokument um ein Fahrzeugdokument handelt, beispielsweise um eine elektronische Zulassungsbescheinigung Teil I.
13. Verfahren nach Merkmalskombination 12, wobei es sich bei dem ersten Datenelement um eine Fahrzeug-ID handelt, beispielsweise ein Fahrzeugkennzeichen oder eine Fahrgestellnummer.
14. Server eines Ausstellerdienstes zum pseudonymisierten Erzeugen eines digitalen Provisionierungstokens, wobei der Server einen Prozessor, einen Speicher mit Programminstruktionen und eine Kommunikationsschnittstelle zur Kommunikation über ein Netzwerk umfasst, wobei der Provisionierungstoken eine Berechtigung zum Empfang des auszustellenden digitalen Dokuments mit einem Endgerät und zur kryptographischen Kopplung an das Endgerät im Zuge der Ausstellung nachweist,
   wobei ein Ausführen der Programminstruktionen durch den Prozessor den Prozessor dazu veranlasst, den Server zu steuern zum:
   ∘ Empfangen einer Erstellungsanfrage zum Erstellen des Provisionierungstokens,
   ∘ Identifizieren des Anfragenstellers unter Verwendung empfangener Identifikationsdaten des Anfragenstellers,
   ∘ Erstellen des angefragten Provisionierungstokens in Form eines signierten Datensatzes, wobei das Erstellen umfasst:
      - Empfangen eines dem auszustellenden Dokument zugeordneten ersten Datenelements, welches einen in einer zweiten Datenbank gespeicherten zweiten Datenbankeintrag identifiziert, welcher von dem auszustellenden Dokument zu umfassende Daten umfasst,
      - Prüfen des ersten Datenelements unter Verwendung des in der zweiten Datenbank gespeicherten zweiten Datenbankeintrags,
      - Erzeugen eines ersten Salt-Werts,
      - Bereitstellen eines Pseudonyms, welches als Datenbankzugriffschlüssel zum Identifizieren eines in der ersten Datenbank gespeicherten ersten Datenbankeintrags dient, wobei der erste Salt-Wert dem Pseudonym zugeordnet wird, wobei das Zuordnen ein Speichern des ersten Salt-Werts in dem ersten Datenbankeintrag in der ersten Datenbank umfasst,
      - Berechnen eines ersten Hashwerts unter Verwendung einer ersten Kombination des Pseudonyms und des ersten Salt-Werts,
      - Erstellen eines Datensatzes, welcher den ersten Hashwert umfasst,
      - Signieren des Datensatzes mit einem dem Ausstellerdienst zugeordneten kryptographischen Signaturschlüssel,
      - Bereitstellen des angefragten Provisionierungstokens in Form des signierten Datensatzes,
   ∘ Senden des Provisionierungstokens an den identifizierten Anfragensteller.
15. System umfassend einen Server eines Ausstellerdienstes nach Merkmalskombination 14 sowie einen weiteren Server, welcher einen Zugriff auf die zweite Datenbank bereitgestellt, wobei der weitere Server einen weiteren Prozessor, einen weiteren Speicher mit weiteren Programminstruktionen und eine weitere Kommunikationsschnittstelle zur Kommunikation über das Netzwerk umfasst,
   wobei in der zweiten Datenbank der zweite Datenbankeintrag gespeichert ist, welcher von dem auszustellenden Dokument zu umfassende Daten umfasst, wobei das Pseudonym ferner als Datenbankzugriffschlüssel zum Identifizieren des in der zweiten Datenbank gespeicherten zweiten Datenbankeintrags dient,
   wobei ein Ausführen der weiteren Programminstruktionen durch den weiteren Prozessor den weiteren Prozessor dazu veranlasst, den weiteren Server zu steuern zum:
      Senden des zweiten Datenbankeintrags an den Server in Antwort auf ein Empfangen einer Abfrage des zweiten Datenbankeintrags durch den Server.
16. System nach Merkmalskombination 15, wobei ein Ausführen der weiteren Programminstruktionen durch den weiteren Prozessor den weiteren Prozessor ferner dazu veranlasst, den weiteren Server zu steuern zum:
   Speichern des Pseudonyms in dem zweiten Datenbankeintrag als Datenbankzugriffschlüssel zum Identifizieren des in der zweiten Datenbank gespeicherten zweiten Datenbankeintrags in Antwort auf ein Empfangen einer Prüfanfrage zum Prüfen des ersten Datenelements mit dem von dem Server erzeugten Pseudonym.
17. System nach Merkmalskombination 15, wobei ein Ausführen der weiteren Programminstruktionen durch den weiteren Prozessor den weiteren Prozessor ferner dazu veranlasst, den weiteren Server zu steuern zum:
   Erzeugen des Pseudonyms als Datenbankzugriffschlüssel zum Identifizieren des in der zweiten Datenbank gespeicherten zweiten Datenbankeintrags auf ein Empfangen einer Prüfanfrage zum Prüfen des ersten Datenelements von dem ersten Server hin,
   Speichern des Pseudonyms in dem zweiten Datenbankeintrag,
   Senden des Pseudonyms an den ersten Server als Bestandteil einer Antwort auf die Prüfanfrage.
18. Digitaler Provisionierungstoken zum Nachweis einer Berechtigung zum Empfang eines auszustellenden digitalen Dokuments mit einem Endgerät und zur kryptographischen Kopplung an das Endgerät im Zuge der Ausstellung, wobei der Provisionierungstoken einen Datensatz mit einem ersten Hashwert umfasst, welcher unter Verwendung einer ersten Kombination eines Pseudonyms und eines dem ersten Pseudonym zugeordneten ersten Salt-Werts erzeugt ist, wobei der Datensatz mit einem Signaturschlüssel eines den Provisionierungstoken erzeugenden Ausstellerdienstes signiert ist.
19. Digitaler Provisionierungstoken nach Merkmalskombination 18, wobei der signierte Datensatz ferner einen zweiten Hashwert umfasst, welcher unter Verwendung einer zweiten Kombination eines dem identifizierten Anfragensteller zugeordneten Einmalkennworts und eines dem Einmalkennwort zugeordneten zweiten Salt-Werts erzeugt ist.

### LISTE DER BEZUGSZEICHEN

- 100: erster Server
- 102: Prozessor
- 104: Speicher
- 106: geschützter Speicherbereich
- 108: privater Schlüssel
- 110: öffentlicher Schlüssel
- 112: Programminstruktionen
- 114: Kommunikationsschnittstelle
- 120: erste Datenbank
- 130: zweiter Server
- 132: Prozessor
- 134: Speicher
- 136: Programminstruktionen
- 138: Kommunikationsschnittstelle
- 140: zweite Datenbank
- 150: mobiles Endgerät
- 151: mobiles Endgerät
- 152: Prozessor
- 153: Prozessor
- 154: Speicher
- 155: Speicher
- 156: geschützter Speicherbereich
- 157: geschützter Speicherbereich
- 158: privater Schlüssel
- 159: privater Schlüssel
- 160: öffentlicher Schlüssel
- 161: öffentlicher Schlüssel
- 162: Programminstruktionen
- 163: Programminstruktionen
- 164: Nutzerschnittstelle
- 165: Nutzerschnittstelle
- 166: Kommunikationsschnittstelle
- 167: Kommunikationsschnittstelle
- 170: Provisionierungstoken
- 172: Dokument
- 174: Provisionierungstoken
- 176: Dokumentenkopie
- 180: erster Datenbankeintrag
- 182: zweiter Datenbankeintrag
- 183: Zuordnung Salt-Wert
- 184: Datenelemente
- 186: Identifikationsdaten
- 190: Netzwerk
- 192: System
- 600: Signatur
- 602: Datensatz
- 604: Hashwert
- 606: Hashwert
- 610: Signatur
- 612: Datensatz
- 614: Datenelement
- 615: Pseudonym
- 616: Daten
- 618: Angabe Ausstellzeitpunkt
- 620: Signatur
- 622: Datensatz
- 624: Hashwert
- 626: Hashwert
- 628: Hashwert
- 630: Indikator
- 640: Signatur
- 642: Datensatz
- 644: Datenelement
- 646: Daten
- 648: Angabe Ausstellzeitpunkt
- 650: Angabe Gültigkeitsdauer
- 652: Indikator

## Patentansprüche

1. Verfahren zum pseudonymisierten Erzeugen eines digitalen Provisionierungstokens (170) durch einen Ausstellerdienst, wobei der Provisionierungstoken (170) eine Berechtigung zum Empfang des auszustellenden digitalen Dokuments (172) mit einem Endgerät (150) und zur kryptographischen Kopplung an das Endgerät (150) im Zuge der Ausstellung nachweist,
wobei das Verfahren durch einen ersten Server (100) des Ausstellerdienstes umfasst:
∘ Empfangen einer Erstellungsanfrage zum Erstellen des Provisionierungstokens (170),
∘ Identifizieren des Anfragenstellers unter Verwendung empfangener Identifikationsdaten (186) des Anfragenstellers,
∘ Erstellen des angefragten Provisionierungstokens (170) in Form eines signierten Datensatzes (602), wobei das Erstellen umfasst:
• Empfangen eines dem auszustellenden Dokument (172) zugeordneten ersten Datenelements (614), welches einen in einer zweiten Datenbank (140) gespeicherten zweiten Datenbankeintrag (182) identifiziert, welcher von dem auszustellenden Dokument (172) zu umfassende Daten (616) umfasst,
• Prüfen des ersten Datenelements (614) unter Verwendung des in der zweiten Datenbank (140) gespeicherten zweiten Datenbankeintrags (182),
• Erzeugen eines ersten Salt-Werts,
• Bereitstellen eines Pseudonyms (615), welches als Datenbankzugriffschlüssel zum Identifizieren eines in der ersten Datenbank (120) gespeicherten ersten Datenbankeintrags (180) dient, wobei der erste Salt-Wert dem Pseudonym (615) zugeordnet wird, wobei das Zuordnen ein Speichern des ersten Salt-Werts in dem ersten Datenbankeintrag (180) in der ersten Datenbank (120) umfasst,
• Berechnen eines ersten Hashwerts (604) unter Verwendung einer ersten Kombination des Pseudonyms (615) und des ersten Salt-Werts,
• Erstellen eines Datensatzes (602), welcher den ersten Hashwert (604) umfasst,
• Signieren des Datensatzes (602) mit einem dem Ausstellerdienst zugeordneten kryptographischen Signaturschlüssel (108),
• Bereitstellen des angefragten Provisionierungstokens (170) in Form des signierten Datensatzes (602),
∘ Senden des Provisionierungstokens (170) an den identifizierten Anfragensteller.

2. Verfahren nach Anspruch 1, wobei das Bereitstellen des Pseudonyms (615) ein Erzeugen des Pseudonyms (615) umfasst.

3. Verfahren nach Anspruch 2, wobei das Pseudonym (615) im Zuge des Prüfens des ersten Datenelements (614) erzeugt und zum Speichern als Datenbankzugriffschlüssel zum Identifizieren des in der zweiten Datenbank (140) gespeicherten zweiten Datenbankeintrags (182) an die zweite Datenbank (140) gesendet wird.

4. Verfahren nach Anspruch 1, wobei das Bereitstellen des Pseudonyms (615) ein Empfangen des Pseudonyms (615) im Zuge des Prüfens des ersten Datenelements (614) umfasst, welches als Datenbankzugriffschlüssel zum Identifizieren des in der zweiten Datenbank (140) gespeicherten zweiten Datenbankeintrags (182) dient.

5. Verfahren nach einem der vorangehenden Ansprüche, wobei das erste Datenelement (614) von dem Anfragensteller empfangen wird und das Prüfen ein Prüfen umfasst, ob der zweite Datenbankeintrag (182) das erste Datenelement (614) umfasst, oder
wobei das erste Datenelement (614) als Teil des im Zuge des Prüfens aus der zweiten Datenbank (140) ausgelesenen zweiten Datenbankeintrags (182) der zweiten Datenbank (140) empfangen wird und das Prüfen ein Prüfen umfasst, ob das erste Datenelement (614) aus dem zweiten Datenbankeintrag (182) stammt.

6. Verfahren nach einem der vorangehenden Ansprüche, wobei ein Zugriff auf die zweite Datenbank (140) über einen zweiten Server (130) bereitgestellt wird und/oder
wobei ein es sich bei dem Pseudonym (615) um eine Zufallszahl handelt oder wobei es sich bei dem Pseudonym (615) um einen Hashwert des ersten Datenelements (614) handelt.

7. Verfahren nach einem der vorangehenden Ansprüche, wobei das Erstellen des angefragten Provisionierungstokens (170) ferner umfasst:
• Erzeugen eines dem identifizierten Anfragensteller zugeordneten Einmalkennworts für den Provisionierungstoken (170),
• Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung des Pseudonyms (615) in der ersten Datenbank (120) umfasst,
• Berechnen eines zweiten Hashwerts unter Verwendung einer zweiten Kombination des Einmalkennworts und des zweiten Salt-Werts,
• Verwenden des zweiten Hashwerts zum Erstellen des Datensatzes (602), wobei der Datensatz (602) den zweiten Hashwert umfasst,
• Senden des Einmalkennworts an den identifizierten Anfragensteller.

8. Verfahren nach einem der vorangehenden Ansprüche, wobei die Identifikationsdaten (186) des Anfragenstellers ein oder mehrere der folgenden Daten umfassen: einen Nutzernamen, ein Passwort, eine mit einem Signaturschlüssel des Anfragenstellers erstellte Signatur in Kombination mit einem Zertifikat mit einem Signaturprüfschlüssels des Anfragenstellers, ein oder mehrere aus einem ID-Token des Anfragenstellers ausgelesene Attribute des Anfragenstellers, welche mit einem Signaturschlüssel eines ID-Provider-Dienst signiert sind, Attribute des Anfragenstellers, welche von einem Computersystem einer zum Identifizieren des Nutzers autorisierten Entität empfangen werden, und/oder
wobei das Signieren des Datensatzes (602) nur unter Voraussetzung eines erfolgreichen Identifizierens des Anfragenstellers erfolgt, sodass durch die Signatur ein erfolgreiches Identifizieren bestätigt wird.

9. Verfahren nach einem der vorangehenden Ansprüche, wobei es sich bei dem auszustellenden Dokument (172) um ein Fahrzeugdokument handelt, beispielsweise um eine elektronische Zulassungsbescheinigung Teil I.

10. Verfahren nach Anspruch 9, wobei es sich bei dem ersten Datenelement (614) um eine Fahrzeug-ID handelt, beispielsweise ein Fahrzeugkennzeichen oder eine Fahrgestellnummer.

11. Server (100) eines Ausstellerdienstes zum pseudonymisierten Erzeugen eines digitalen Provisionierungstokens (170), wobei der Server (100) einen Prozessor (102), einen Speicher (104) mit Programminstruktionen (112) und eine Kommunikationsschnittstelle (114) zur Kommunikation über ein Netzwerk (190) umfasst, wobei der Provisionierungstoken (170) eine Berechtigung zum Empfang des auszustellenden digitalen Dokuments (172) mit einem Endgerät (150) und zur kryptographischen Kopplung an das Endgerät (150) im Zuge der Ausstellung nachweist,
wobei ein Ausführen der Programminstruktionen (112) durch den Prozessor (102) den Prozessor (102) dazu veranlasst, den Server (100) zu steuern zum:
∘ Empfangen einer Erstellungsanfrage zum Erstellen des Provisionierungstokens (170),
∘ Identifizieren des Anfragenstellers unter Verwendung empfangener Identifikationsdaten (186) des Anfragenstellers,
∘ Erstellen des angefragten Provisionierungstokens (170) in Form eines signierten Datensatzes (602), wobei das Erstellen umfasst:
• Empfangen eines dem auszustellenden Dokument (172) zugeordneten ersten Datenelements (614), welches einen in einer zweiten Datenbank (140) gespeicherten zweiten Datenbankeintrag (182) identifiziert, welcher von dem auszustellenden Dokument (172) zu umfassende Daten (616) umfasst,
• Prüfen des ersten Datenelements (614) unter Verwendung des in der zweiten Datenbank (140) gespeicherten zweiten Datenbankeintrags (182),
• Erzeugen eines ersten Salt-Werts,
• Bereitstellen eines Pseudonyms (615), welches als Datenbankzugriffschlüssel zum Identifizieren eines in der ersten Datenbank (120) gespeicherten ersten Datenbankeintrags (180) dient, wobei der erste Salt-Wert dem Pseudonym (615) zugeordnet wird, wobei das Zuordnen ein Speichern des ersten Salt-Werts in dem ersten Datenbankeintrag (180) in der ersten Datenbank (120) umfasst,
• Berechnen eines ersten Hashwerts (604) unter Verwendung einer ersten Kombination des Pseudonyms (615) und des ersten Salt-Werts,
• Erstellen eines Datensatzes (602), welcher den ersten Hashwert (604) umfasst,
• Signieren des Datensatzes (602) mit einem dem Ausstellerdienst zugeordneten kryptographischen Signaturschlüssel (108),
• Bereitstellen des angefragten Provisionierungstokens (170) in Form des signierten Datensatzes (602),
∘ Senden des Provisionierungstokens (170) an den identifizierten Anfragensteller.

12. System (192) umfassend einen Server (100) eines Ausstellerdienstes nach Anspruch 11 sowie einen weiteren Server (130), welcher einen Zugriff auf die zweite Datenbank (140) bereitgestellt, wobei der weitere Server (130) einen weiteren Prozessor (132), einen weiteren Speicher (134) mit weiteren Programminstruktionen (136) und eine weitere Kommunikationsschnittstelle (138) zur Kommunikation über das Netzwerk (190) umfasst,
wobei in der zweiten Datenbank (140) der zweite Datenbankeintrag (182) gespeichert ist, welcher von dem auszustellenden Dokument (172) zu umfassende Daten umfasst, wobei das Pseudonym (615) ferner als Datenbankzugriffschlüssel zum Identifizieren des in der zweiten Datenbank (140) gespeicherten zweiten Datenbankeintrags (182) dient,
wobei ein Ausführen der weiteren Programminstruktionen (136) durch den weiteren Prozessor (132) den weiteren Prozessor (132) dazu veranlasst, den weiteren Server (130) zu steuern zum:
Senden des zweiten Datenbankeintrags (182) an den Server (100) in Antwort auf ein Empfangen einer Abfrage des zweiten Datenbankeintrags (182) durch den Server (100).

13. System nach Anspruch 12, wobei ein Ausführen der weiteren Programminstruktionen (136) durch den weiteren Prozessor (132) den weiteren Prozessor (132) ferner dazu veranlasst, den weiteren Server (130) zu steuern zum:
Speichern des Pseudonyms (615) in dem zweiten Datenbankeintrag (182) als Datenbankzugriffschlüssel zum Identifizieren des in der zweiten Datenbank (140) gespeicherten zweiten Datenbankeintrags (182) in Antwort auf ein Empfangen einer Prüfanfrage zum Prüfen des ersten Datenelements (614) mit dem von dem Server (100) erzeugten Pseudonym (615), oder
wobei ein Ausführen der weiteren Programminstruktionen (136) durch den weiteren Prozessor (132) den weiteren Prozessor (132) ferner dazu veranlasst, den weiteren Server (130) zu steuern zum:
Erzeugen des Pseudonyms (615) als Datenbankzugriffschlüssel zum Identifizieren des in der zweiten Datenbank (140) gespeicherten zweiten Datenbankeintrags (182) auf ein Empfangen einer Prüfanfrage zum Prüfen des ersten Datenelements (614) von dem ersten Server (100) hin,
Speichern des Pseudonyms (615) in dem zweiten Datenbankeintrag (182),
Senden des Pseudonyms (615) an den ersten Server (100) als Bestandteil einer Antwort auf die Prüfanfrage.

14. Digitaler Provisionierungstoken (170) zum Nachweis einer Berechtigung zum Empfang eines auszustellenden digitalen Dokuments (172) mit einem Endgerät (150) und zur kryptographischen Kopplung an das Endgerät (150) im Zuge der Ausstellung, wobei der Provisionierungstoken (170) einen Datensatz (602) mit einem ersten Hashwert (604) umfasst, welcher unter Verwendung einer ersten Kombination eines Pseudonyms (615) und eines dem ersten Pseudonym (615) zugeordneten ersten Salt-Werts erzeugt ist, wobei der Datensatz (602) mit einem Signaturschlüssel (108) eines den Provisionierungstoken (170) erzeugenden Ausstellerdienstes signiert ist.

15. Digitaler Provisionierungstoken (170) nach Anspruch 14, wobei der signierte Datensatz (602) ferner einen zweiten Hashwert umfasst, welcher unter Verwendung einer zweiten Kombination eines dem identifizierten Anfragensteller zugeordneten Einmalkennworts und eines dem Einmalkennwort zugeordneten zweiten Salt-Werts erzeugt ist.
